# EUROPEAN PATENT APPLICATION

(11) **EP 4 773 585 A1**
(43) Date of publication of application: **08.07.2026**
(21) Application number: 24916707.3
(22) Date of filing: 20.12.2024
(51) Int. Cl.: H04M 1/72448

(54) **DISPLAY CONTROL METHOD, ELECTRONIC DEVICE, AND COMPUTER READABLE STORAGE MEDIUM**

(30) Priority: 10.01.2024 CN 202410045615
(71) Applicant: Honor Device Co., Ltd., Shenzhen, Guangdong 518040 (CN)
(72) Inventor: ZHANG, Chi, Shenzhen, Guangdong 518040 (CN); SHI, Ke, Shenzhen, Guangdong 518040 (CN)
(74) Representative: Isarpatent
(86) International application number: PCT/CN2024/141160
(87) International publication number: WO 2025/148660

(57) **Abstract**

This application provides a display control method, an electronic device, and a computer-readable storage medium, and relates to the field of terminal technologies. To resolve the technical problem that an operation of viewing related data of an application service is complex, the electronic device invokes a plurality of notification entrances to display the application service, such as a launcher, a negative screen, a quick application center, a notification center, a control center, a status bar, a lock screen interface, and an always on display AOD interface. The electronic device determines, for the application service, target notification entrances for displaying service information, and displays, in response to different operations, service information of a first application service when corresponding entrance interfaces are displayed at different target notification entrances. The electronic device displays service information of a running application service on entrance interfaces of a plurality of notification entrances, to form prompt effect reaching the user on a plurality of interfaces. The electronic device simplifies an operation of viewing order information by a user, so that user experience is improved.

## Description

This application claims priority to Chinese Patent Application No. 202410045615.X, filed with the China National Intellectual Property Administration on January 10, 2024 and entitled "DISPLAY CONTROL METHOD, ELECTRONIC DEVICE, AND COMPUTER-READABLE STORAGE MEDIUM", which is incorporated herein by reference in its entirety.

### TECHNICAL FIELD

Embodiments of this application relate to the field of terminal technologies, and in particular, to a display control method, an electronic device, and a computer-readable storage medium.

### BACKGROUND

Functions of smartphones are becoming increasingly powerful, providing users with services such as taxi-hailing, ordering food, booking tickets, and flights, and watching films. Different applications are installed on a mobile phone, and different applications provide different services. After a taxi-hailing order is placed through a taxi-hailing application of the mobile phone, the progress of the taxi-hailing order is displayed on an interface of the taxi-hailing application. Similarly, when a food delivery order is placed through a food delivery application of the mobile phone, the progress of the food delivery order is displayed on a display interface of the food delivery application.

There are a variety of applications that can provide services on the mobile phone, the various applications provide a variety of services, and different services may have different service states. A service state of each service is displayed only on a corresponding application interface, and display reach effect is poor.

### SUMMARY

Embodiments of this application provide a display control method, an electronic device, and a computer-readable storage medium, to resolve the technical problem that progress display reach effect of an application service provided by an existing mobile phone is poor.

To achieve the foregoing objective, embodiments of this application use the following technical solutions.

According to a first aspect, a display control method is provided, and is applied to an electronic device. The electronic device includes a plurality of notification entrances, for example, a launcher, a negative screen, a quick application center, a notification center, a control center, a status bar, a lock screen interface, and an AOD interface. A first application is installed on the electronic device. On a first interface of the first application, the electronic device may receive a first operation of a user, and generates a first application service. The electronic device may further display indication information indicating that the first application has been enabled.

The electronic device generates the first application service, and determines, from all provided notification entrances, a target notification entrance corresponding to the first application service. The electronic device determines at least two different target notification entrances for the first application service, including a first notification entrance and a second notification entrance. For example, the first notification entrance may be the negative screen and the second notification entrance may be the lock screen interface.

The electronic device may receive an operation of the user, and switch to a different notification entrance. In a running process of the first application service, if the notification entrance to which the electronic device switches is the target notification entrance corresponding to the first application service, service information of the first application service is displayed on an entrance interface of the target notification entrance. The service information displayed by the electronic device may include corresponding service data and a corresponding service state.

In one case, the electronic device receives a second operation of the user, and switches to the first notification entrance. The electronic device displays a second interface of the first notification entrance, and displays the service information of the first application service on the second interface.

In another case, the electronic device receives a third operation of the user, and switches to the second channel entrance. The electronic device displays a third interface of the second notification entrance, and displays the service information of the second application service on the third interface.

In the running process of the first application service, the electronic device has a capability of displaying the service information of the first application service in different target notification entrances in sequence, but this does not limit that the electronic device displays the service information of the first application service in different target notification entrances.

For example, in the running process of the first application service, the electronic device may display only the second interface corresponding to the first notification entrance. Alternatively, the electronic device may display only the third interface corresponding to the second notification entrance. Alternatively, the electronic device may first display the second interface corresponding to the first notification entrance, and then display the third interface corresponding to the second notification entrance. Alternatively, the electronic device may first display the third interface corresponding to the second notification entrance, and then display the second interface corresponding to the first notification entrance.

In the display control method provided in this implementation, the electronic device displays service information of a running application service on entrance interfaces of a plurality of notification entrances, to form prompt effect reaching the user on a plurality of interfaces. The electronic device simplifies an operation of viewing order information by the user, so that user experience is improved.

In a specific implementation of the first aspect, the electronic device matches a corresponding target notification entrance based on an importance-urgency level of the first application service. Different application services have different importance-urgency levels, and also correspond to different display reach requirements. The electronic device may display service information of different application services through different notification entrances.

After generating the first application service, the electronic device may obtain the importance-urgency level of the first application service. The importance-urgency level may indicate importance and/or urgency of the first application service. The electronic device may obtain the importance-urgency level of the first application service based on an intent prediction model on an intelligence side, or may calculate the importance-urgency level of the first application service by using another related algorithm.

The electronic device determines the importance-urgency level of the first application service. The target notification entrance corresponding to the first application service is determined from all notification entrances that can be provided by the electronic device, and then the service information of the first application service is displayed through these selected target notification entrances.

An update on the service information and an update on the service state occur on the first application service generated by the electronic device. In the running process of the first application service, the electronic device needs to update the display of the service information based on the update on the service information and the update on the service state.

In a specific implementation, the electronic device may adjust a corresponding display control solution based on the update on the service state. The first application service has a plurality of service states, and different service states may correspond to different importance-urgency levels. In the running process of the first application service, if the service state changes, the importance-urgency level of the first application service also changes. In different time periods in which the first application service runs, the electronic device may determine, based on a current service state, a current importance-urgency level corresponding to the current service state, and then determine, based on the importance-urgency level of the current service state, the current corresponding target notification entrance.

In the running process of the first application service, service states of the first application service that are obtained by the electronic device may sequentially include a first service state and a second service state. The first service state is a service state in a first time period, the second service state is a service state in a second time period, and the second time period is a time period after the first time period.

In the first time period, the electronic device determines, based on the first service state in which the first application service is currently, the first importance-urgency level corresponding to the first service state, and determines, based on the first importance-urgency level, the target notification entrance currently corresponding to the first application service.

In the second time period, in response to the update on the service state of the first application service, the electronic determines, based on the second service state obtained after the first application service is updated, the second importance-urgency level corresponding to the second service state, and updates the target notification entrance corresponding to the first application service based on the second importance-urgency level corresponding to the second service state. The target notification entrance corresponding to the first service state may be the same as or different from the target notification entrance corresponding to the second service state.

In the running process of the first application service, the electronic device may redetermine, when the service state of the first application service is updated each time, the current importance-urgency level and the target notification entrance corresponding to the importance-urgency level, and display, on the entrance interface of the current corresponding target notification entrance, the current service information of the first application service. In this way, the electronic device can switch a matching display control solution based on display reach requirements of different service states, to further optimize the display reach effect, thereby improving user experience.

In another specific implementation, the electronic device may adjust a corresponding display control solution based on the update on the service information. The electronic device may obtain an action of updating the service information of the first application service. The action may be actively notified by the first application that generates the first application service, or may be obtained by the electronic device through active query based on a preset update frequency.

In response to the update on the service information of the first application service, the electronic device displays, on the entrance interface of the target notification entrance corresponding to the current service state, service information obtained after the first application service is updated. For example, the electronic device may display the updated service information when displaying the second interface of the first notification entrance. For another example, the electronic device may alternatively display the updated service information when displaying the third interface of the second notification entrance.

In this way, the electronic device displays the latest service information on the entrance interface of the target notification entrance, to help the user master the latest service state of an order in time.

In a specific implementation of the first aspect, the electronic device may further display the service information of the first application service on the entrance interface of the target notification entrance in different display forms. A display form supported by the entrance interface of the notification entrance may include at least one of a card, a capsule, and a banner. The electronic device may match a target display form for the first application service, and after determining each target notification entrance, display the service information of the first application service on the entrance interface of each target notification entrance in the target display form.

There are many target notification entrances determined by the electronic device for the first application service, and different display forms may be matched for different notification entrances. For example, the electronic device determines a first display form for the first notification entrance and determines a second display form for the second notification entrance.

When displaying the second interface of the first notification entrance, the electronic device displays the service information of the first application service in the first display form. When displaying the third interface of the second notification entrance, the electronic device displays the service information of the first application service in the second display form.

The electronic device adds a plurality of display forms such as the card, the capsule, and the banner, to enrich display effect of the service information of the first application service, thereby improving user experience.

In a specific implementation of the first aspect, the electronic device adds a solution of determining the target display form. In this implementation, the electronic device determines, based on the first application that generates the first application service, the target display form corresponding to the first application service, and then displays the service information of the first application service in the target display form.

Each first application installed on the electronic device may determine a display form in which the service information of the first application service generated by the first application is displayed on the entrance interface of each notification entrance. When installed on the electronic device, the application can simultaneously register one or more supported display forms. In this way, the application may also subsequently generate a view file of the corresponding display form based on the service information of the application service, provide the view file to the notification entrance, and display the service information in the display form.

When generating the first application service, the electronic device queries a display form pre-registered by the first application that generates the first application service, and uses the found display form as the target display form corresponding to the first application service.

In a specific implementation of the first aspect, the solution of determining the target display form by the electronic device is further limited. In this embodiment, the electronic device determines, comprehensively with reference to the application and the notification entrance, the target display form associated with the first application service.

Each notification entrance provided by the electronic device may also register the supported display form in advance. For example, during each startup of the electronic device, the notification entrance initiates a registration application, and applies for a permission of obtaining the service information and displaying the service information on the entrance interface. Each notification entrance may correspond to one or more display forms.

Specifically, the electronic device obtains the display form corresponding to the first application, and the display form corresponding to the target notification entrance. The electronic device finds an intersection between the display form corresponding to the first application and the display form corresponding to the target notification entrance, obtains a same display form included in the intersection, and uses the display form as the target display form. When the target display form is determined by the electronic device in this solution, the view file that corresponds to the target display form and that is obtained through processing by the first application can be obtained, and the target notification entrance is enabled to have a capability of displaying the service information in the target display form.

In another specific implementation of the first aspect, the electronic device may alternatively determine the target display form corresponding to the first application service based on the display form corresponding to the target notification entrance.

For example, the electronic device determines the importance-urgency level of the first application service, and determines the corresponding target notification entrance based on the importance-urgency level. The electronic device determines the display form pre-registered by the target notification entrance as the target display form corresponding to the first application service.

In a specific implementation of the first aspect, the electronic device further adds a previous registration solution of the notification entrance. Considering that different device models support different notification entrances, or the notification entrances have different display functions, a registration operation of the notification entrance is added. The notification entrance initiates a registration application, and applies for a permission of obtaining the service information and displaying the service information. The electronic device may invoke the notification entrance that has performed previous registration to display the service information of the application service.

In a specific example, the electronic device may include a service interaction display framework, where the service interaction display framework may be used to execute a main procedure of the display control method. For example, the service interaction display framework may receive the registration application of the notification entrance, and after successfully registering with the service interaction display framework, the target notification entrance allows the service interaction display framework to send the service information of the first application service to the target notification entrance.

During each startup of the electronic device, the electronic device may trigger a registration operation of the notification entrance. The electronic device may also add a user manual operation to trigger a registration operation of the notification entrance. This is not limited.

In a specific implementation of the first aspect, the electronic device searches, based on an entrance mapping table, for the target notification entrance corresponding to the importance-urgency level of the first application service. The electronic device pre-maintains an entrance mapping table, where the entrance mapping table includes different mapping relationships between the importance-urgency level of the application service and the notification entrance.

The entrance mapping table stored in the electronic device may be a system default mapping relationship table, a mapping relationship table customized by the user, or a mapping relationship table selected by the user from a plurality of mapping relationship tables provided by the system.

The electronic device determines the current importance-urgency level corresponding to the current service state of the first application service, and searches, in the predefined entrance mapping table, for the notification entrance corresponding to the current importance-urgency level of the first application service as the current corresponding target notification entrance.

For example, if the importance-urgency level of the first application service is very important and very urgent, the target notification entrances include a launcher, a negative screen, a quick application center, a notification center, a control center, a status bar, a lock screen interface, and an AOD interface.

For another example, if the importance-urgency level of the first application service is important and urgent, the target notification entrances include a negative screen, a quick application center, a notification center, a control center, a lock screen interface, and an always on display.

For another example, if the importance-urgency level of the first application service is generally important and generally urgent, the target notification entrances include a negative screen, a quick application center, a notification center, and a control center.

Generally, the higher the importance-urgency level, the more target notification entrances are determined, and the stronger the display reach effect. The electronic device selects, based on the importance-urgency level of the application service, the notification entrance for displaying the service information. This provides better adaptability of the display effect and better compliance with a user requirement.

In another specific implementation of the first aspect, when finding, in the entrance mapping table based on the importance-urgency level of the first application service, the notification entrance corresponding to the current importance-urgency level, the electronic device further determines whether the notification entrance corresponding to the importance-urgency level of the first application service has performed previous registration, to verify whether the notification entrance corresponding to the current importance-urgency level has a capability of displaying the service information.

If determining that the notification entrance corresponding to the importance-urgency level of the first application service has initiated a registration application, the electronic device uses the notification entrance corresponding to the importance-urgency level of the first application service as the target notification entrance, and invokes the target notification entrance to display the service information of the first application service.

If determining that the notification entrance corresponding to the importance-urgency level of the first application service has not initiated a registration application, the electronic device does not use the notification entrance corresponding to the importance-urgency level of the first application service as the target notification entrance, and does not invoke the notification entrance to display the service information of the first application service subsequently.

In a specific implementation of the first aspect, the electronic device further adds a solution of stopping displaying the service information. The electronic device may obtain an indication that the first application service ends. The indication that the first application service ends may be actively sent by the first application that generates the first application service, or may be obtained by the electronic device through active query based on a preset update frequency.

In response to the end of the first application service, the electronic device stops displaying the service information of the first application service at the target notification entrance, to timely remind the user that the first application service has ended.

In conclusion, based on the display control method provided in this embodiment of this application, in the running process in which the first application generates the first application service, the electronic device may display the service information of the latest first application service in different display forms respectively on entrance interfaces of the plurality of notification entrances. The electronic device timely displays the latest service information on each entrance interface of the electronic device, so that the service information can reach the user to the greatest extent, complex operations of viewing information by the user are simplified, and user experience is improved to the greatest extent.

According to a second aspect, this application provides an electronic device. The electronic device includes a display, a memory, and a processor. The display and the memory are both coupled to the processor.

The memory stores computer-executable instructions.

The processor executes the computer-executable instructions stored in the memory, so that the electronic device performs the display control method in any implementation of the first aspect.

According to a third aspect, a control apparatus is provided. The control apparatus may perform the display control method in any implementation of the first aspect.

According to a fourth aspect, an electronic device is provided. The electronic device has a function of implementing the display control method in the first aspect. The function may be implemented by hardware, or may be implemented by hardware executing corresponding software. The hardware or the software includes one or more modules corresponding to the function.

According to a fifth aspect, an electronic device is provided, including: a processor and a memory. The memory is configured to store computer-executable instructions. When the electronic device runs, the processor executes the computer-executable instructions stored in the memory, so that the electronic device performs the display control method in any implementation of the first aspect.

According to a sixth aspect, an electronic device is provided, including: a processor, where the processor is configured to: couple to a memory, read instructions in the memory, and then perform the display control method in any implementation of the first aspect according to the instructions.

According to a seventh aspect, a computer-readable storage medium is provided. The computer-readable storage medium stores instructions. When run on a computer, the instructions enable the computer to perform the display control method in any implementation of the first aspect.

According to an eighth aspect, a computer program product including instructions is provided. When run on a computer, the computer program product enables the computer to perform the display control method in any implementation of the first aspect.

According to a ninth aspect, a control apparatus (for example, the control apparatus may be a chip system) is provided. The apparatus includes a processor, configured to support a control device in implementing the functions related in the first aspect. In a possible design, the apparatus further includes a memory, where the memory is configured to store program instructions and data that are necessary to the control device. When the apparatus is a chip system, the apparatus may include a chip, or include a chip and other discrete components.

For technical effects brought by any one of the designs in the second aspect to the ninth aspect, refer to the technical effects brought by the different designs in the first aspect. Details are not described herein again.

### BRIEF DESCRIPTION OF DRAWINGS

FIG. 1A, FIG. 1B, FIG. 1C, and FIG. 1D are diagrams of an interface of a mobile phone according to an embodiment of this application;
FIG. 2 is a schematic flowchart of a display control method according to an embodiment of this application;
FIG. 3A, FIG. 3B, FIG. 3C, and FIG. 3D are diagrams of some interfaces on which a mobile phone displays service information at a plurality of target notification entrances according to an embodiment of this application;
FIG. 4A, FIG. 4B, FIG. 4C, and FIG. 4D are diagrams of other interfaces on which a mobile phone displays service information at a plurality of target notification entrances according to an embodiment of this application;
FIG. 5 is another schematic flowchart of a display control method according to an embodiment of this application;
FIG. 6 is a schematic flowchart of performing a display control method by a mobile phone according to an embodiment of this application;
FIG. 7A and FIG. 7B are diagrams of a software framework of a mobile phone according to an embodiment of this application;
FIG. 8 is a schematic flowchart of performing a display control method based on a software framework according to an embodiment of this application;
FIG. 9A, FIG. 9B, and FIG. 9C are summarization diagrams of implementing a display control method by a software framework according to an embodiment of this application;
FIG. 10 is a diagram of a software framework of a Widget architecture corresponding to an electronic device according to an embodiment of this application;
FIG. 11 is a schematic flowchart of performing a display control method based on a Widget architecture by an electronic device according to an embodiment of this application;
FIG. 12A and FIG. 12B are other schematic flowcharts of performing a display control method based on a Widget architecture by an electronic device according to an embodiment of this application;
FIG. 13 is a schematic flowchart of a notification entrance registration operation in a display control method according to an embodiment of this application;
FIG. 14 is a schematic flowchart of displaying a Widget card at a notification entrance in a display control method according to an embodiment of this application;
FIG. 15A and FIG. 15B are schematic flowcharts of displaying updated service information on a notification entrance in a display control method according to an embodiment of this application;
FIG. 16 is a schematic flowchart of automatically updating a Widget card by an interaction display framework in a display control method according to an embodiment of this application;
FIG. 17 is a schematic flowchart of transferring view files of a capsule and a card at the same time in a display control method according to an embodiment of this application;
FIG. 18 is a diagram of interfaces of a capsule and a card in a display control method according to an embodiment of this application;
FIG. 19A and FIG. 19B are schematic flowcharts of transferring view files of capsule and card data at the same time by an electronic device according to an embodiment of this application;
FIG. 20 is a diagram of interaction between a mobile phone and a watch in a display control method according to an embodiment of this application;
FIG. 21A and FIG. 21B are diagrams in which a mobile phone separately interacts with a watch and an in-vehicle infotainment in a display control method according to an embodiment of this application;
FIG. 22 is a diagram of a connection between a mobile phone and a watch in a display control method according to an embodiment of this application;
FIG. 23 is a schematic flowchart of transferring service information to an external device by a mobile phone in a display control method according to an embodiment of this application;
FIG. 24A and FIG. 24B are diagrams in which a mobile phone supports multiple device transmission display in a display control method according to an embodiment of this application;
FIG. 25A and FIG. 25B are schematic flowcharts of transferring service information to an external device in a display control method according to an embodiment of this application;
FIG. 26 is a schematic flowchart of pushing full information in a display control method according to an embodiment of this application; and
FIG. 27 is a diagram of a hardware structure of an electronic device according to an embodiment of this application.

### DESCRIPTION OF EMBODIMENTS

Example embodiments of this application are described below with reference to the accompanying drawings. Various details of embodiments of this application are included to help understanding, and should be understood as merely examples. Therefore, a person of ordinary skill in the art should recognize that various changes and modifications can be made to embodiments described herein without departing from the scope and spirit of this application. Likewise, descriptions of well-known functions and structures are omitted in the following description for clarity and conciseness.

For ease of understanding, some technical knowledge in embodiments of this application is first described.

Various applications may be installed in an electronic device (such as a mobile phone) to implement different application services. The applications installed on the mobile phone may include system applications and third-party applications. For example, the system applications are Call and Alarm, and the third-party applications are a taxi-hailing application, a shopping application, and the like. A launcher interface of the mobile phone displays icons of the various applications. After receiving a tap operation performed by a user on an application icon on the launcher, the mobile phone can enter the corresponding application and display the application interface of the application to the user.

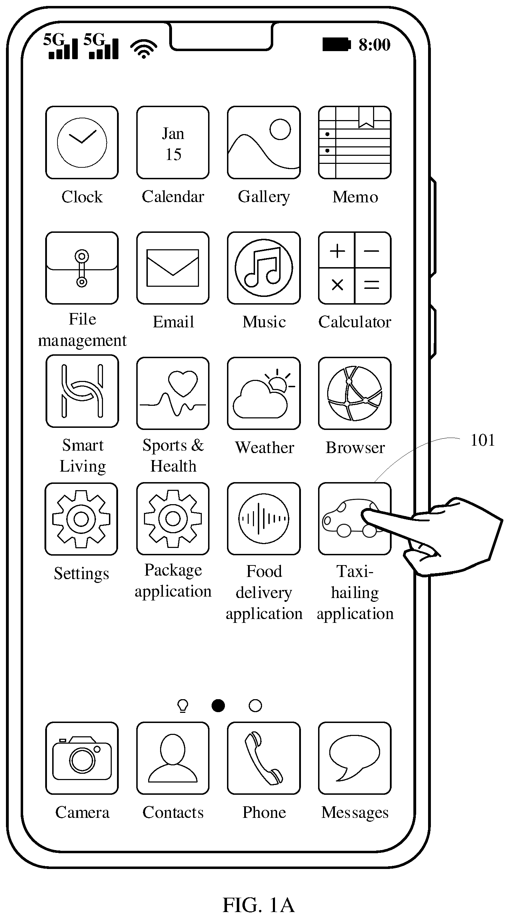

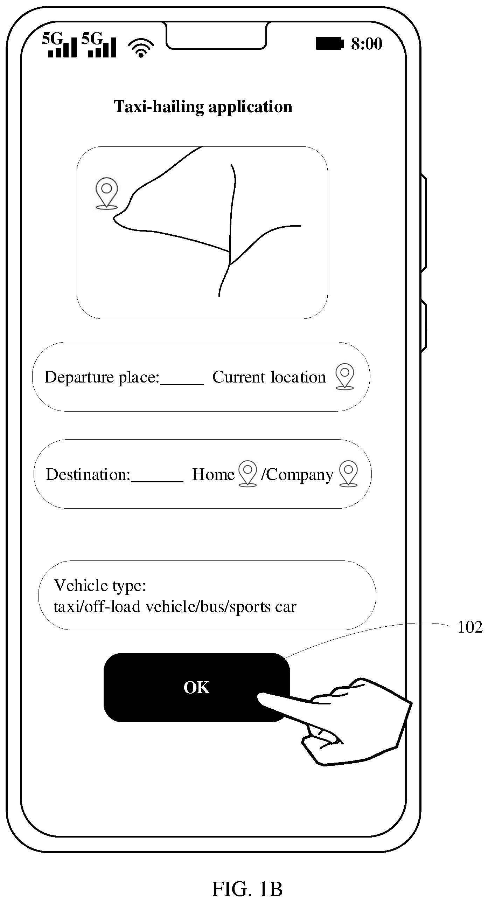

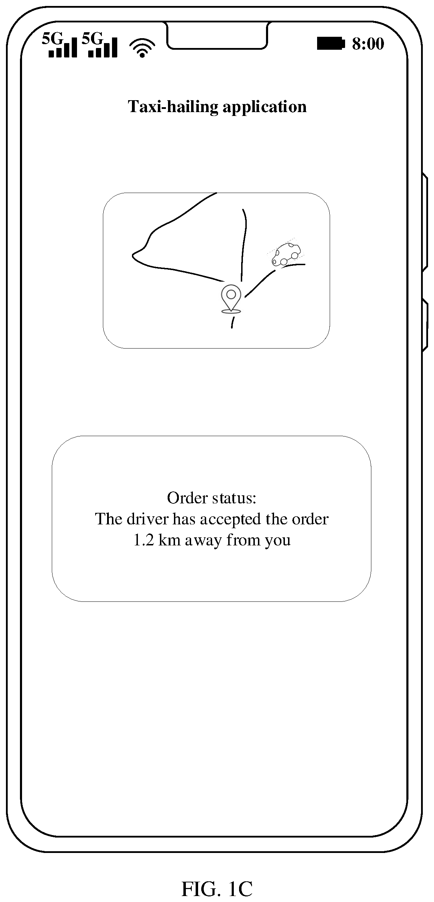

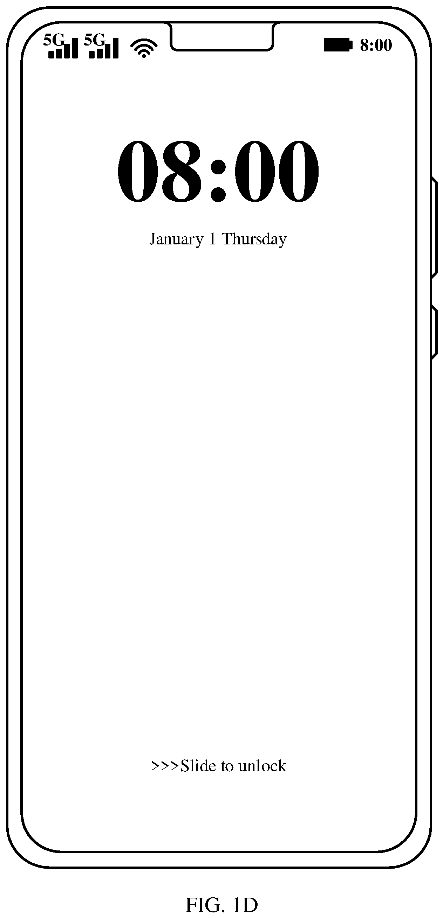

FIG. 1A, FIG. 1B, FIG. 1C, and FIG. 1D are diagrams of an interface of a mobile phone. As shown in FIG. 1A, the mobile phone may display icons corresponding to various applications on the launcher, such as an icon (for example, 101 shown in FIG. 1A) of the taxi-hailing application. If the icon of the taxi-hailing application on the launcher receives a tap operation of the user, a taxi-hailing application interface shown in FIG. 1B is entered. A taxi-hailing requirement input box is displayed on the taxi-hailing application interface. The user may enter or select a taxi-hailing requirement, such as a departure place, a destination, a vehicle type, and other information, and then tap a "Confirm hailing" control (for example, 102 shown in FIG. 1B) to initiate a taxi-hailing order. The taxi-hailing application enters a taxi-hailing application interface shown in FIG. 1C. An order status of the taxi-hailing order is displayed on the interface and the order status is continuously updated and displayed, including an order acceptance status of the taxi-hailing order, a driver arrival status, a trip status, and the like.

In the entire duration of the taxi-hailing order, the user may exit the taxi-hailing application interface and tap to enter an application interface of another application on the mobile phone, or the user may lock the screen of the mobile phone. As shown in FIG. 1D, in the duration of the taxi-hailing order, the user exits the taxi-hailing application interface and locks the screen. The mobile phone does not display the order status of the taxi-hailing application on the lock screen interface, preventing the user from obtaining a real-time status of the taxi-hailing order in a timely manner. If the user wants to obtain the real-time status of the taxi-hailing order, the user needs to unlock the mobile phone and enter the taxi-hailing application interface again to view the real-time status and progress of the taxi-hailing order. In other words, the existing display control scheme requires complex operations from the user, resulting in poor user experience.

Based on this, an embodiment of this application provides a display control method, applied to an electronic device. The electronic device provides a display solution of displaying, on entrance interfaces of a plurality of notification entrances, related data of application services that are generated for various applications. Compared with the scheme of displaying service data only through an application interface, the display control method provided in this embodiment of this application implements synchronous display of service data on interfaces of a plurality of notification entrances. The display effect is more intuitive, requiring fewer user operations to display the service data to the user, simplifying operations of viewing an application service by the user, and enhancing user experience.

The electronic devices to which embodiments of this application are applied may include a personal computer (Personal Computer, PC), a tablet computer, a notebook computer, a portable computer (such as a mobile phone), a wearable electronic device (such as a smartwatch), an augmented reality (Augmented Reality, AR)/virtual reality (Virtual Reality, VR) device, an in-vehicle computer, and other electronic devices with touchscreens. The specific form of the electronic device is not particularly limited in the following embodiments. For ease of description, in embodiments of this application, a mobile phone is mainly used an as an example to explain the specific implementation of the display control method performed by the electronic device.

### Embodiment 1

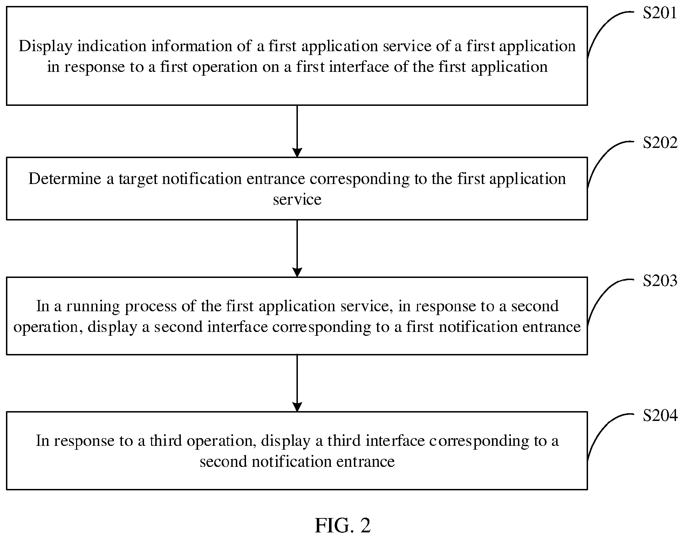

FIG. 2 is a schematic flowchart of a display control method according to an embodiment of this application. The provided display control method mainly includes the following procedures:

S201: Display indication information of a first application service of a first application in response to a first operation on a first interface of the first application.

The first application is installed on the mobile phone. The first application may receive a first operation of a user, and generates the first application service. The mobile phone may display indication information that the first application service is generated.

The first application in this embodiment may be a system application installed on the mobile phone, a third-party application, a quick application, an applet hosted within a third-party application, or the like.

The first application service in this embodiment may be understood as an application order that is initiated by the first application on the mobile phone and that needs to be continuously run for a period of time to be completed. The application order may be a consumption order involving payment transaction or a task order not involving payment transaction.

In one example, the first application may be a taxi-hailing application, and the first interface of the first application may be an application interface of the taxi-hailing application. The mobile phone receives the first operation of the user and generates a consumption order of a taxi-hailing service. The consumption order of the taxi-hailing service is an application order that requires a period of time to be completed and may be considered a first application service. Similarly, the first application may also be a food delivery application, a package application, or the like.

In another example, the first application may be Alarm or Stopwatch. Alarm or Stopwatch receives a tap operation of the user and generates a timing service, such as an alarm reminder or a countdown. The timing service does not involve payment transaction but still requires a period of time to be completed. The timing service may also be considered an application service. The first application may also be a match result broadcast application, a flight dynamic reminder application, a smart home control application, a flight itinerary application, a train itinerary application, or the like.

One application can simultaneously initiate a plurality of different application services. For example, the taxi-hailing application may initiate two different taxi-hailing services at the same time: one from a location A to a location B, and the other from a location C to a location D. It is considered that different application services correspond to different user requirements. In other words, different application services are usually unrelated to each other, and each has its own display reach requirement. To achieve good display effects, in this embodiment of the application, the mobile phone uses a single application service as a processing target of the display control method. If a same application initiates two application services separately, the mobile phone may perform the corresponding display control method for each of the two application services.

In addition, each application service relates to a plurality of types of service information, which may be mainly classified into service data and a service state. The service data provided by the mobile phone may be data that is related to the current application service and that needs to be displayed to the user. The service state of the application service provided by the mobile phone may be information indicating a related state of the current application service.

In an example, the first application service is a taxi-hailing service. Information provided by the mobile phone such as a current quantity of users in the queue, vehicle information and personal information of a driver, a distance between a current location of the vehicle and a pickup point of a passenger, a navigation route, a distance to a destination, estimated time of arrival, and an estimated ride cost are the service data. Information provided by the mobile phone such as "in queue", "waiting for driver arrival", "the driver has arrived", " the passenger has boarded", and "has arrived at the destination", which corresponds to the order status of the taxi-hailing service, is the service state.

When starting a new first application service, each first application may create a service process corresponding to the first application service. The first service process begins when the first application service is created and ends when the first application service ends. During existence of the service process, the mobile phone displays related information such as the service data or the service state of the first application service within the application interface of the first application. During existence of the service process of each first application service, the service state and/or the service data of the first application service may also be updated. In this case, the mobile phone updates display of the service state and/or the service data corresponding to the first application service within the first application interface of the first application until the first application service ends, and the service process also ends accordingly.

For example, the first application is the taxi-hailing application. The mobile phone generates a taxi-hailing service and creates an application process corresponding to the taxi-hailing service.

In one case, the application process of the taxi-hailing service is created when the taxi-hailing service is generated and continuously tracks several service states, such as driver acceptance, driver arrival, en route to the destination, and arrival at the destination. When the destination is reached, the taxi-hailing service ends, and the application process corresponding to the taxi-hailing service also ends.

In another case, the application process of the taxi-hailing service is created when the taxi-hailing service is generated. If the taxi-hailing service ends due to a timeout without driver acceptance, user cancellation, or other abnormal cases, the taxi-hailing process also ends accordingly.

In other words, the first application service processed in this embodiment of the application may be an application service that starts to be created and ends normally or an application service that starts to be created normally but ends abnormally. This is not limited.

As shown in FIG. 1B, the first application is a taxi-hailing application, and the first application service is a taxi-hailing service. The mobile phone displays an application interface of the taxi-hailing application, and in response to a tap operation of the user on a "Confirm hailing" control (for example, 102 shown in FIG. 1B), generates a taxi-hailing order. As shown in FIG. 1C, the mobile phone displays, within the application interface of the taxi-hailing application, indication information that the taxi-hailing service has been generated.

S202: Determine a target notification entrance corresponding to the first application service.

The mobile phone provides a plurality of notification entrances, and each notification entrance may display a notification message. The notification entrances provided by the mobile phone may include: a launcher, a negative screen, a notification center, a control center, a lock screen interface, a status bar, an always on display (Always On Display, AOD), a quick application center, and the like.

The mobile phone may match a plurality of target notification entrances for the first application service. When displaying the entrance interface for a target notification entrance, the mobile phone may display the service information of the first application service on the entrance interface.

There may be a plurality of solutions for the mobile phone to determine the target notification entrances corresponding to the first application service.

In a first solution, the mobile phone determines an associated target notification entrance based on the first application.

In one example, when the first application is installed on the mobile phone, notification entrances supported by the first application may be registered.

When the mobile phone detects that the first application generates a new first application service, notification entrances pre-registered by the first application are determined as target notification entrances matched for the first application service.

For example, when the taxi-hailing application is installed on the mobile phone, notification entrances supported by the taxi-hailing application through registration include the launcher, the negative screen, the lock screen interface, the status bar, and the AOD interface. When the mobile phone generates a new taxi-hailing service for the taxi-hailing application, target notification entrances that can be matched for the taxi-hailing service may include the launcher, the negative screen, the lock screen interface, the status bar, and the AOD interface.

In a second solution, the mobile phone determines the target notification entrance based on the first application service.

The mobile phone generates a plurality of first application services, and different first application services have different importance-urgency levels. The mobile phone may determine the importance-urgency level of the first application service and then match the corresponding target notification entrance based on the importance-urgency level of the first application service.

In one example, the mobile phone may pre-store an entrance mapping table. The entrance mapping table stores different notification entrances corresponding to different importance-urgency levels. The mobile phone determines the importance-urgency level of the first application service, searches, in the entrance mapping table, for the notification entrance corresponding to the importance-urgency level of the first application service, and determines the notification entrance as the target notification entrance corresponding to the first application service.

The notification entrances provided by the mobile phone implement device reach, such as reach on the mobile phone or a tablet. The reach method provided by the mobile phone at each notification entrance may be visual reach.

In another example, the mobile phone may also display the service information in different display forms at different notification entrances. For example, the display forms may include a capsule, a card, and a banner. Cards provided by the mobile phone may be further classified into card sets and collapsed cards, corresponding to cards of different specifications.

Table 1 below is an entrance mapping table pre-stored in the mobile phone. The entrance mapping table stored in the mobile phone may store mapping relationships between importance-urgency levels of application services and notification entrances, and may also store device reach and reach methods.

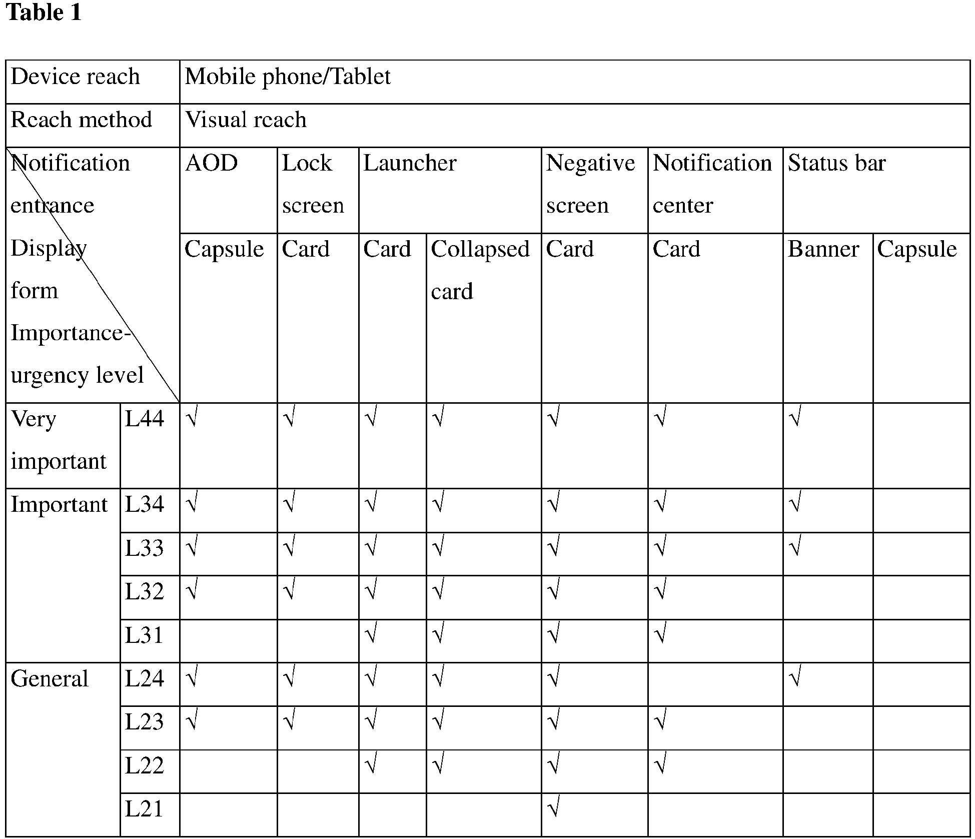

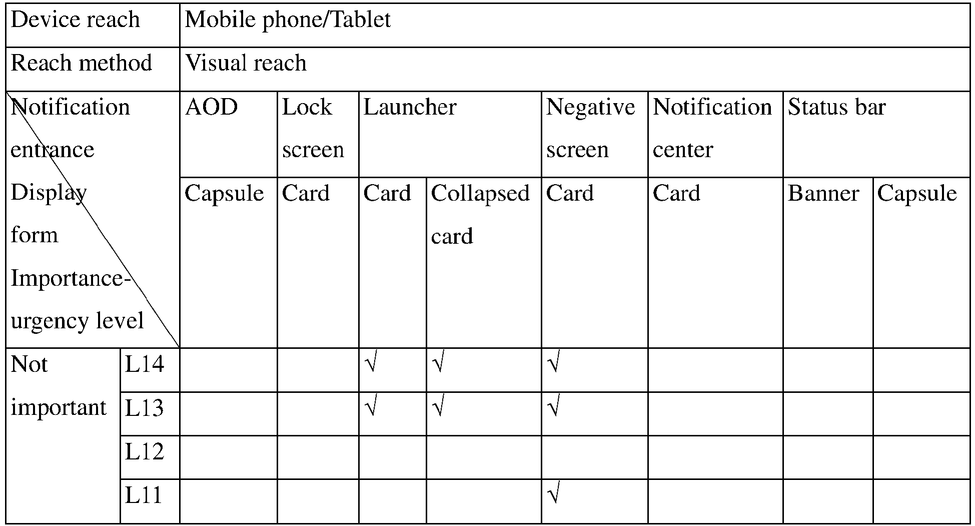

As shown in Table 1, the mobile phone may further store, in the entrance mapping table, identifiers corresponding to different importance-urgency levels of application services. The mobile phone may first determine the importance-urgency level of the first application service, and search, in Table 2 below, for an identifier corresponding to the importance-urgency level of the first application service (for example, L11 or L21), and then search, in Table 1 based on the identifier, the target notification entrance and the display form that correspond to the first application service.

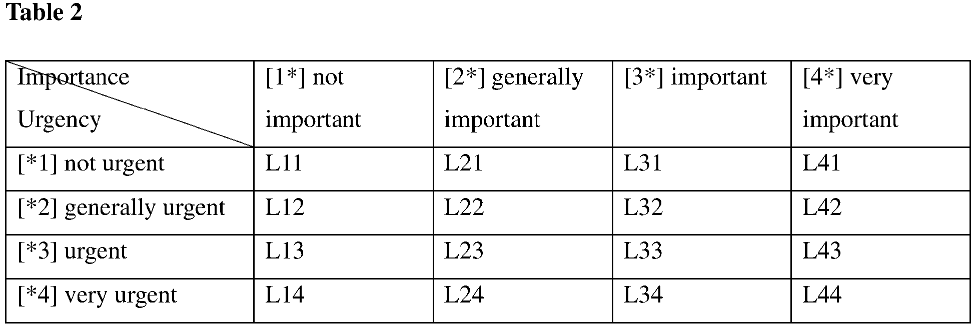

The foregoing example provides the solution in which the mobile phone determines the corresponding target notification entrances for the first application service based on the entrance mapping table. In other examples, the mobile phone may also determine the target notification entrances for the first application service in manners such as user-defined settings or neural network model prediction. This is not limited.

In another example, in the running process of the first application service of the mobile phone, different service states also exist, and different service states have different importance-urgency levels. The mobile phone may also determine different target notification entrances based on the different service states of the first application service.

For example, in the running process of the first application service, service states of the first application service that are obtained by the electronic device may sequentially include a first service state and a second service state. The first service state is a service state in a first time period, the second service state is a service state in a second time period, and the second time period is a time period after the first time period.

In the first time period, the electronic device determines, based on the first service state in which the first application service is currently, the first importance-urgency level corresponding to the first service state, and determines, based on the first importance-urgency level, the target notification entrance currently corresponding to the first application service.

In the second time period, in response to the update on the service state of the first application service, the electronic determines, based on the second service state obtained after the first application service is updated, the second importance-urgency level corresponding to the second service state, and updates the target notification entrance corresponding to the first application service based on the second importance-urgency level corresponding to the second service state. The target notification entrance corresponding to the first service state may be the same as or different from the target notification entrance corresponding to the second service state.

For example, in the first time period, the mobile phone obtains the service state of the taxi-hailing service as "in queue" with an importance-urgency level of "generally important and urgent". The mobile phone searches in Table 2 for a corresponding identifier L23 and searches in Table 1 for corresponding target notification entrances: the AOD interface, the lock screen, the negative screen, the launcher, and the notification center.

In the second time period, the mobile phone obtains the service state of the taxi-hailing service as "the driver has accepted the order" with an importance-urgency level of "generally important and urgent". The mobile phone searches in Table 2 for a corresponding identifier L23 and searches in Table 1 for corresponding target notification entrances: the AOD interface, the lock screen, the negative screen, the launcher, and the notification center.

In the third time period, the mobile phone obtains the service state of the taxi-hailing service as "the passenger has boarded" with an importance positive level of "generally important and generally urgent". The mobile phone searches in Table 2 for a corresponding identifier L22 and searches in Table 1 for corresponding target notification entrances: the negative screen, the launcher, and the notification center.

In this example, when the taxi-hailing service is in two service states: "in queue" and "the driver has accepted the order", the mobile phone may display information on the entrance interfaces of five types of notification entrances: the AOD interface, the lock screen, the negative screen, the launcher, and the notification center. When the taxi-hailing service switches to the state "the passenger has boarded", the mobile phone displays information on entrance interfaces of three types of notification entrances: the negative screen, the launcher, and the notification center, and stops displaying information on two interfaces: the AOD interface and the lock screen.

S203: In the running process of the first application service, in response to a second operation, display a second interface corresponding to the first notification entrance.

S204: In response to a third operation, display a third interface corresponding to a second notification entrance.

In the running process of the first application service, the mobile phone may display the service information of the first application service on the display interface of each target notification entrance. The service information displayed by the mobile phone may include the service state and the service data, particularly key information in the service state and the service data.

The mobile phone displays an entrance interface of one target notification entrance at a same moment and may switch to an entrance interface of another target notification entrance in response to a user operation. For example, the mobile phone may display, in response to the second operation, the second interface corresponding to the first notification entrance, and display the service information of the first application service on the second interface. For another example, the mobile phone may also display, in response to the third operation, the third interface corresponding to the third notification entrance, and display the service information of the first application service on the third interface.

In one example, the target notification entrances matched by the mobile phone for the taxi-hailing service include the launcher, the negative screen, the lock screen, the notification center, the status bar, the AOD interface, and the like.

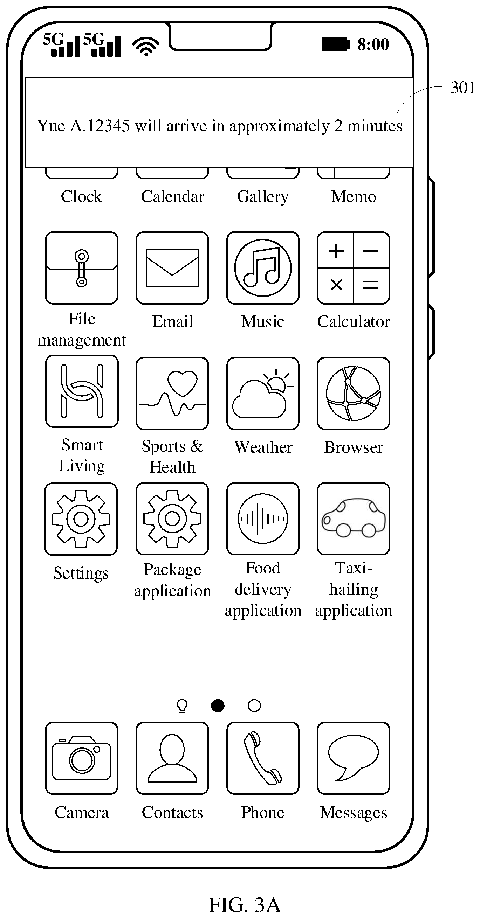

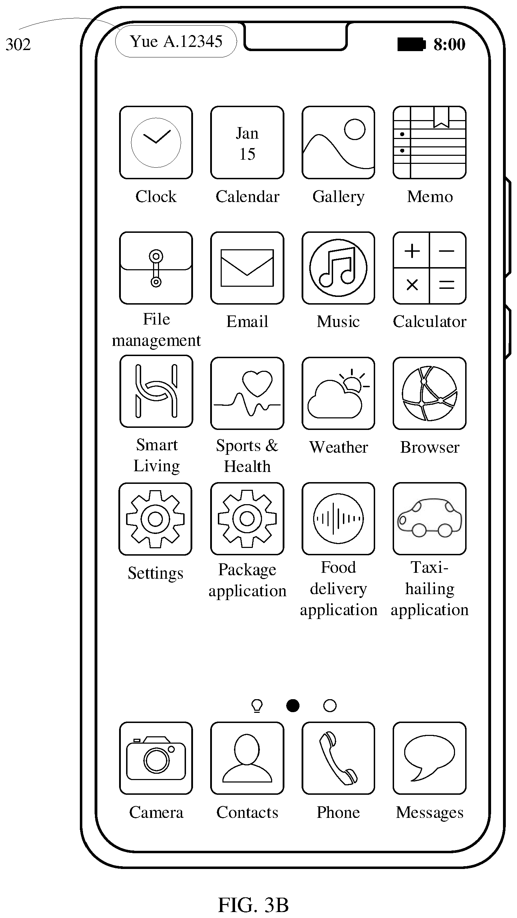

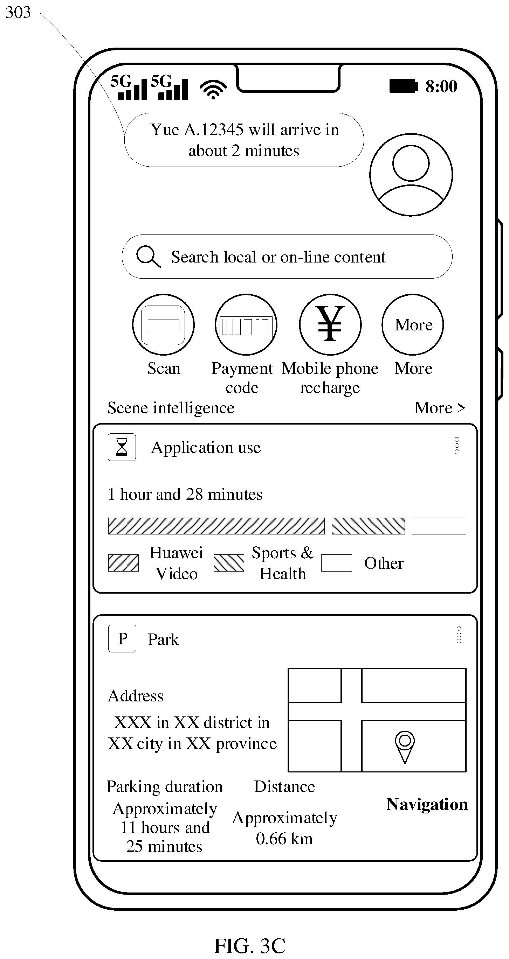

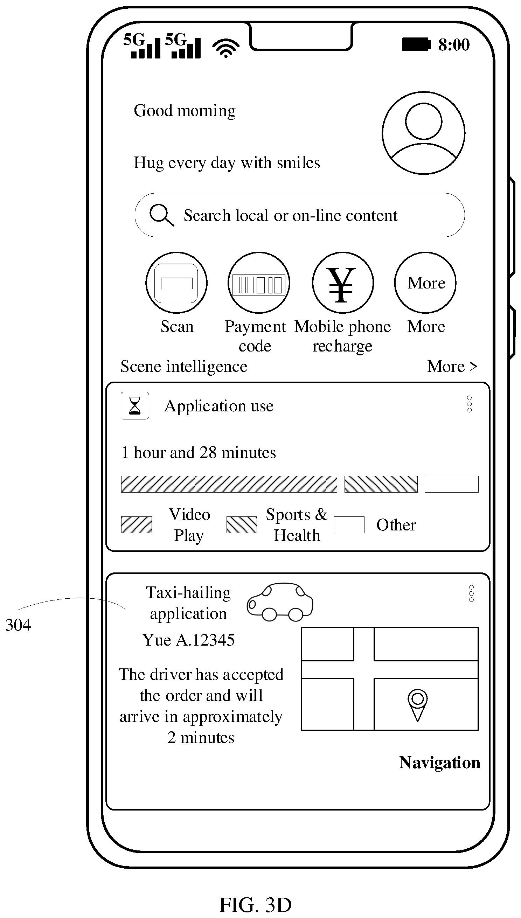

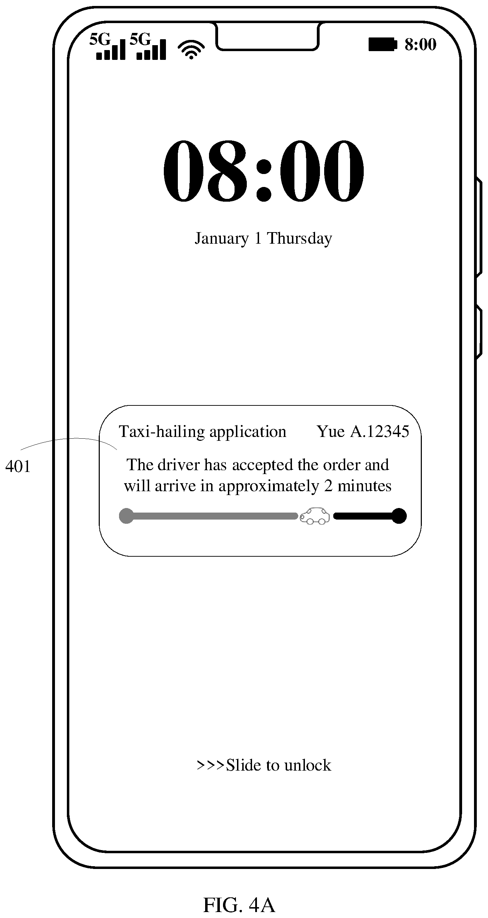

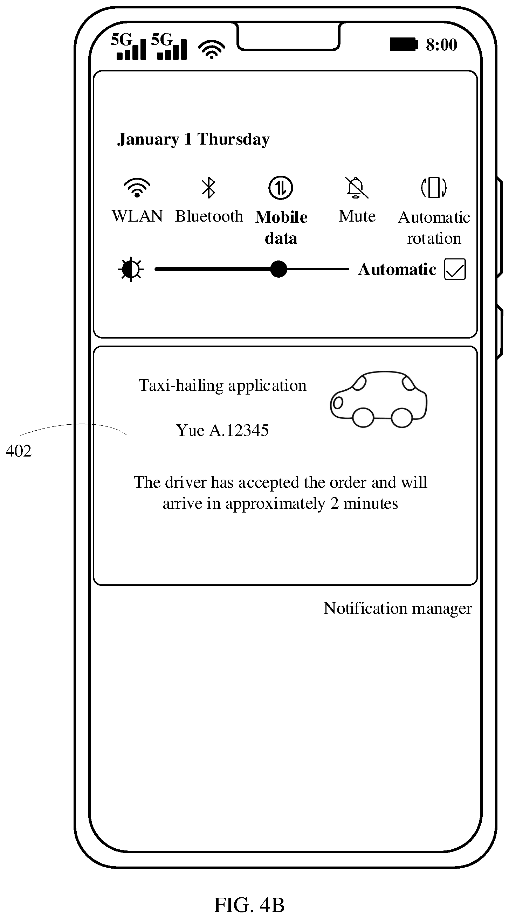

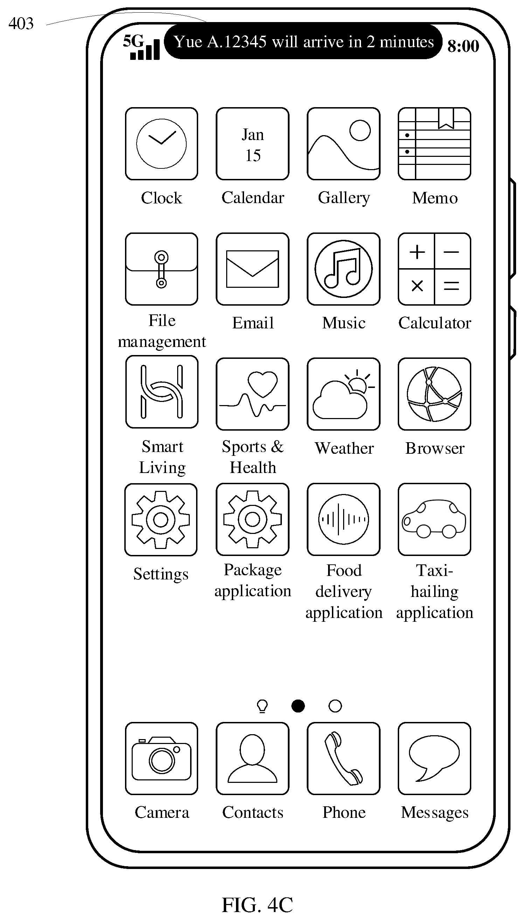

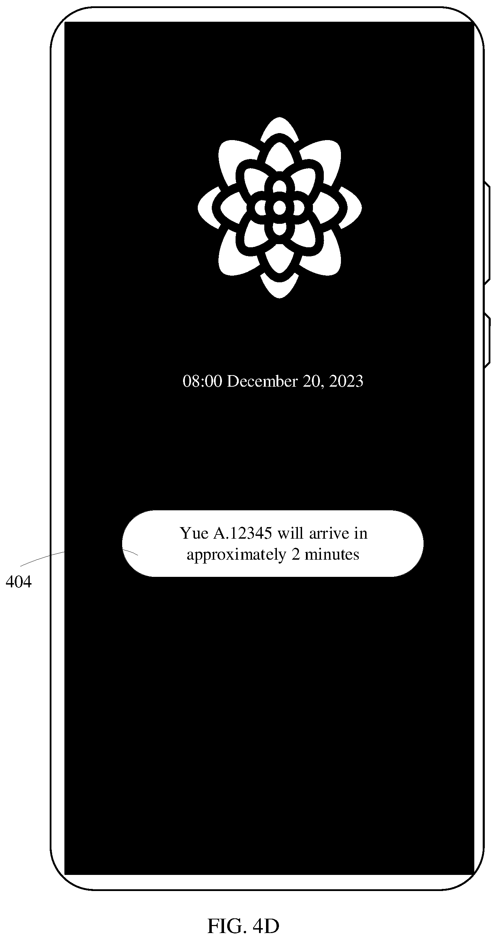

FIG. 3A, FIG. 3B, FIG. 3C, and FIG. 3D and FIG. 4A, FIG. 4B, FIG. 4C, and FIG. 4D are diagrams of interfaces on which a mobile phone displays the service information of the first application service on the entrance interfaces of the target notification entrances. As shown in FIG. 3A, the mobile phone may display the service information of the taxi-hailing service in a banner form 301 on the launcher. As shown in FIG. 3B, the mobile phone may also display the service information of the taxi-hailing service in a capsule form 302 on the status bar. As shown in FIG. 3C, the mobile phone may display the service information of the taxi-hailing service in a capsule form 303 on an interface of the negative screen.

As shown in FIG. 3D, the mobile phone may display the service information of the taxi-hailing service in a card form 304 on the interface of the negative screen.

As shown in FIG. 4A, the mobile phone may display the service information of the taxi-hailing service in a card form 401 on the lock screen interface. As shown in FIG. 4B, the mobile phone may display the service information of the taxi-hailing service in a card form 402 on an interface of the notification center. As shown in FIG. 4C, the mobile phone may display the service information of the taxi-hailing service in another capsule form 403 on the status bar. Different from the capsule form 302 shown in FIG. 3B, the capsule form 403 additionally features decorative design that adorns an area housing the camera or other components, and this area can be used for service information display, thereby improving screen utilization.

As shown in FIG. 4D, the mobile phone may also display the service information of the taxi-hailing service in a capsule form 404 on the AOD interface.

In the running process of the first application service, the mobile phone may sequentially switch between entrance interfaces of different target notification entrances in response to a plurality of operations of the user, and display the service information of the first application service on each entrance interface.

In the running process of the first application service, the mobile phone may alternatively display only the entrance interface of one target notification entrance, and display the service information of the first application service on this entrance interface. For example, after the user places a taxi-hailing order and locks the screen, the mobile phone can continuously display the service information of the taxi-hailing service on the lock screen interface until the taxi-hailing service ends.

The mobile phone may select different target notification entrances to display the service information and may also select the display forms for displaying the service information on the interfaces of different notification entrances. The involved display forms include a card, a capsule, a banner, and the like.

The card is the main display form. Cards mainly include a shortcut card, a quick application card (Java Script^{™}, JS), an Android^{™} application card (Widget), and a content interface card, which support presentation in a form of a card or an icon.

Shortcut (Shortcut) is a service presented in a manner of an icon, and a related service can be used without installing a corresponding application on the mobile phone. For the content interface card (Software Development Kit, SDK), a service is presented in a manner of a card or voice.

The quick application card is a JS card, and is carried by a quick application and presented in a manner of a card, and intuitively presents service content. The JS card is displayed mainly on the negative screen interface and the quick application center interface.

The Android^{™} application card is a Widget card, and a service follows the application and is presented in a form of a card, and service content is intuitively displayed. The Widget card is displayed at a plurality of types of notification entrances such as the launcher, the negative screen, the notification center, and a multiple device.

The Widget card may be displayed on notification entrances such as the launcher, the status bar interface, the lock screen interface, the notification center, and the multiple device.

In the display control method provided in this embodiment shown in FIG. 2, the mobile phone matches, for the first application service, the target notification entrance for displaying the service information of the first application service. Based on FIG. 2, the mobile phone may further match a solution of the target display form for the first application service.

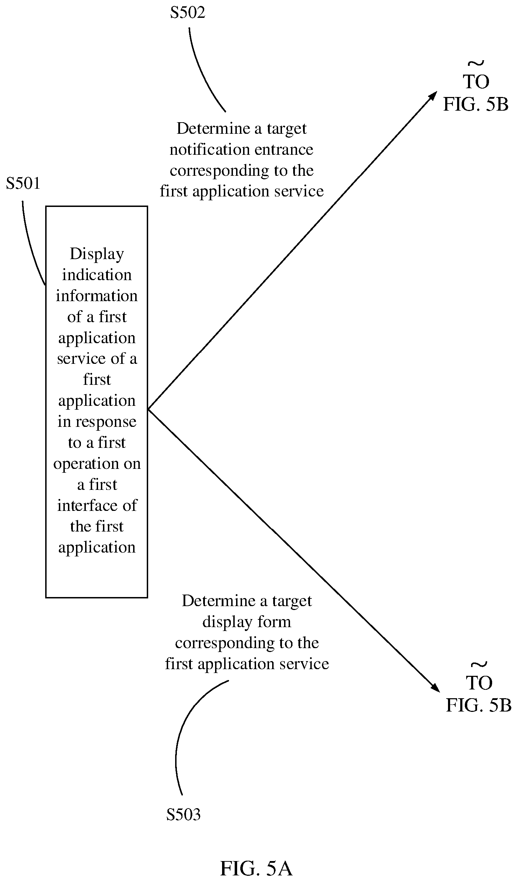

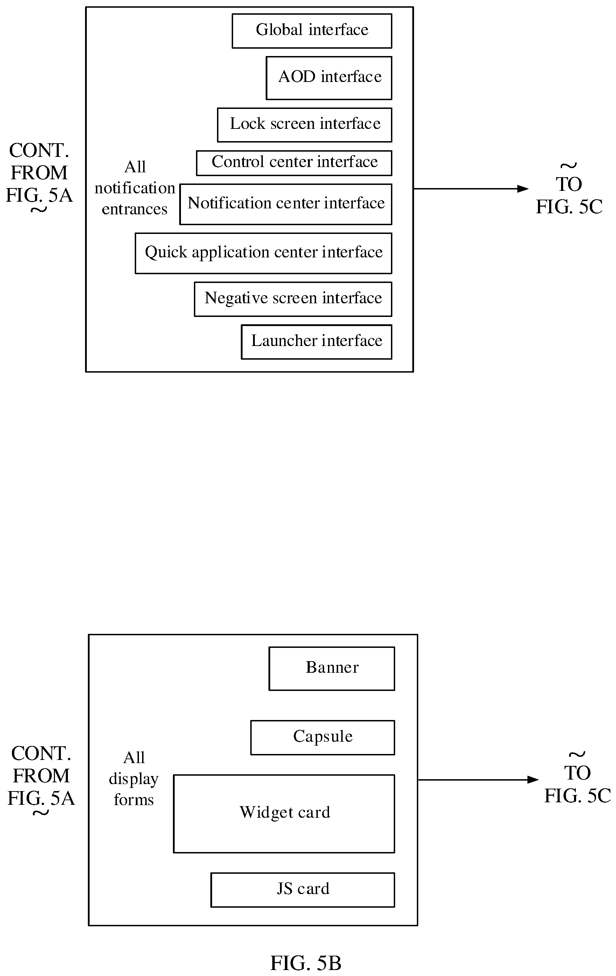

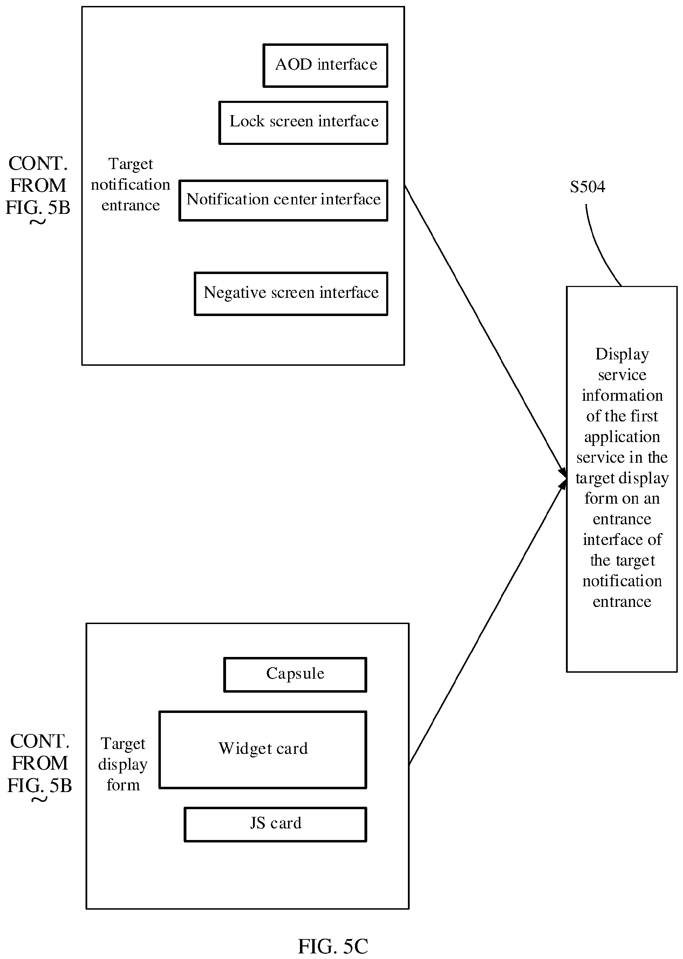

FIG. 5 is another schematic flowchart of a display control method. The provided display control method mainly includes the following procedures:

S501: Display indication information of a first application service of a first application in response to a first operation on a first interface of the first application.

The mobile phone may generate the first application service in response to the first operation of the user. For a specific implementation of S501, refer to the specific implementation of the foregoing S201. Details are not described again.

S502: Determine a target notification entrance corresponding to the first application service.

S503: Determine a target display form corresponding to the first application service.

The mobile phone determines the corresponding target notification entrances and corresponding target display forms for the first application service. For example, the mobile phone may first determine the target notification entrances corresponding to the first application service. For another example, the mobile phone may alternatively first determine a first type of display notification corresponding to the first application service.

In one example, the target display forms determined by the mobile phone for the first application service may include a first display form and a second display form. The first display form corresponds to the second interface of the first notification entrance, and the first display form is a display form of the service information of the first application service on the second interface. The second display form corresponds to the third interface of the second notification entrance, and the second display form is the display form of the service information of the first application service on the third interface. The second display form and the third display form determined by the mobile phone for the first application service may be the same or different.

For example, in the running process of the taxi-hailing service, the target notification entrances determined by the mobile phone for the taxi-hailing service include the negative screen and the lock screen interface.

At a first moment, the mobile phone displays the entrance interface of the negative screen and displays the service information of the taxi-hailing service in a card form on the negative screen interface.

At a second moment, the mobile phone displays the lock screen interface and displays the service information of the taxi-hailing service in a capsule form on the lock screen interface.

There may also be a plurality of solutions for the mobile phone to select the corresponding first display form for the first application service.

In a first solution, the mobile phone may determine the corresponding target display form for the first application service based on the first application.

In one example, the mobile phone obtains a display form pre-registered by the first application and uses the display form as the target display forms corresponding to the first application service.

When each application is installed on the mobile phone, the application registers a supported display form. When generating the first application service, the mobile phone searches for the display form pre-registered by the first application that generates the first application service and uses the pre-registered display form as the target display form corresponding to the first application service.

For example, when a taxi-hailing application is installed on the mobile phone, a second type of display forms pre-registered by the taxi-hailing application include a JS card, a Widget card, a capsule, and the like. When generating a taxi-hailing service, the mobile phone uses the second type of display forms pre-registered by the taxi-hailing application as the target display forms of the taxi-hailing service.

For another example, when a package application is installed on the mobile phone, the second type of display forms pre-registered by the package application include a JS card, a capsule, and the like. When generating a package service, the mobile phone uses the second type of display forms pre-registered by the package application as the second type of display forms of the package service.

In a second solution, the mobile phone may determine the corresponding target display form for the first application service based on the first application and the importance-urgency level of the first application service.

In this case, the mobile phone first determines the target notification entrance of the first application service and then determines the target display form of the first application service. The mobile phone determines the target notification entrance of the first application service by searching in a pre-stored entrance mapping table (such as Table 1) based on the importance-urgency level of the first application service. For a specific implementation in which the mobile phone determines the target notification entrance of the first application service, refer to the specific implementation of the foregoing S202. Details are not described again.

In one example, the mobile phone obtains the second type of display forms pre-registered by the first application and a third type of display forms pre-registered by the target notification entrances. The mobile phone uses a display form that is the same in the second type of display forms and in the third type of display forms as the target display form of the first application service.

Each time the mobile phone is powered on and started, some or all notification entrances initiate registration applications to display the service information. In addition, the notification entrances further register the supported display forms, and the notification entrances provide a function of displaying the service information in the registered display forms. The mobile phone may store the display forms supported by the notification entrances into the entrance mapping table (for example, Table 1).

When generating the first application service, the mobile phone searches, in the entrance mapping table based on the importance-urgency level of the first application service, for the target notification entrances associated with the first application service and the display forms supported by the target notification entrances.

The mobile phone uses same forms that exist in both the display forms pre-registered by the first application and in the display forms supported by the target notification entrances as the target display forms of the first application service.

Further, there is a correspondence between the target display forms determined by the mobile phone and the target notification entrances. For example, the target notification entrances include the first notification entrance and the second notification entrance.

For example, the mobile phone uses a display form that is the same in the display forms pre-registered by the first application and in the display forms pre-registered by the first notification entrance as the first display form corresponding to the first notification entrance. When displaying the second interface of the first notification entrance, the mobile phone displays the service information of the first application service in the first display form.

For another example, the mobile phone uses a display form that is the same in the display forms pre-registered by the first application and in the display forms pre-registered by the second notification entrance as the second display form corresponding to the second notification entrance. When displaying the third interface of the second notification entrance, the mobile phone displays the service information of the first application service in the second display form.

The second display form and the third display form determined by the mobile phone may be one display form or may be a plurality of display forms. This is not limited.

S504: Display the service information of the first application service in the target display form on the entrance interface of the target notification entrance.

Once the mobile phone determines at least two target notification entrances of the first application service and the target display forms corresponding to the different target notification entrances, the mobile phone may perform the operation of displaying the service information of the first application service. For a specific implementation of S504, refer to the specific implementation processes of the foregoing S203 and S204. Details are not described again.

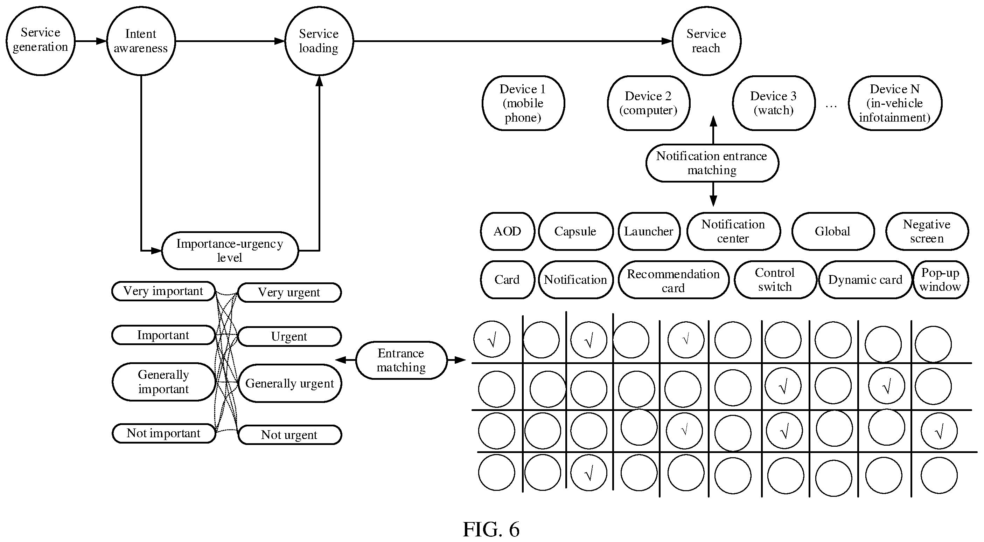

FIG. 6 is a schematic flowchart of performing, by the mobile phone, the display control method provided in the foregoing implementation. The mobile phone has an intent awareness capability and can obtain an importance-urgency level of a generated service.

When generating the first application service, the mobile phone determines the importance-urgency level of the first application service through intent awareness. The mobile phone performs service encapsulation on the service information and the importance-urgency level of the first application service to implement service reach.

Implementation of service reach by the mobile phone mainly includes two stages: device reach and notification entrance matching. The mobile phone first determines a device that needs to be reached, such as a mobile phone itself or another device (a computer, a tablet, a watch, an in-vehicle infotainment, or the like).

The mobile phone determines notification entrances that provide a display function on the device that needs to be reached. With reference to the specific implementation process of the foregoing S202, the mobile phone searches, in the entrance mapping table based on the importance-urgency level of the first application service, for the corresponding target notification entrance. The mobile phone displays the service information of the first application service on the entrance interface of the target notification entrance, to complete service reach.

Performing, by the mobile phone, the display control method provided in this embodiment mainly includes four processes: notification entrance registration, matching notification entrances for the application service and displaying the service information, updating display of the service information, and stopping displaying the service information. The four processes are explained sequentially below.

Process 1: notification entrance registration.

Each time the mobile phone is powered on and started, notification entrances initiate registration applications, to apply for permission to display the service information.

The target notification entrance sends a registration application to a service interaction display framework. After successfully registering with the service interaction display framework, the target notification entrance allows the service interaction display framework to send the service information of the first application service to the target notification entrance.

Process 2: The mobile phone matches notification entrances for the application service and displays the service information.

When generating the first application service, the mobile phone determines the importance-urgency level of the current service state of the first application service and searches, in the entrance mapping table, for the second type of notification entrances corresponding to the importance-urgency level of the current service state.

The mobile phone verifies whether the second type of notification entrances have previously initiated registration applications and determines second type of notification entrances that have previously initiated registration applications as the target notification entrances of the first application service.

The mobile phone further obtains the second type of display forms pre-registered by the first application and the third type of display forms pre-registered by the target notification entrances. The mobile phone determines, based on a display form that is the same in the second type of display forms and in the third type of display forms, the target display form corresponding to the first application service.

When displaying the entrance interface of each target notification entrance, the mobile phone displays the service information of the first application service in the corresponding target display form.

Process 3: The mobile phone updates display of the service information.

The mobile phone may obtain updated service information of the first application service and display the updated service information when displaying the entrance interface of each target notification entrance.

In the running process of the first application service, the mobile phone further re-determines the importance-urgency level corresponding to the current service state based on an update of the service state of the first application service, and searches, in the entrance mapping table, for the current target notification entrance corresponding to the importance-urgency level of the current service state.

Based on the update of the service state, the mobile phone determines a new target notification entrance and displays the updated service information on the entrance interface of the new target notification entrance.

Process 4: The mobile phone stops displaying the service information.

The mobile phone may further obtain a notification that running of the first application service ends. When running of the first application service ends, the mobile phone stops continuing to display the service information of the first application service on the target notification entrance.

The foregoing content describes, mainly from the level of the mobile phone, the specific implementation process of the display control method provided in embodiments of this application. The specific implementation process of the provided display control method is explained below in combination with software and hardware frameworks of the mobile phone.

The framework of the mobile phone is a layered architecture. In the layered architecture, software and hardware are divided into several layers, and each layer has a clear role and task. The layers communicate with each other through a software interface. In some embodiments, the electronic device may include, for example, an application (Application, APP) layer, a framework (FrameWork, FWK) layer, a hardware abstraction layer (Hardware Abstraction Layer, HAL), a kernel layer, and a hardware layer. Certainly, in addition to the foregoing main layered architectures, Runtime (Runtime) and system libraries may also be included. Details are not described.

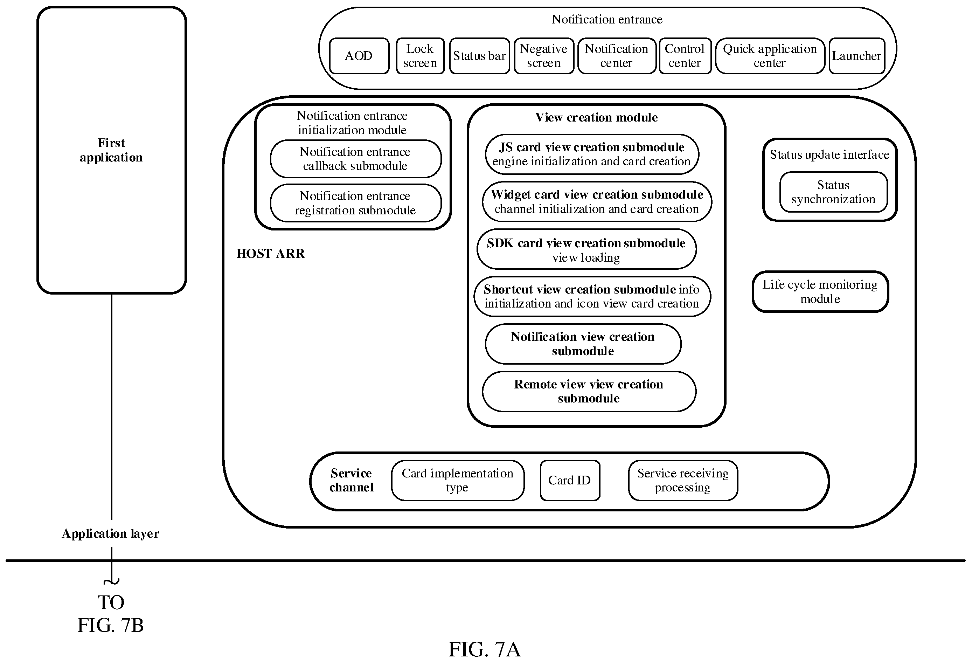

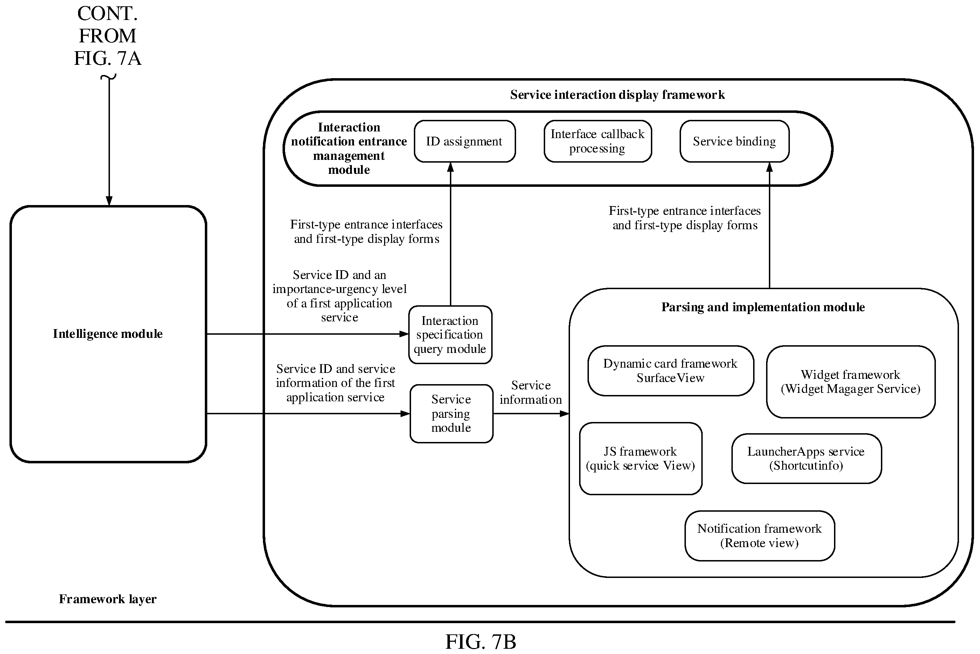

FIG. 7A and FIG. 7B are diagrams of a software framework of a mobile phone. For ease of understanding, FIG. 7A and FIG. 7B only schematically show some functional modules associated with the display control method provided in embodiments of this application and does not imply that the software framework of the mobile phone is limited to these functional modules.

For example, the application layer may include a series of applications. The applications included in the application layer may include system applications and third-party applications, such as a taxi-hailing application and a food delivery application.

In addition to various applications, the application layer may also include various types of notification entrances, a display service module configured to support the notification entrances in displaying corresponding entrance interfaces, and the like.

As shown in FIG. 7A and FIG. 7B, the application layer includes a first application, a notification entrance module, and a host module HOST ARR. HOST ARR includes an entrance initialization module, a view creation module, and a service channel.

The first application is an application that generates the first application service in the foregoing embodiments. The first application may include various applications, such as a food delivery application and a taxi-hailing application.

This example does not focus on the implementation logic of functions of the various first applications, for example, how the first application specifically generates the first application service and completes the first application service. This example mainly focuses on the procedure in which the mobile phone invokes each target notification entrance to display the service information of the first application service on the entrance interface when the mobile phone generates the first application service.

The notification entrance module includes various notification entrances supported by the local mobile phone for displaying the service information, such as the launcher, the negative screen, the notification center, the control center, the quick application center, the lock screen, the status bar, the AOD, and the like.

In other cases, the notification entrances provided on the mobile phone may also include a multiple device entrance. The multiple device entrance may be another device that has a communication connection with the mobile phone, such as a bracelet, a watch, a tablet, or an in-vehicle infotainment. The multiple device notification entrance set in the notification entrance module is a communication module on the mobile phone for communicatively connecting to a multiple device. The mobile phone may transfer the service information, by using the communication module, to the multiple device notification entrance for display, so that the service of the first application service can reach the user to the greatest extent.

The view creation module may support notification entrance creation and view rending, to display the corresponding entrance interface. Specifically, the view creation module may include submodules for creating views corresponding to various operating systems, programming languages, or services. These submodules may be invoked by the various notification entrances of the notification entrance module to create views.

The view creation module may include: a JS card view creation submodule, an SDK card view creation submodule, a notification (Notification) view creation submodule, a Widget card view creation submodule, a Shortcut (Shortcut) view creation submodule, and a Remote Views view creation submodule.

The notification entrance initialization module includes a notification entrance registration submodule and a notification entrance callback submodule. The notification entrance registration submodule is configured to receive registrations from the various notification entrances within the notification entrance module. Notification entrances that have performed registration have the permission to display the service information and can display the service information of the generated application service on the corresponding entrance interfaces. When a notification entrance registers with the notification entrance registration submodule, the notification entrance may also simultaneously register display forms and display specifications that are supported by the notification entrance.

Each time the mobile phone is powered on and started, various notification entrances within the notification entrance module that support reach display may be registered with the notification entrance registration submodule. Notification entrances that have previously initiated registration applications may be invoked to display the service information.

The notification entrance callback submodule is configured to monitor invocation states of various notification entrances. When the first application generates the first application service, in response to a notification entrance invocation instruction at the framework layer, a corresponding notification entrance is invoked for interface display.

The service channel includes a card implementation type, a card ID, and service reception processing, and is used to facilitate channel invocation, card ID transmission, and service distribution.

The framework layer provides an application programming interface (Application Programming Interface, API) and a programming framework for an application at the application layer. The framework layer can receive an indication delivered by the application layer and feed related data back to the application layer, so that the application layer can display the related data. The application framework layer further includes some predefined functions.

Still as shown in FIG. 7A and FIG. 7B, the framework layer includes an intelligence module and a service interaction display framework.

The intelligence module is configured to manage an application service generated by an application. Specifically, the intelligence module may include related functional modules within the mobile phone that provide intelligent services, for managing application services of various applications within the mobile phone.

When detecting that the first application generates the first application service, the intelligence module notifies the service interaction display framework to trigger execution of a display control operation for the first application service.

In one example, when detecting that the first application generates the first application service, the intelligence module also assigns a service identity document (Identity Document, ID) to the first application service. The first application service may be recognized and matched based on the service ID in subsequent procedures of the display control method.

In another example, the intelligence module may also send the service information of the first application service to the service interaction display framework, which then assigns a service ID to the first application service and transfers the service ID to the intelligence module.

In addition, the intelligence module may also determine the importance-urgency level for the first application service. The intelligence module may determine the importance-urgency level of the first application service based on a pre-stored prediction algorithm or prediction model used for predicting importance-urgency levels.

In addition, the intelligence module may further obtain the service information of the first application service and transfer the service information of the first application service to the service interaction display framework. The service information that is of the first application service and that is obtained by the intelligence module is provided by the first application. The intelligence module may directly transfer the service information of the first application service to the service interaction display framework. Alternatively, the intelligence module may obtain, based on the target display forms pre-registered by the first application as supported, view files in a specific form required to display the service information of the first application service in the target display forms, and then transfer the view files corresponding to the target display forms to the service interaction display framework.

The intelligence module may directly transfer packaged view files to the service interaction display framework. Alternatively, the intelligence module may store the packaged view files in a specified shared storage space and notify the service interaction display framework, which may then retrieve the packaged view files from the specified shared storage space.

As shown in FIG. 7A and FIG. 7B, the service interaction display framework includes an interaction specification query module, a service parsing module, a parsing and implementation module, and an interaction notification entrance management module.

The interaction specification query module receives the service ID and the importance-urgency level of the first application service that are sent by the intelligence module. The interaction specification query module queries, based on the pre-stored entrance mapping table (for example, Table 1), the target notification entrances and the target display forms that correspond to the importance-urgency level of the first application service. The interaction specification query module uploads the found target notification entrances and the target display forms that are associated with the first application service, along with the service ID, to the interaction notification entrance management module.

The service parsing module receives the service ID and the service information of the first application service that are sent by the intelligence module. The service information herein may be the packaged view files corresponding to the various target display forms. The service parsing module transfers various service information to the parsing and implementation module.

The parsing and implementation module includes parsing and implementation functional modules in various forms, specifically including:
a dynamic card framework, implementing a dynamic card framework Surface View of launcher views; a Widget framework, where the Widget framework implements a Widget Manager Service (Widget Manager Service); a JS framework implementing a quick service View; a launcher application Launcher Apps service, implementing toast Shortcut Info; a Notification framework, implementing Remote Views; and the like.

These frameworks can obtain corresponding types of view files, parse out to obtain View files for view display, original service information, and the like. The information is uploaded through channels of the notification entrances to the notification entrances, so that the notification entrances can display the corresponding service information.

The interaction notification entrance management module includes ID assignment, interface callback processing, and a service binding module. ID assignment is used to assign a service ID to the first application service. Interface callback processing is used to invoke creation, update, and stopping of interfaces, and monitor start, update, and stop operations of the display control procedure.

In addition, still as shown in FIG. 7A and FIG. 7B, the application layer further includes a status update interface and a life cycle monitoring module. The life cycle monitoring module is configured to monitor the service process of the first application service. During existence of the process of the first application service, the status update interface may be invoked to update the service state of the first application service.

In addition, the framework layer may further include some conventional functional modules, such as a window manager, a content provider, a view system, a resource manager, a notification manager, and the like. These functional modules may cooperatively support the application layer in implementing various display functions.

The hardware abstraction layer may encapsulate a drive program in the kernel layer and provide a calling interface for the application framework layer, shielding implementation details of underlying hardware.

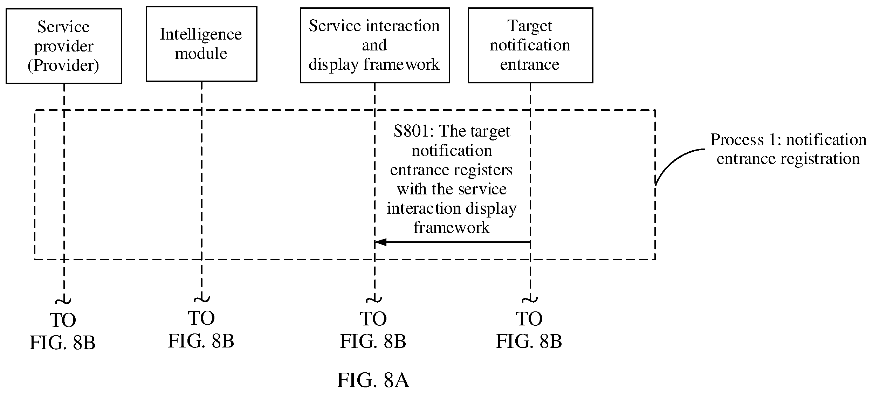

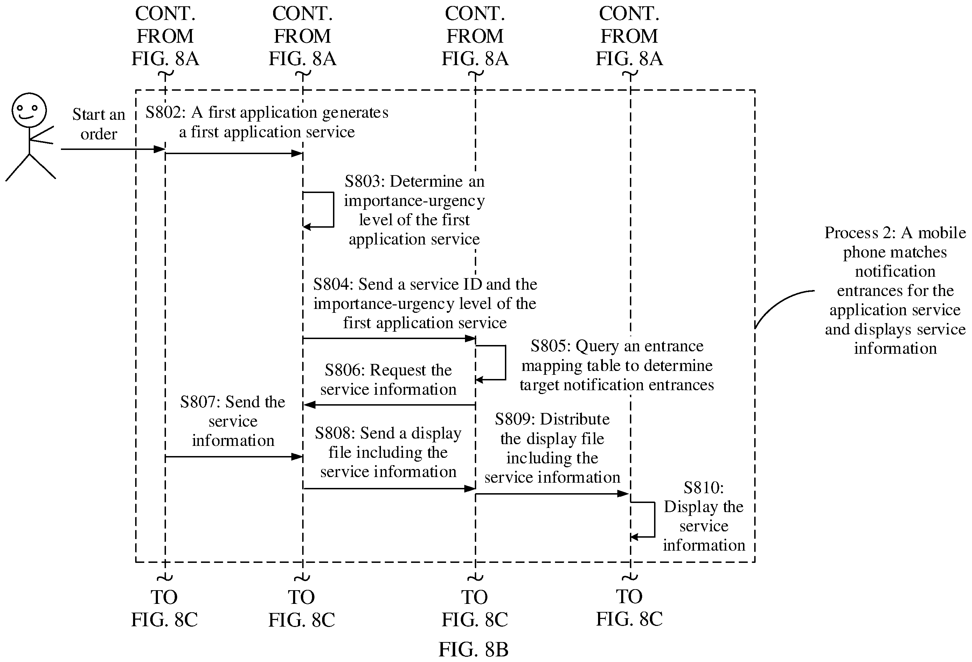

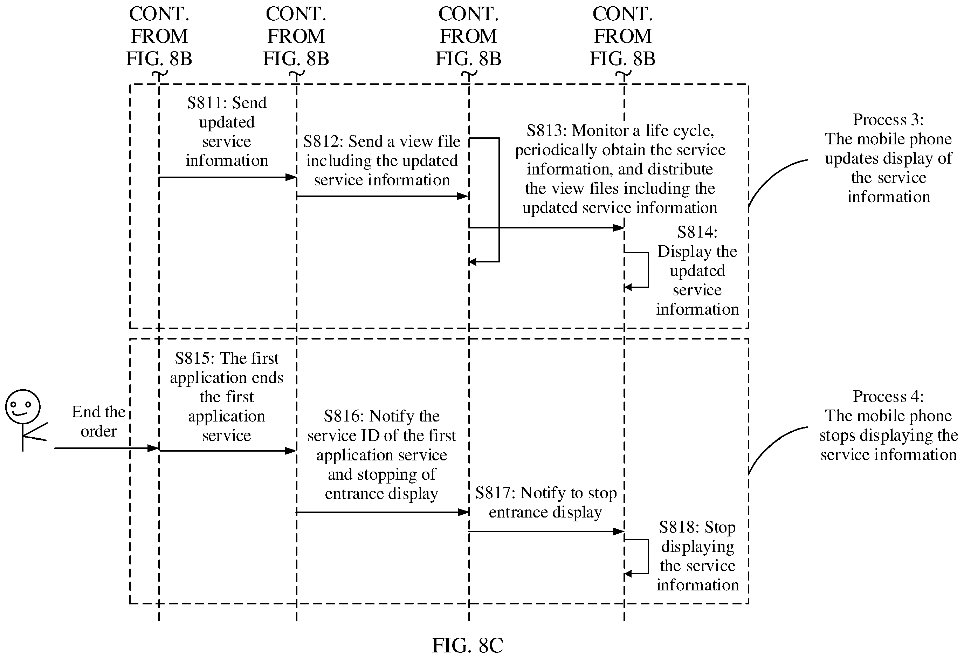

Combined with the software framework provided in FIG. 7A and FIG. 7B, in response to the first application service generated by the first application, the mobile phone displays the service information of the first application service on a plurality of first-type entrance interfaces. FIG. 8 is a schematic flowchart of implementing a display control method by a software framework of the mobile phone. As shown in FIG. 8, performing the display control method by the mobile phone mainly includes: a process 1: notification entrance registration; a process 2 in which the mobile phone matches notification entrances for the application service and displays the service information; a process 3 in which the mobile phone updates display of the service information; and a process 4 in which the mobile phone stops displaying the service information.

The process 1, the process 2, the process 3, and the process 4 that are shown in FIG. 8 respectively correspond to the process 1, the process 2, the process 3, and the process 4 in the foregoing example. The following sequentially describes the four main processes in detail in combination with specific execution modules of the software framework.

It should be noted that the service provider (Provider) herein may be understood as a data provision module that can provide the service information within the first application that generates the first application service. The intelligence module may be understood as an intelligence module bound to the first application or an intelligence module that is integrated on the intelligence side and that is bound to a plurality of applications to manage a plurality of application services generated by the applications. The target notification entrance may be a target notification entrance that is associated with the first application service and that is in the plurality of notification entrances of the notification entrance module.

Process 1: Notification entrance registration.

S801: The target notification entrance registers with the service interaction display framework.

In the process 1, the notification entrance registers with the service interaction display framework, and simultaneously registers display forms and specifications that can be implemented by the notification entrance.

Process 2: The mobile phone matches notification entrances for the application service and displays the service information.

S802: The service provider (Provider) notifies the intelligence module that the first application generates the first application service.

S803: The intelligence module determines the importance-urgency level of the first application service.

S804: The intelligence module sends the service ID and importance-urgency level of the first application service to the service interaction display framework.

S805: The service interaction display framework queries the entrance mapping table to determine the target notification entrances.

S806: The service interaction display framework requests the service information from the intelligence module.

S807: The service provider (Provider) sends the service information to the intelligence module.

S808: The intelligence module sends view files including the service information to the service interaction display framework.

S809: The service interaction display framework distributes the view files including the service information to the target notification entrances.

S810: The target notification entrances display the service information.

Process 3: The mobile phone updates display of the service information.

S811: The service provider (Provider) sends the updated service information to the intelligence module.

S812: The intelligence module sends view files including the updated service information to the service interaction display framework.

S813: The service interaction display framework monitors a life cycle, periodically obtains the updated service information, and distributes the view files including the updated service information to the target notification entrances.

S814: The target notification entrances display the updated service information.

Process 4: The mobile phone stops displaying the service information.

S815: The service provider (Provider) notifies the intelligence module that the first application ends the first application service.

S816: The intelligence module notifies the service interaction display framework of the service ID of the first application service and stopping of entrance display.

S817: The service interaction display framework notifies the target notification entrances to stop entrance display.

S818: The target notification entrances stop displaying the service information.

Based on a user behavior of terminating the order or other reasons causing termination, the first application notifies the intelligence module that the first application ends the first application service. The intelligence module sends the service ID of the first application service and an instruction of stopping notification entrance display to the service interaction display framework. The service interaction display framework indicates the notification entrances to stop notification entrance display, and the notification entrances stop displaying the service information.

In addition, it is considered that the visible state of each target notification entrance may vary under different use states, affecting the display capability of the entrance interface.

If the current entrance interface is invisible, the service interaction display framework may not distribute the service information to the corresponding invisible notification entrance. Alternatively, the service interaction display framework may distribute the service information to a system cabinet entrance. After the notification entrance receives the service information, if an entrance interface is currently invisible, a view corresponding to the service information may not be generated or not displayed. Only when the entrance interface of the notification entrance switches to a visible state, the notification entrance displays the view of the service information.

For example, when a taxi-hailing application generates a taxi-hailing service, the associated notification entrances determined include the negative screen, the notification center, and the launcher. In this case, if the mobile phone currently displays the launcher interface, interface states of the negative screen and the notification center are invisible. The service interaction display framework may not distribute the service information to the negative screen and the notification center, and delivers the service information to the negative screen or the notification center for display only when the mobile phone switches to the negative screen or the notification center. Alternatively, the service interaction display framework may distribute the service information to the negative screen and the notification center according to the specification. The negative screen or the notification center render the view and display the service information on corresponding interfaces. In this case, when the negative screen is visible, the service information displayed on the negative screen can reach the user.

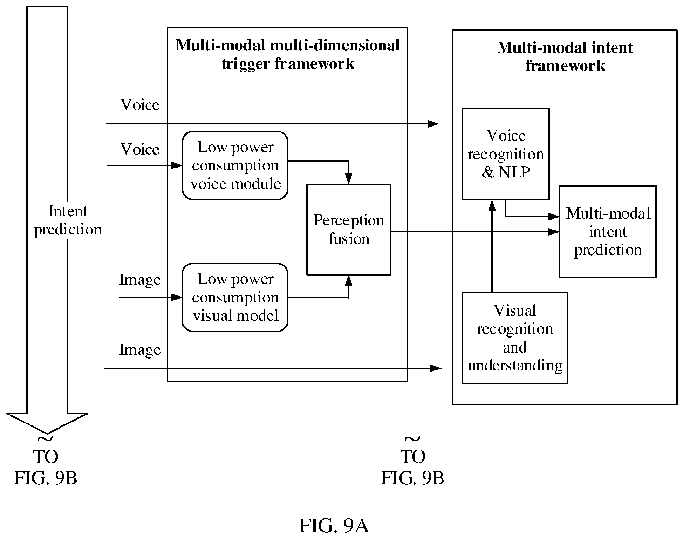

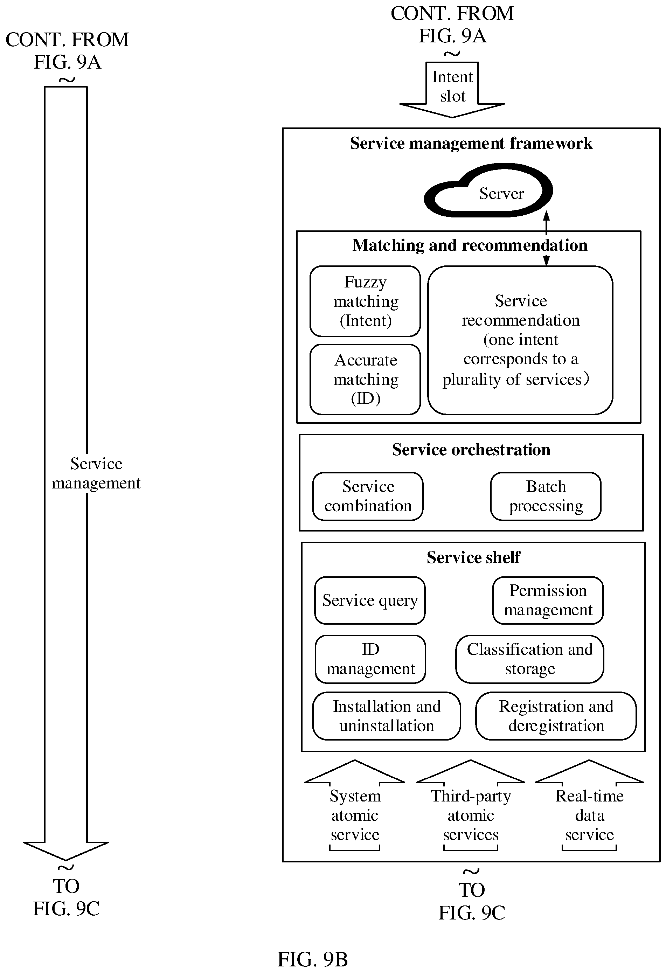

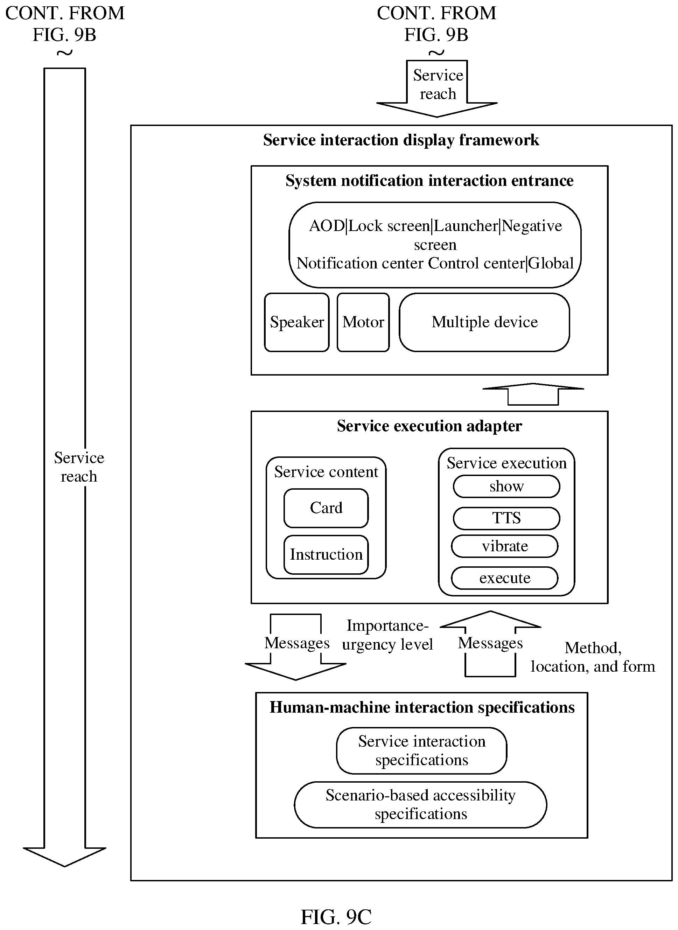

Corresponding to the detailed example shown in FIG. 8, FIG. 9A, FIG. 9B, and FIG. 9C are summarization diagrams of implementing a display control method by a software framework. The display control procedure may mainly include three stages: intent prediction, service management, and service reach.

The intelligence side within the mobile phone performs intent prediction based on an application service generated by an application. The intelligence side includes a multi-modal multi-dimensional trigger framework and a multi-modal intent framework. The multi-modal multi-dimensional trigger framework includes a low power consumption voice module and a low power consumption visual model. The low power consumption voice model acquires voice within a preset range and performs voice recognition. The low power consumption visual model acquires images within a preset range and performs visual recognition. A result of recognition by the low power consumption voice model and a result of recognition by the low power consumption visual model are sent to the multi-modal intent framework through perception fusion.

The multi-modal intent framework performs voice recognition and natural language processing (Natural Language Processing, NLP), and visual recognition and understanding separately, and finally obtains a prediction result of an intent of the user through multi-modal intent prediction. The predicted intent herein may include a user intent indicating to generate and display an order, and a user intent hoping to display related service information. The multi-modal intent framework sends the predicted intent to the service management framework based on an intent slot.

The service management framework may perform fuzzy matching (Intent) or accurate matching (ID) on the intent predicted by the multi-modal intent module, and perform service recommendation. One predicted intent may correspond to a plurality of services. Then, the service management framework further performs service orchestration, such as service combination or batch processing. The service management framework further provides capabilities of service query, permission management, ID management, classification and storage, installation, uninstallation, registration, and deregistration. Finally, the service management framework generates display services of application services, where the display services may be mainly divided into system atomic services, third-party atomic services, and real-time data services, and delivers the services to the service interaction display framework.

The service interaction display framework includes system interaction notification entrances, a service execution adapter, and human-machine interaction specifications. The system interaction notification entrances mainly display various notification entrances. The service execution adapter is configured to: match notification entrances, display forms, display methods, and the like, query importance-urgency levels of application services based on the human-machine interaction specifications, and determine display methods, notification entrance locations, display forms, and the like of the service information. The human-machine interaction specifications include service interaction specifications and scenario-based accessibility specifications.

In this way, system services and third-party services are registered and managed within the service management framework. Intent prediction is performed by the intelligence side, which then sends intent services to the service interaction display framework. The service interaction display framework parses the intents and services, and finally uses the service interaction specifications to determine the notification entrances for display and card sizes, and invokes the notification entrances for display to reach the user.

The procedures from the generation of the application service by the electronic device to the invocation of the notification entrances to display the service information of the application service are described in the foregoing solutions. The following describes, by using different embodiments, several main refined solutions that relate to data transmission display during the execution of the foregoing display control method. It should be noted that the subsequent embodiments 2 to 4 are technical solutions implemented based on the foregoing Embodiment 1.

### Embodiment 2

Before the mobile phone performs the step of S504, that is, before the mobile phone displays the service information of the first application service in the target display form on the entrance interface of the target notification entrance, a view file corresponding to the target display form first needs to be obtained.

If an electronic device uses a Widget architecture, applications installed on the electronic device support a display form of the generated service information to be a Widget card. Under the Widget architecture, if a notification entrance displays the service information by using the Widget card, a view file corresponding to the Widget card, for example, a serialized file in the Remote Views format, needs to be used.

In one example, the notification entrance has a capability of generating the view file corresponding to the Widget card. The notification entrance may obtain the service information, and generate the view file corresponding to the Widget card based on the service information. The notification entrance then renders the view file corresponding to the Widget card, to display the service information by using the Widget card.

In another example, the notification entrance does not have the capability of generating the view file corresponding to the Widget card. The notification entrance needs to obtain a first application or another module within the electronic device to generate the view file corresponding to the Widget card, and the view file is transferred to the notification entrance. This embodiment mainly explains a specific implementation of this example.

In other examples, the electronic device may also use an architecture other than the Widget architecture, and a plurality of types of notification entrances of the electronic device also support card protocols of types other than the Widget card, such as a JS card corresponding to a JS architecture. Details are not described.

As shown in FIG. 7A and FIG. 7B and FIG. 8 in the foregoing embodiment, the service information of the first application service is generated by the first application, and provided by the service provider (Provider) for the service interaction display framework, which distributes the service information to the associated target notification entrances for display. The service provider (Provider) may be a data provision component of the first application or a data provision component of the intelligence module. It should be noted that different application services have different service provides (Provider).

In a specific implementation, the intelligence module monitors application services generated by the applications. When detecting that the first application generates the first application service, the intelligence module determines whether the first application has pre-registered the display form of the Widget card. If determining that the first application has pre-registered the display form of the Widget card, the intelligence module determines that the first application service is designated to be displayed by using the Widget card.

The intelligence module notifies the service interaction display framework, and provides the service interaction display framework with identification information of the service provider (Provider) corresponding to the first application service. The service interaction display framework may request the service information of the first application service from the service provider (Provider) based on the identification information of the service provider (Provider).

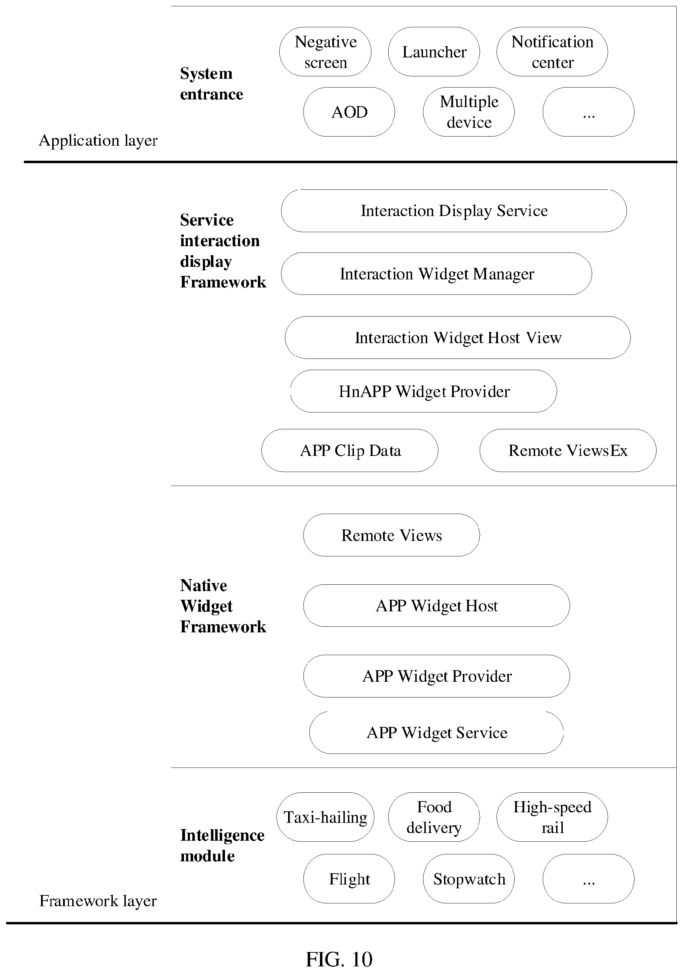

FIG. 10 is a diagram of another software framework of a Widget architecture corresponding to an electronic device. A framework layer includes the service interaction display framework, a native Widget framework (Android^{™} Open Source Project, AOSP FWK), and the intelligence module. The intelligence module may obtain the service information of the application services, such as a taxi-hailing service, a food delivery service, a high-speed rail itinerary service, a flight itinerary service, and the like.

The service interaction display framework performs operations of the host side, namely, the Host end in the native Widget framework. Through the Widget service of the native Widget framework, the service interaction display framework requests the service information from the intelligence module. The service provider (Provider) of the intelligence module provides the service information of the first application service for the native Widget framework. The native Widget framework generates the view file corresponding to the Widget card based on the service information. The service interaction display framework obtains the view file that corresponds to the Widget card and that is generated by the native Widget framework, and distributes the view file to the associated target notification entrances. The target notification entrance obtains the view file corresponding to the Widget card, and then invokes a related interface provided by the service interaction display framework, to render the view file corresponding to the Widget card into a View (View), thereby displaying the service information of the first application service in the Widget card format.

The mobile phone creates a corresponding process for each service. Process isolation exists between processes of different services.

For example, the first application of the mobile phone generates the first application service, and a corresponding first process is created for the first application service. The interaction display framework of the mobile phone displays the service information of the first application service through the plurality of target notification entrances. This is a separate display control service, different from the first application service, and the mobile phone also creates a corresponding second process for the display control service. Process isolation exists between the first process and the second process, and process isolation causes the second process to fail to directly obtain accurate service information in physical storage space of the first process. The mobile phone may enable an inter process communication (Inter-Process Communication, IPC) technology to obtain the service information of the first application service.

The intelligence module may encapsulate the service information of the first application service into a specific format file that supports cross-process transmission and provide the file for the interaction display framework. The specific format file supporting cross-process transmission may be a serialized file in the Remote Views format to which the Widget card is applicable, or may be a serialized file in the JSON Views format that may be used for the JS card.

The intelligence module transmits the encapsulated view file across processes to ensure that the view file transmitted to the notification entrance is accurate and can be rendered for display, so that the notification entrance can display the service information of the first application service in the corresponding display form.

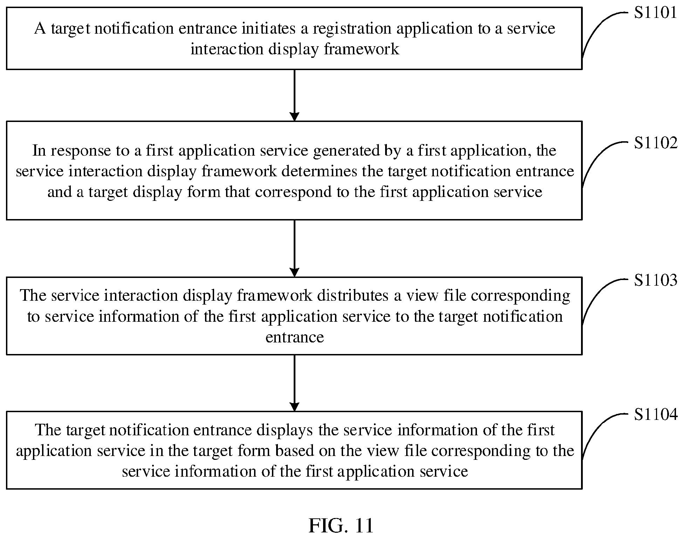

FIG. 11 is a schematic flowchart of performing a display control method based on a Widget architecture. As shown in FIG. 11, the provided display control method mainly includes the following steps:

S1101: The target notification entrance initiates a registration application to the service interaction display framework.

S1102: In response to the first application service generated by the first application, the service interaction display framework determines the target notification entrance and the target display form that correspond to the first application service.

S1103: The service interaction display framework distributes the view file corresponding to the service information of the first application service to the target notification entrance.

S1104: The target notification entrance displays the service information of the first application service in the target form based on the view file corresponding to the service information of the first application service.

In one example, the target display form corresponding to the first application service includes the Widget card, and the view file corresponding to the service information of the first application service includes the view file in the Remote Views format.

The service interaction display framework determines that the first application service supports display by using the Widget card, and first invokes the native Widget framework to process the service information of the first application service into the view file in the Remote Views format. The native Widget framework transmits the view file in the Remote Views format to the service interaction display framework across processes via a Remote Views channel. The service interaction display framework then distributes the view file in the Remote Views format to the target notification entrance.

There are a plurality of target notification entrances determined by the service interaction display framework. The service interaction display framework may distribute the view file in the Remote Views format to the plurality of target notification entrances that support Widget card display. These target notification entrances may display the service information of the first application service by using the Widget card.

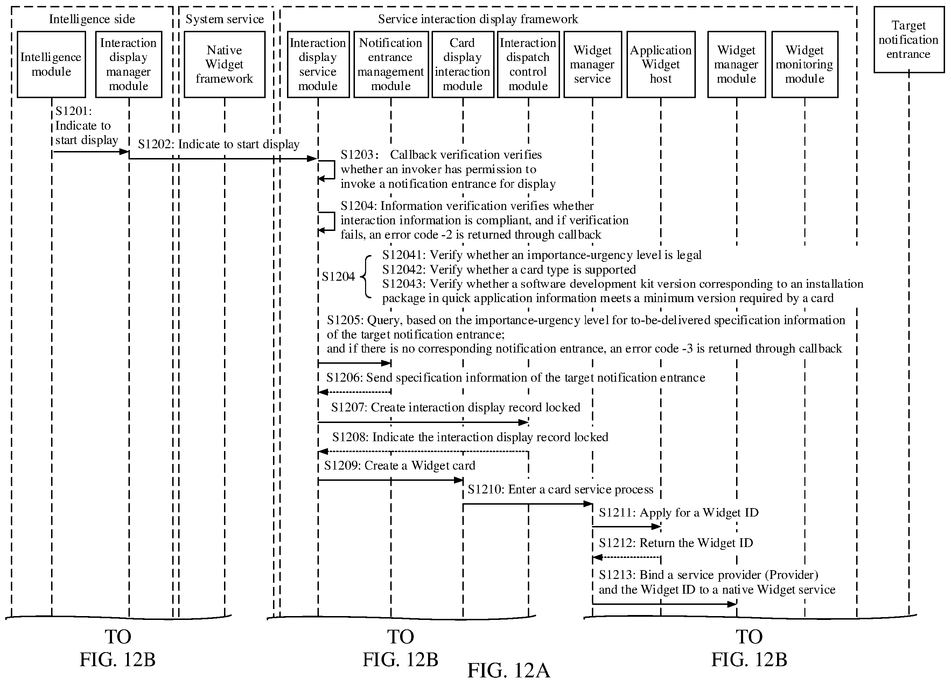

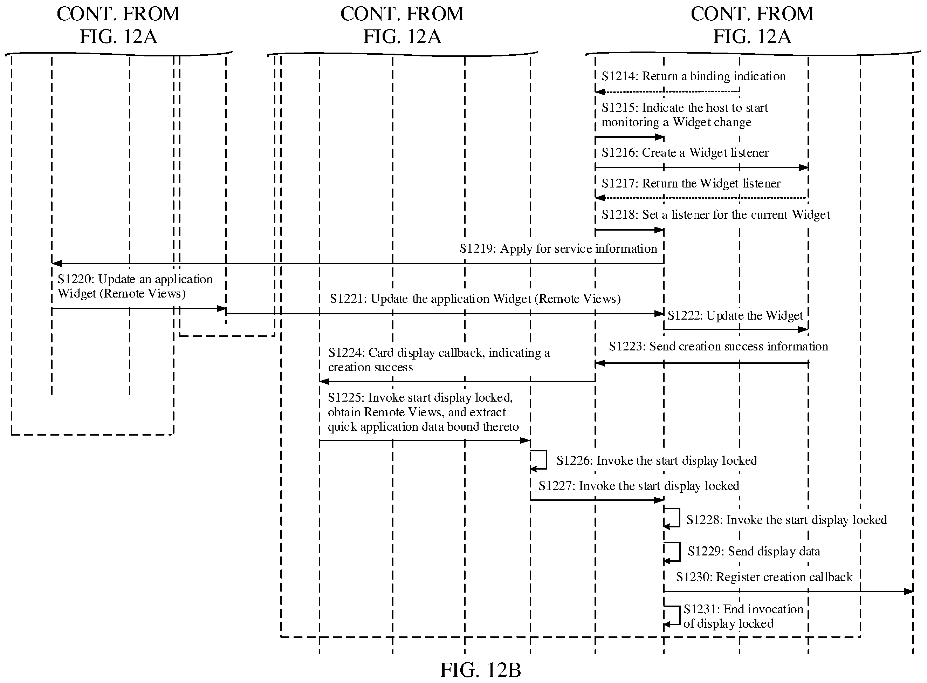

FIG. 12A and FIG. 12B are diagrams of interaction of performing a display control method based on a Widget architecture.

S1201: The intelligence module on the intelligence side indicates an interaction display manager module to start display.

S1202: The interaction display manager module indicates an interaction display service module to start display.

The intelligence module detects that the first application generates the first application service, indicates the interaction display manager module (Interaction Display Manager) to start display, and the interaction display manager module indicates the interaction display service module (Interaction Display Service) of the service interaction display framework to start display, where carried input parameter interaction information includes quick application information (App Clip Info).

S1203: The interaction display service module performs callback verification, to verify whether an invoker has permission to invoke the notification entrance for display.

S1204: The interaction display service module performs information verification, to verify whether the interaction information is compliant, and if verification fails, an error code -2 is returned through callback. S1204 includes:
S12041: Verify whether an importance-urgency level is legal.
S12042: Verify whether a card type is supported.
S12043: Verify whether a software development kit version corresponding to an installation package in the quick application information meets a minimum version required by the card.

Callback verification mainly verifies whether the invoker has permission to invoke the notification entrance for display.

Information verification mainly verifies whether the interaction information is qualified. If validation fails, an error code is returned through callback. For example, the error code may be -2.

Main content of information verification includes: verifying whether the importance-urgency level is legal, and verifying whether the software development kit (Software Development Kit, SDK) version corresponding to the installation package in the quick application information meets the minimum version required by the card.

S1205: The interaction display service module queries, based on the importance-urgency level, the notification entrance management module for to-be-delivered specification information of the target notification entrance, and if there is no corresponding notification entrance, an error code -3 is returned through callback.

S1206: The notification entrance management module sends the specification information of the target notification entrance to the interaction display service module.

S1207: The interaction display service module indicates an interaction dispatch control module to create interaction display record locked (Create Interaction Display Record Locked).

S1208: The interaction dispatch control module indicates the interaction display record locked to the interaction display service module.

S1209: The interaction display service module indicates a card display interaction module to create the Widget card.

S1210: The card display interaction module indicates a Widget manager service module to enter a card service process.

S1211: The Widget manager service module indicates an application Widget host to apply for a Widget ID.

S1212: The application Widget host returns the Widget ID to the Widget manager service module.

S1213: The Widget manager service module indicates the Widget manager service module to bind the service provider (Provider) and the Widget ID to the native Widget service.

S1214: The Widget manager service module returns a binding indication to the Widget manager service module.

S1215: The Widget manager service module indicates the application Widget host to start monitoring a Widget change.

S1216: The Widget manager service module indicates a Widget monitoring module to create a Widget listener.

S 1217: The Widget monitoring module returns the Widget listener to the Widget manager service module.

S1218: The Widget manager service module indicates the application Widget host to set a listener for the current Widget.

S1219: The application Widget host applies for the service information from the intelligence module.

S1220: The intelligence module indicates the native Widget framework to update the application Widget, and process the application Widget into a Remote Views file.

S1221: The native Widget framework indicates the application Widget host to update the application Widget, and send the Remote Views file through a Remote Views channel.

S1222: The application Widget host indicates the Widget monitoring module to update the Widget.

S1223: The Widget monitoring module sends creation success information to the Widget manager service.

S1224: The Widget manager service notifies the interaction display service module to perform card display callback, indicating a creation success.

S1225: The interaction display service module indicates the interaction dispatch control module to invoke start display locked, obtain Remote Views, and extract the quick application data bound thereto.

S1226: The interaction dispatch control module invokes the start display locked.

S1227: The interaction dispatch control module indicates the application Widget host to invoke the start display locked.

S1228: The application Widget host invokes the start display locked.

S1229: The application Widget host sends display data.

S1230: The application Widget host indicates the target notification entrance to register creation callback.

S1231: The application Widget host ends invocation of display locked.

The following describes in detail the solutions of the foregoing process 1 to process 3 separately in the Widget architecture.

Corresponding to the notification entrance registration operation in the foregoing process 1, the notification entrance needs to be registered with the service interaction display framework and provide forms and specifications supported by the notification entrance for display. After a service is created, when an expected notification entrance is found from an interaction rule engine, comparison with registration information of the notification entrance further needs to be performed. The notification entrance can truly display the service only when the registration information of the notification entrance supports the corresponding form and specification.

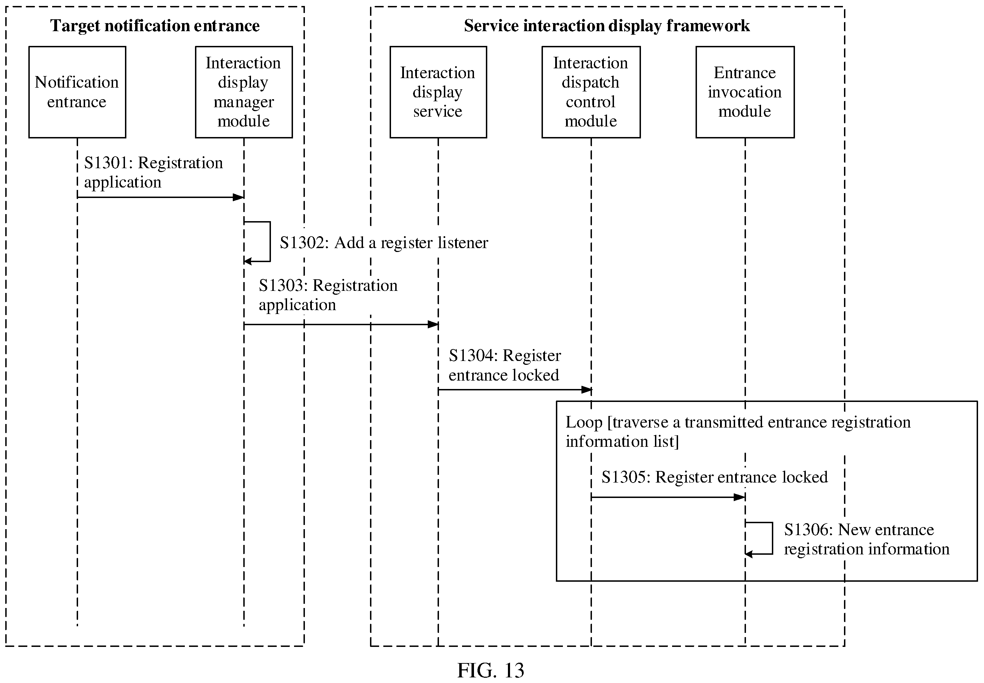

Specifically, as shown in FIG. 13, the following steps are mainly included:
S1301: Registration application.

The target notification entrance registers a notification entrance (Register Entrance) with the interaction display manager module (Interaction Display Manager) and verifies input parameters, and -2 is returned if the input parameters are empty.

S1302: Add a register listener.

The interaction display manager module adds the register listener (Add Register Listener). A server is verified, and -1 is returned if no service can be obtained. The registration information is verified, and -2 is returned if registration has been performed.

S1303: Registration application.

The interaction display manager module initiates the registration application to the interaction display service module, and registers notification entrance locked with the interaction dispatch control module. The interaction dispatch controller verifies permission of the invoker, and -2 is returned if the invoker has no permission. Input parameters are verified, and -2 is returned if the input parameters are empty.

S 1304: Register entrance locked.

S1305: Register entrance locked.

S1306: New entrance registration information.

The interaction dispatch controller traverses a transmitted notification entrance registration information list, and sequentially registers the notification entrances in sequence until all notification entrances in the notification entrance registration information list are registered. In the traversal process, if a transmitted notification entrance does not exist on the local device, the notification entrance is skipped.

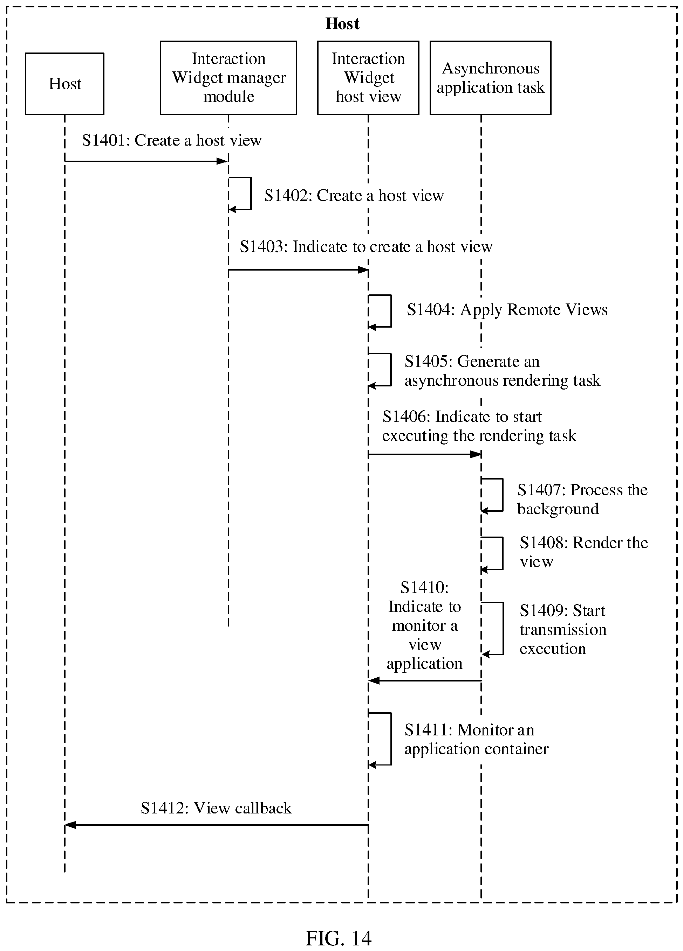

Corresponding to the foregoing process 2, the notification entrance displays the Widget card. As shown in FIG. 14, the following steps are mainly included:
S1401: Create a host view.
S1402: Create a host view.
S1403: Indicate to create a host view.

The host indicates the interaction Widget manager to create the host view. The interaction Widget manager indicates an interaction Widget host view module to create the host view.

S1404: Apply Remote Views.

S 1405: Generate an asynchronous rendering task.

S1406: Indicate to start executing the rendering task.

The interaction Widget host view module applies (apply) the Remote Views and renders the asynchronous task (inflate Async), and indicates an asynchronous application task to start executing the task (Start Task On Executor).

S 1407: Process the background.

S1408: Render the view.

S1409: Start transmission execution.

S 1410: Indicate to monitor the view application.

S1411: Monitor an application container.

S1412: View callback.

The asynchronous task application processes the background (doLn Background), renders the view (inflate View), starts transmission execution (On Post Execute), and then triggers the interaction Widget host view to monitor the view application (OnView Applied, View Apply Listener), and send the view application to the host for view callback (View Callback.onView Created).

Corresponding to the foregoing process 3, the notification entrance displays updated service information.

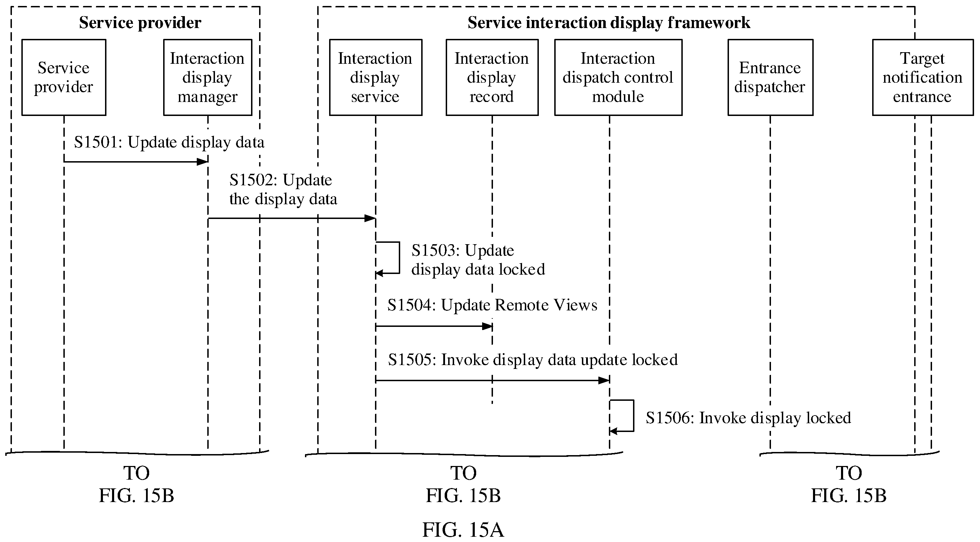

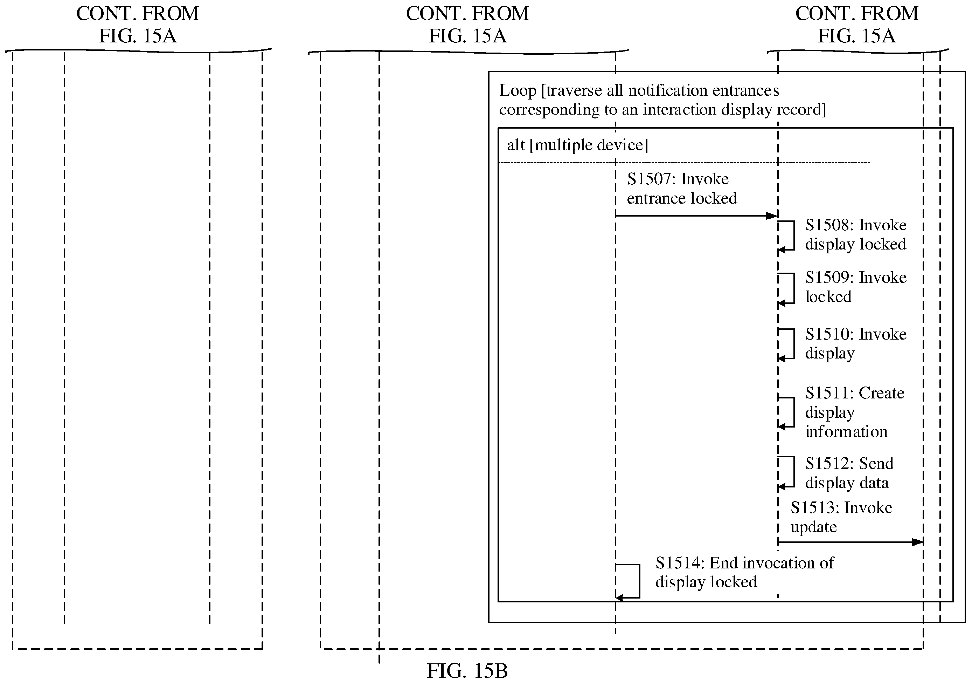

Service updates include two cases. In one case, the service provider performs active update. In the other case, the service interaction display framework performs automatic update. As shown in FIG. 15A and FIG. 15B, the service interaction display framework provides an update interface(Update Display Data()). The service provider can actively invoke the interface to complete data update. The following steps are mainly included:
S1501: The service provider indicates the interaction display manager module to update display data.
S1502: The interaction display manager module indicates the interaction display service module to update the display data.
S1503: The interaction display service module updates display data locked.

The service provider notifies the interaction display manager (Interaction Display Manager) of the service provider to update the display data, obtain the latest Remote Views from the service provider (Provider), write the latest Remote Views into the quick application data App Clip Data, and transmit the quick application data.

S1504: The interaction display service module notifies an interaction display record to update the Remote Views.

S1505: The interaction display service module notifies the interaction dispatch control module to invoke display data update locked.

S1506: The interaction dispatch control module invokes display locked.

The interaction display service (Interaction Display Service) of the service interaction display framework updates display data locked, and updates the Remote Views into interaction information (Interaction Message). The interaction display service invokes display data update locked, and the interaction dispatch controller (Interaction Dispatch Controller) invokes display locked (Dispatch Display Locked).

S1507: The interaction dispatch control module notifies an entrance invocation module to invoke entrance locked.

S1508: The entrance invocation module invokes display locked.

S1509: The entrance invocation module invokes locked.

S1510: The entrance invocation module invokes display.

S1511: The entrance invocation module creates display information.

S1512: The entrance invocation module sends display data.

S1513: The entrance invocation module notifies the entrance to invoke update.

S1514: The interaction dispatch control module ends invocation of display locked.

The interaction dispatch controller sequentially traverses all notification entrances corresponding to the interaction display record, to complete data update of each notification entrance. In each traversal process, the interaction dispatch controller invokes notification entrance locked and sends display information, to re-encapsulate the Remote Views into the interaction display information. When receiving callback applying for an update, the notification entrance obtains Remote Views from the input parameter interaction display information, and ends invocation of the display information.

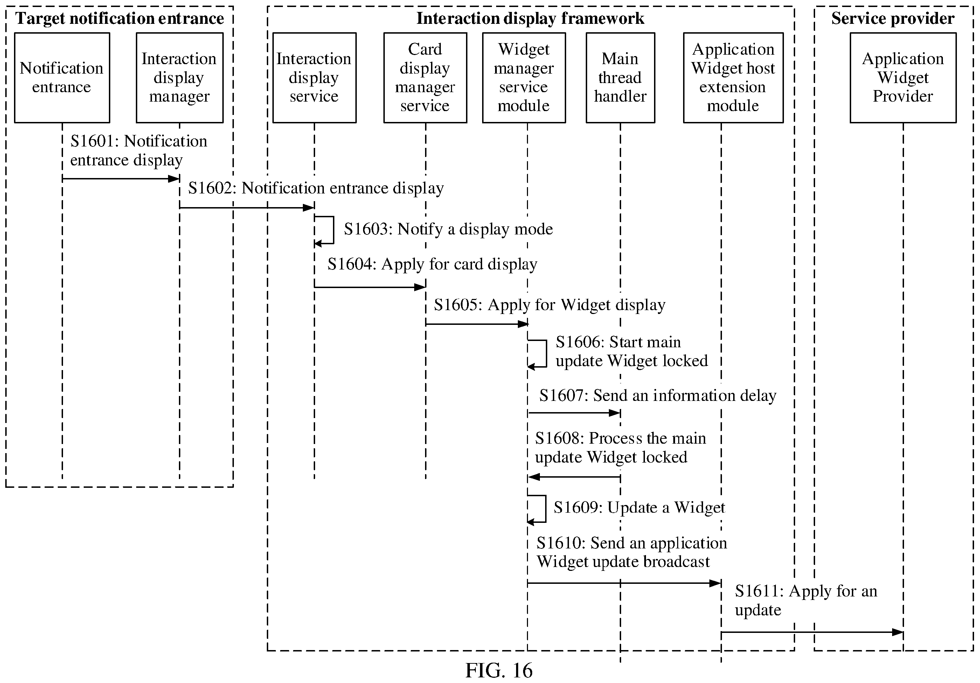

FIG. 16 is a schematic flowchart of automatically updating Widget card display by the interaction display framework. The following steps are mainly included:
S1601: The notification entrance indicates the interaction display manager module to display.
S1602: The interaction display manager module notifies the interaction display service module to perform notification entrance display.
S1603: The interaction display service module notifies a display mode.
S1604: The interaction display service module applies for a card from a card display manager service module.
S1605: The card display manager service module applies for Widget display from the Widget manager service module.
S1606: The Widget manager service module starts main update Widget locked.
S1607: The Widget manager service module sends an information delay to a main thread handler.
S1608: The main thread handler indicates the Widget manager service module to process the main update Widget locked.
S1609: The Widget manager service module updates the Widget.
S1610: The Widget manager service module sends an application Widget update broadcast to an application Widget host extension module.
S1611: The application Widget host extension module applies for an update from an application Widget Provider.

The service interaction display framework further provides interfaces Notify Display Showed (Notify Display Showed) () and Notify Display Hidden (Notify Display Hidden) (). The notification entrance side needs to invoke Notify Display Showed () when a card (capsule) is visible to the user, and invoke Notify Display Hidden () when the card (capsule) is invisible to the user, to notify the service interaction display framework of visibility of the card (capsule).

When the notification entrance side invokes Notify Display Showed () to notify the service interaction display framework that a particular card (capsule) is visible to the user, the service interaction display framework sets, based on the importance-urgency level of the service corresponding to the card, an automatic update cycle and periodically (sending update broadcasts through the native Widget mechanism) to notify the service provider (Provider) to update the data.

**In** a Widget card scenario, the service provider (Provider) inherits from the native App Widget Provider. After receiving the update broadcast, the Provider creates Remote Views based on latest service data, invokes a native application Widget manger (App Widget Manager) and an update application Widget (Update App Widget), and transmits the Remote Views. The subsequent procedure is similar to the service creation procedure: The display framework, serving as the Host end in the native Widget system, obtains the Remote Views, and then queries, in the interaction rule engine based on the importance-urgency level of the service, for expected notification entrances, then matches the notification entrances with registration information of the notification entrances, distributes the Remote Views to the corresponding notification entrances, and finally, the notification entrance side uses the Remote Views to complete an update procedure of the Widget card.

The display control method provided in this embodiment provides the display control procedure of the Widget card in the Widget architecture. The service interaction display framework, serving as the host (Host) end, obtains, through the native Widget framework, the Remote Views transmitted from the Provider end, distributes the Remote Views to the corresponding notification entrances, and the notification entrances perform display.

### Embodiment 3

When the mobile phone performs the step of S503, a target determined by the mobile phone may include a capsule and a card. The mobile phone needs to obtain a view file corresponding to the capsule and a view file corresponding to the card.

In one example, the mobile phone supports display in two display forms: a Widget card and the capsule, and can simultaneously transmit the view file corresponding to the card and the view file corresponding to the capsule. In a Widget framework, using Widget card data as a basis, the mobile phone can also implement data transmission in other display forms.

To display a Widget card by a notification entrance, the notification entrance may obtain view data transmitted directly through a Remote Views channel, and invoke a Remote ViewsEx extension interface of a service interaction display framework, to display the Widget card. The solution in which the notification entrance displays a capsule is different from the solution of displaying a Widget card. The notification entrance needs to obtain service information that has not been serialized and display the service information according to display rules of the notification entrances. The display rules of the notification entrances may be customized by the notification entrances, including keep-out zone display, black background display, and the like, and may be specifically determined by preset rules for displaying capsules by the notification entrances of the electronic device.

Still with reference to the software framework in FIG. 10, the service interaction display framework adds two functional modules: Remote ViewsEx and APP Clip Data. Remote ViewsEx is used to display a Widget card, and APP Clip Data is used to display a capsule and a multiple device.
1. Each service provider (Provider) provides Remote Views of a plurality of sizes of cards by inheriting from an application Widget provider (HnApp Widget Provider).
2. Each service provider (Provider) transmits (App Clip Data) of a capsule and a multiple device (for example, a watch) into extension fields of the Remote Views through a Remote ViewsEx extension interface.
3. Each service provider (Provider) transfers the Remote Views to an interaction display service (Interaction Display Service) of the service interaction display framework through interfaces related to an application Widget service (App Widget Service).
4. The service interaction display framework transfers the card view data Remote Views or the quick application data App Clip Data to a host.
5. If the host obtains the Remote Views, the host may use an interaction Widget manager (Interaction Widget Manager) to convert the Remote Views into a common card view (View) for display.
6. If the host obtains the quick application data App Clip Data, the host may parse fields of the App Clip Data by itself, and display the data based on preset user experience (User eXperience, UX) design of the electronic device. The quick application data App Clip Data includes important service data, such as a service logo (logo), a service progress, a service brand color, and the like.

If the first application service is a taxi-hailing service, the quick application data App Clip Data includes a service logo, a license plate number, a distance between the taxi and the passenger, an estimated time of arrival, a current distance traveled, a total trip distance, a car color, total ride types, and other data of the taxi-hailing service.

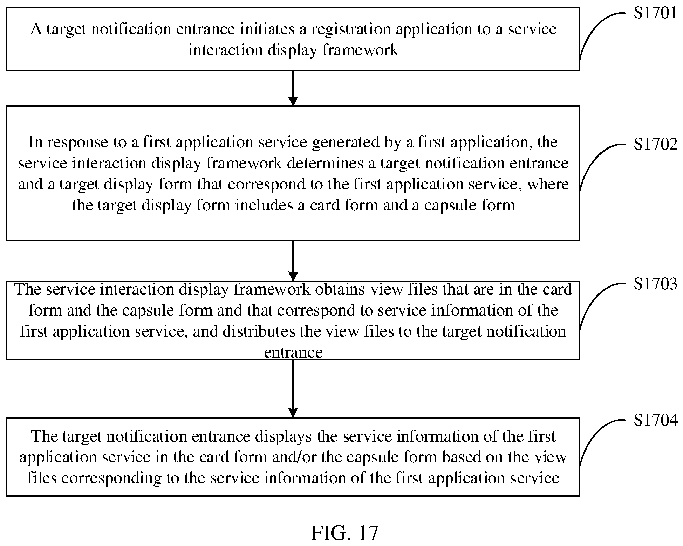

FIG. 17 is a schematic flowchart of a display control method provided in this embodiment, and shows a specific process of the display control method of displaying a card and a capsule at the same time. As shown in FIG. 17, the provided display control method mainly includes the following steps:
S1701: A target notification entrance initiates a registration application to the service interaction display framework.
S1702: In response to a first application service generated by a first application, the service interaction display framework determines a target notification entrance and a target display form that correspond to the first application service, where the target display form includes a card form and a capsule form.
S1703: The service interaction display framework obtains view files that are in the card form and the capsule form and that correspond to service information of the first application service, and distributes the view files to the target notification entrance.
S 1704: The target notification entrance displays the service information of the first application service in the card form and/or the capsule form based on the view files corresponding to the service information of the first application service.

The service interaction display framework simultaneously obtains the view file corresponding to the card form and the view file corresponding to the capsule form, and transmits the view files to the target notification entrance. The target notification entrance may display the service information of the first application service only in the card form, or may display the service information of the first application service only in the capsule form.

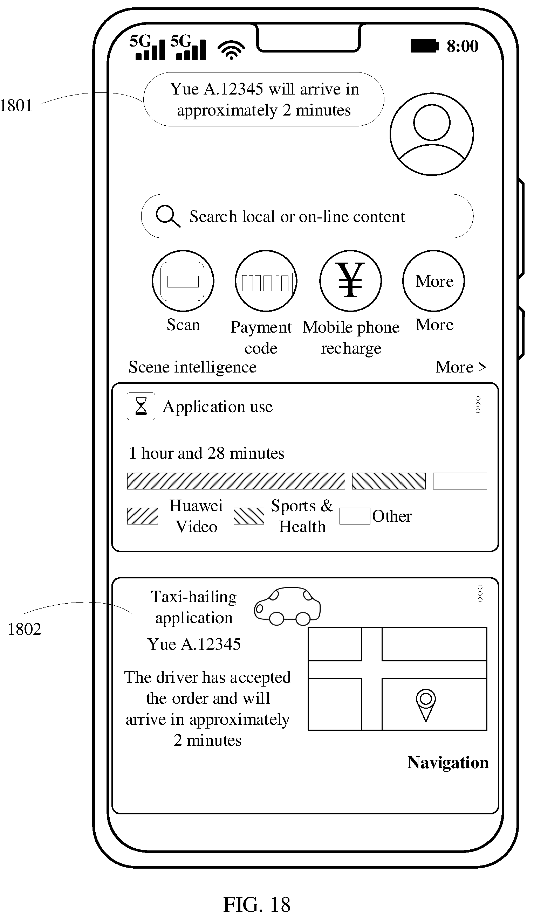

In one example, as shown in FIG. 18, the target notification entrance is a negative screen. The negative screen may simultaneously display the service information of the first application service in a capsule form 1801 and a card form 1802.

The mobile phone supports a Widget card. The view file corresponding to the card form may be a view file that is in a Remote Views format and that supports the Widget card. The view file supporting capsule display for the mobile phone may be a view file in a quick application file App Clip Data format. During data transmission, the mobile phone may transmit the view file in the Remote Views format and the view file that is in the App Clip Data format and that supports capsule display to the target notification entrance across processes by using the Remote Views channel.

The target notification entrances that are associated with the first application service and that are determined by the mobile phone may include at least two notification entrances in a launcher, a negative screen, a quick application center, a notification center, a control center, a status bar, a lock screen interface, and an always on display AOD interface. The mobile phone may display entrance interface of different notification entrances in response to different user operations. When the mobile phone switches between entrance interfaces of different notification entrances, if a notification entrance to which the mobile phone switches for display is the target notification entrance, the service information of the first application service is displayed at the notification entrance.

In the display control method provided in this embodiment, after the first application generates the first application service, the service information of the first application may be displayed at a plurality of notification entrances, to reach the user. In a running process of the first application service, the mobile phone can continuously display the service information of the taxi-hailing service through different notification entrances even if the user switches to a plurality of different entrance interfaces through a plurality of operations.

In one example, for the step of S1704 performed by the mobile phone, refer to the steps of S203 and S204 in the foregoing embodiment. The mobile phone switches between different target notification entrances to display the service information of the first application service in response to the second operation and the third operation separately.

It should be noted that the second operation and the third operation mentioned above are both used to refer to user input operations for switching an entrance interface of a notification entrance. The second operation may be a voice input operation or a touch operation. The second operation and the third operation may be same operations or may be different operations.

If the second operation and the third operation are the same operations, it indicates that the first notification entrance and the second notification entrance entered by the mobile phone are same notification entrances. In other words, the mobile phone enters an entrance interface of one notification entrance in response to one operation of the user, and the mobile phone displays the service information of the first application service simultaneously by using the card and the capsule.

If the second operation and the third operation are different operations, it indicates that the first notification entrance and the second notification entrance entered by the mobile phone are different notification entrances. However, both of the two notification entrances are the target notification entrances associated with the first application service. Both the two notification entrances can display the service information of the first application service, but display forms of entrance interfaces of the two types of notification entrances are different. In response to the second operation, the mobile phone enters the entrance interface of the first notification entrance, and displays the service information of the first application service by using the card. In response to the third operation, the mobile phone enters the entrance interface of the second notification entrance, and displays the service information of the first application service by using the capsule.

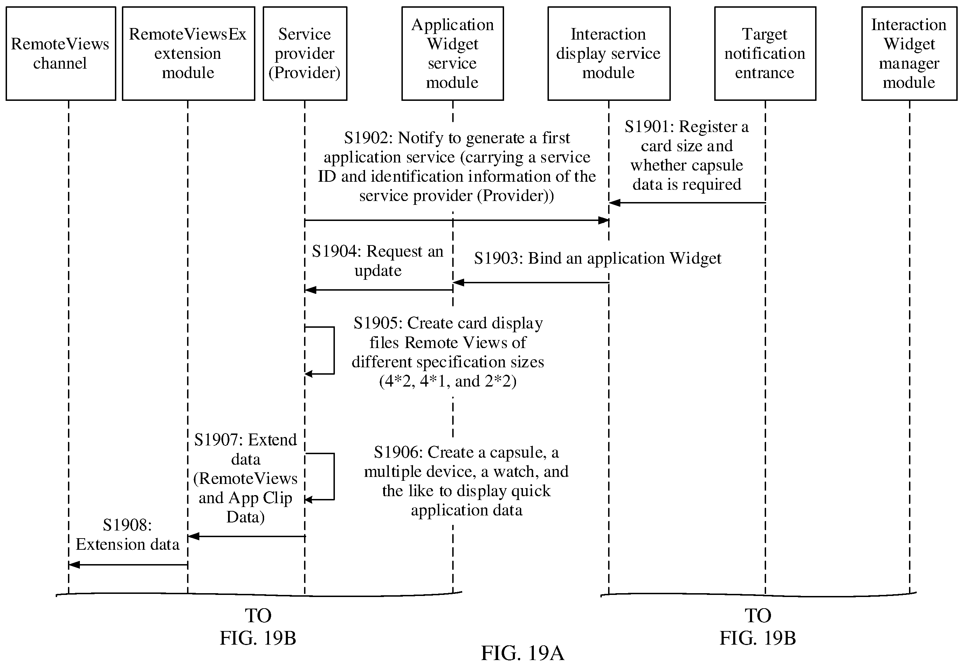

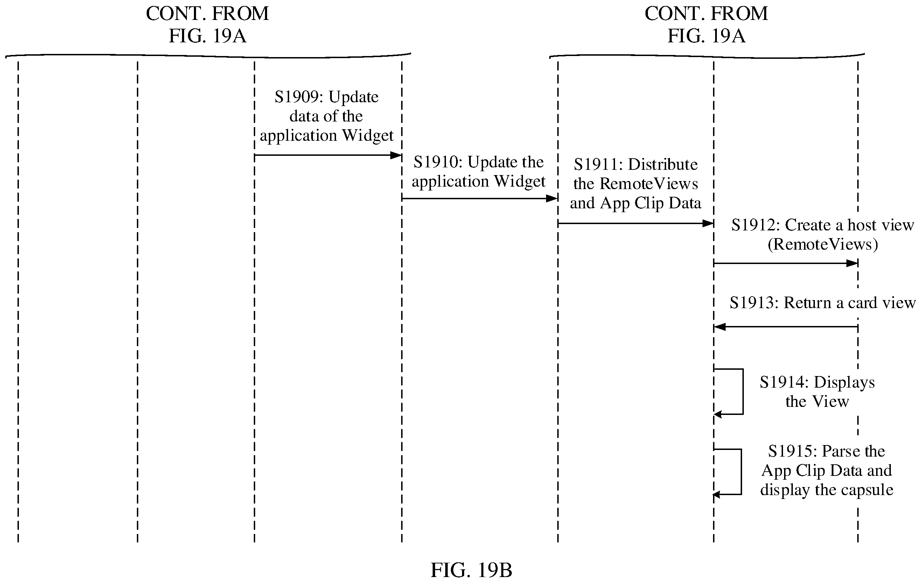

FIG. 19A and FIG. 19B are schematic flowcharts of performing a display control method by a software framework of a mobile phone. The electronic device simultaneously transfers card and capsule data, mainly including the following process:
S1901: The target notification entrance registers the card size and whether capsule data is required with an interaction display service module.

This corresponds to the notification entrance registration operation in the foregoing process 1.

The notification entrance registers a display function of the notification entrance with the interaction display service (Interaction Display Service). In addition, the notification entrance also registers specification sizes of cards supported by the notification entrance for display. The specification sizes of cards usually include 4*2, 4*2, 2*2, and the like. The notification entrance selects one of the specification sizes as a default specification size for displaying cards.

In addition, it is considered that some notification entrances can simultaneously display cards and capsules, and some notification entrances only support displaying cards and does not support displaying capsules. When the notification entrance registers with the service interaction display framework, the notification entrance further registers whether the notification entrance supports the capsule display function, and registering whether the capsule display function is supported indicates whether the notification entrance requires the service provider to provide data required for capsule display. S1902: The interaction display service module notifies the service provider (Provider) to generate the first application service (carrying a service ID and identification information of the service provider (Provider)).

S1903: The interaction display service module notifies an application Widget service module to bind an application Widget.

S1904: The application Widget service module requests an update from the service provider (Provider).

S1905: The service provider (Provider) creates card display files Remote Views of different specification sizes (4*2, 4*1, and 2*2).

S1906: The service provider (Provider) creates a capsule, a multiple device, a watch, and the like to display quick application data.

S1907: The service provider (Provider) notifies a Remote ViewsEx extension module to extend data (Remote Views and App Clip Data).

S1908: The Remote ViewsEx extension module sends extension data to the Remote Views channel.

S1909: Through the Remote Views channel, the service provider (Provider) notifies the application Widget service module to update data of the application Widget.

S1910: The application Widget service module notifies the interaction display service module to update the application Widget.

S1911: The interaction display service module distributes the Remote Views and App Clip Data to the target notification entrance.

S1912: The target notification entrance notifies an interaction Widget manager module to create a host view (Create Host View).

S1913: The interaction Widget manager module returns a card view to the target notification entrance.

S1914: The target notification entrance displays the View.

S1915: The target notification entrance parses the App Clip Data and displays the capsule.

In one example, the service provider (Provider) may create, based on the specification sizes registered by the notification entrance, Remote Views corresponding to the registered specification sizes.

In another example, the service provider (Provider) may alternatively directly generate view files corresponding to cards of all specification sizes, so that specification sizes registered by the notification entrances do not need to be distinguished from each other.

The service provider (Provider) creates files required for capsule display, and inserts the service information into the quick application data App Clip Data. It should be noted that the data required for capsule display, multiple device display, or watch display is service information that does not need to be serialized, and can be transmitted through the App Clip Data.

The service provider (Provider) invokes the extension interface Remote ViewsEX in the service interaction display framework, inserts both the card view file Remote Views and the capsule view file App Clip Data as extension data (Set Hn ExaData) into the Remote Views channel in the native Widget framework, and updates the data to the application Widget service (Update APP Widget Remote Views) of the service interaction display framework in the form of application Widget data.

The application Widget service transfers the files received from the Remote Views channel in the native Widget framework to the interaction display service. The interaction display service parses out the card view file Remote Views and the capsule view file App Clip Data. The interaction display service distributes the parsed-out Remote Views and App Clip Data to the associated notification entrance.

The notification entrance may invoke the interaction Widget manager module to create the Widget view, and then invoke an interaction Widget host view module to display the card. The notification entrance may also parse the App Clip Data, to display the capsule.

In the display control method provided in the foregoing embodiment of this application, for a scenario in which the notification entrance needs to simultaneously display the Widget card and the capsule, the card view file Remote Views and the capsule view file App Clip Data are inserted into the Remote Views channel as extension data, to synchronously transmit service information required for capsule display to the service interaction display framework across processes. After receiving the data transmitted by an intelligence module, the service interaction display framework parses out the serialized data and the basic service information separately, and displays the Widget card and the capsule separately. The service interaction display framework may further provide the basic service information to a multiple device notification entrance, and the multiple device notification entrance displays the basic service information into service information in other display forms.

### Embodiment 4

When the mobile phone performs S202 in the foregoing Embodiment 1, the target notification entrances determined by the mobile phone for the first application service may also include notification entrances provided by devices other than the local mobile phone. When the mobile phone performs the display operation of S203 or S204 in the foregoing Embodiment 2, the display operation may alternatively be a display operation at a notification entrance of another device.

For example, service information of an order generated by a taxi-hailing application on the mobile phone may be transferred to a watch or an in-vehicle infotainment connected to the mobile phone for display. For ease of description, in this embodiment, an external device is used to refer to one or more devices that are connected to the mobile phone and that can support the notification entrance display function.

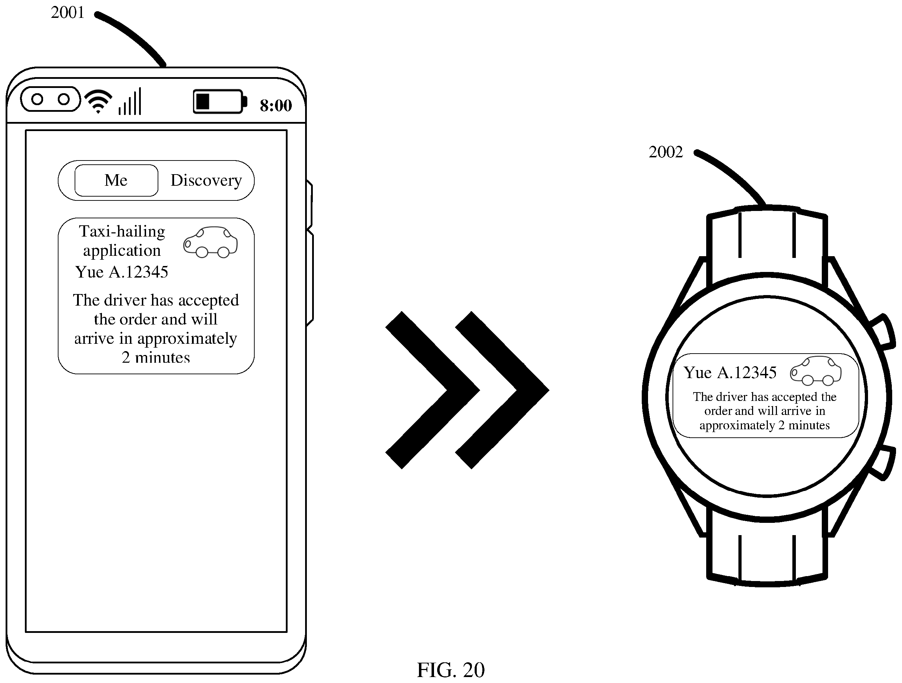

FIG. 20 is a diagram of interaction between a mobile phone and a watch. Service information of the first application service that has been generated may be displayed by using a card on the mobile phone 2001. The mobile phone 2001 may also transmit the service information to the watch 2002 communicatively connected to the mobile phone 2001 for display. The watch may provide notification entrances such as a launcher and a notification center, and each notification entrance may choose to display the service information in a form such as a card and/or a capsule.

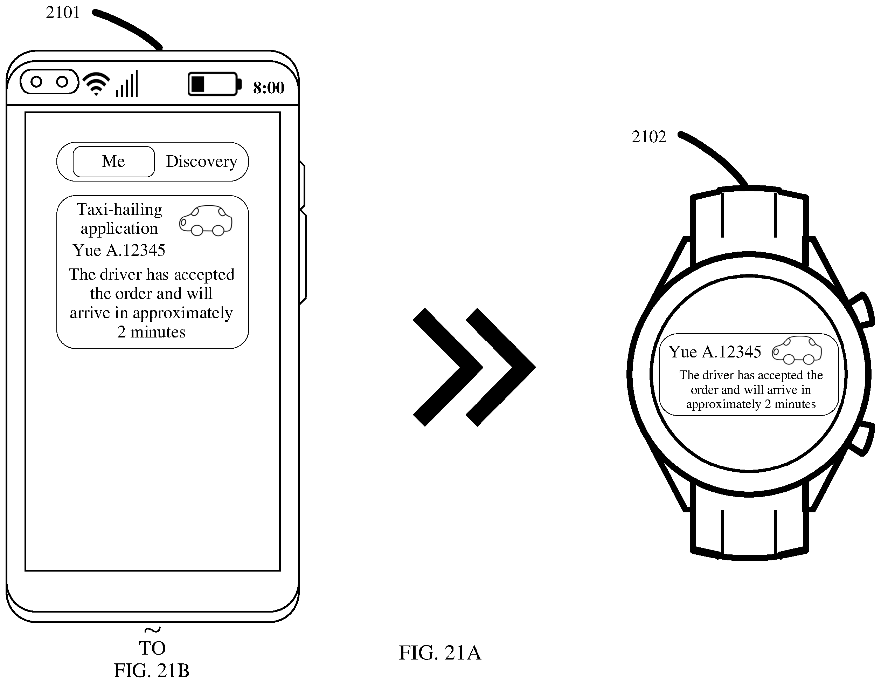

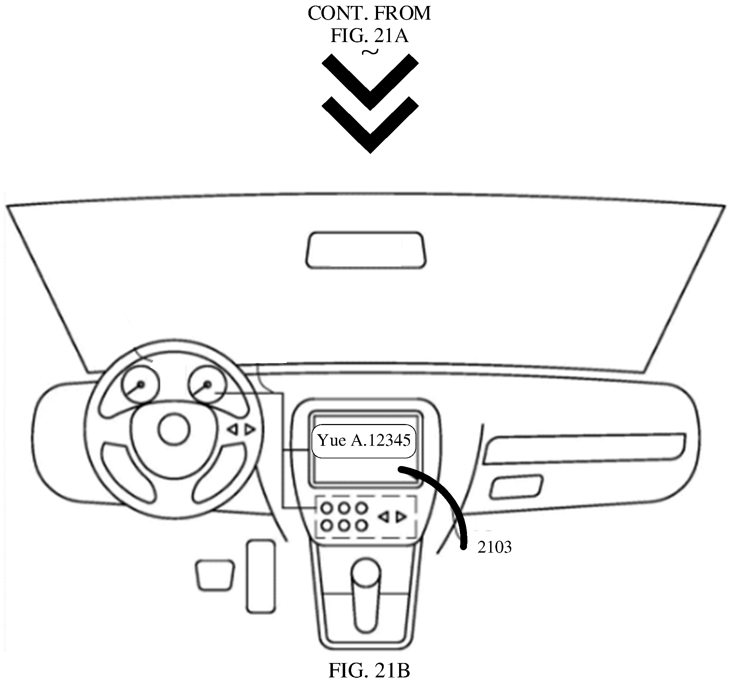

FIG. 21A and FIG. 21B are diagrams of interaction between the mobile phone and the watch and the in-vehicle infotainment. Service information of the first application service that has been generated may be displayed by using a card on the mobile phone 2101. The mobile phone 2101 may also transmit the service information to the watch 2102 communicatively connected to the mobile phone 2101 for display, or transmit the service information to the in-vehicle infotainment 2103 communicatively connected to the mobile phone 2101 for display. The external devices such as the watch and the in-vehicle infotainment may provide notification entrances such as the launcher and the notification center, and each notification entrance may choose to display the service information in a form such as a cards and/or a capsule.

In one example, the mobile phone may use the external device as a notification entrance. In this case, the mobile phone does not need to distinguish a quantity and types of notification entrances supported on the external device. Regardless of a quantity of notification entrances supported by the external device, the mobile phone may use the external device as only one notification entrance and provide service information corresponding to one notification entrance to the watch, and then the watch distributes the received service information to each notification entrance for display. Based on the data transmission solution in which the mobile phone uses the external device as one notification entrance, the frequency of communication and a total amount of data transmission between the mobile phone and the watch can be reduced, to improve cross-device data transmission efficiency.

In another example, the mobile phone may also distinguish between the notification entrances that may be provided on the external device. When providing service information for the external device, the mobile phone distinguishes between different notification entrances to provide corresponding service information. For example, if the external device supports three notification entrances: the launcher, the control center, and the notification center, the watch may provide the external device with service information respectively corresponding to the three notification entrances. In this way, operations in which the external device further generates and distributes service information for the plurality of notification entrances can be omitted, to reduce related work of the external device.

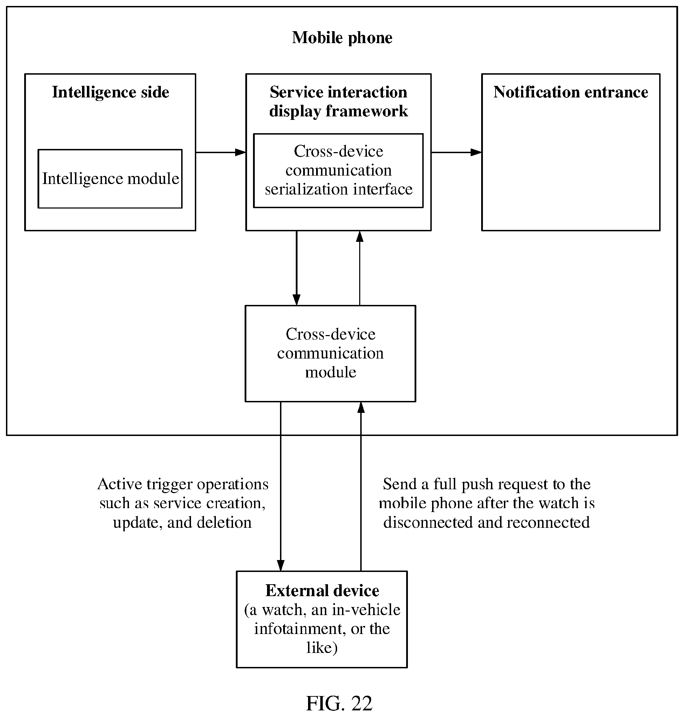

FIG. 22 is a diagram of a connection between a mobile phone and an external device. The mobile phone includes an intelligence side, a service interaction display framework, a notification entrance, and a cross-device communication module. The intelligence side includes an intelligence module, configured to notify the service interaction display framework to generate the first application service and service information that needs to be displayed by invoking the notification entrance. The service interaction display framework distributes the service information to the notification entrance associated with the first application service, and the notification entrance displays the service information. It should be noted that the notification entrance herein is a notification entrance of the local mobile phone, for example, a launcher or a negative screen.

The mobile phone further includes the cross-device communication module. The service interaction display framework further includes a corresponding cross-device communication serialization interface (Android Archive, AAR). The service interaction display framework performs data transmission with the cross-device communication module through the cross-device communication serialization interface, and transmits the service information to the external device through the cross-device communication module. In a specific example, the external device may be a watch, the cross-device communication module may be Synergy^{™}, and the cross-device communication serialization interface in the interaction display module may be Synergy^{™} AAR. The cross-device communication module may implementation data transmission in a communication manner such as Bluetooth, Wi-Fi, or a cellular network.

The cross-device communication module may provide the mobile phone with the capability of performing cross-device communication with the external device such as a watch. In addition, the cross-device communication module may further monitor a status of connection between the mobile phone and the external device, to ensure transmission reach efficiency of information. In addition, the cross-device communication module may also receive instructions sent by the external device to the mobile phone, to implement functions such as entrance registration, information obtaining, and information updates.

When the mobile phone performs the display control method provided in this embodiment, in response to the first application service generated by the first application, the mobile phone transmits the service information to the external device across devices, and the service information is displayed on the external device. A cross-device transmission process between the mobile phone and the external device mainly includes an active trigger operation actively initiated by the mobile phone and active application by the external device for a push request. Scenarios in which the mobile phone actively initiates an active trigger request may include service creation, update, deletion, and other scenarios. Scenarios in which the external device actively applies for a push request may include a scenario in which a watch applies for service information after being disconnected and reconnected.

The service interaction display framework of the mobile phone integrates an AAR package provided by the cross-device communication module. Through the serialization interface provided by the AAR package, the service information provided by the service interaction display framework may be serialized and sent to the cross-device communication module. The cross-device communication module then sends the serialized service information to the external device. The external device may parse out original service information according to a pre-stored protocol and render the service information into a form such as a card or a capsule for display.

In the solution in which the mobile phone displays the service information at notification entrances of the local mobile phone, only notification entrance distributors need to be displayed on the service interaction display framework, and each notification entrance distributor corresponds to one notification entrance separately. After obtaining the service information provided by the service provider (Provider), the interaction display module invokes each notification entrance distributor to distribute the service information to each notification entrance.

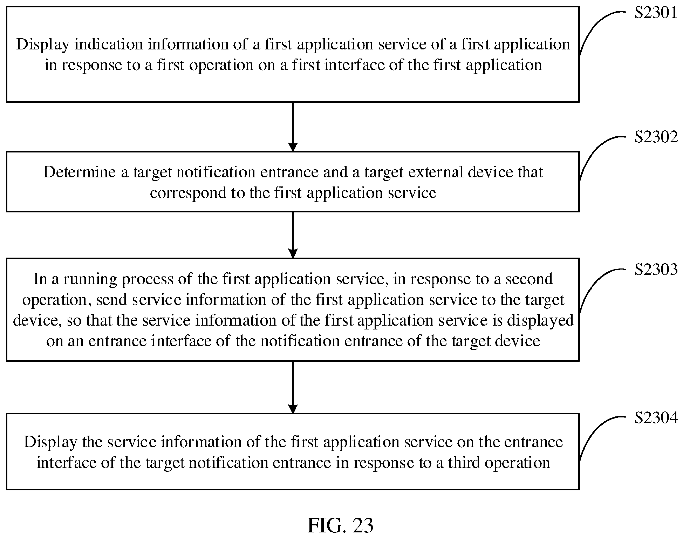

FIG. 23 is a schematic flowchart of transferring service information to an external device by a mobile phone in a display control method according to an embodiment of this application. In the display control method provided in this embodiment, a solution in which the service information on the mobile phone side is sent to a multiple device such as a watch for display. The provided display control method mainly includes the following procedures:
S2301: Display indication information of a first application service of a first application in response to a first operation on a display interface of the first application.
S2302: Determine a target notification entrance and a target external device that correspond to the first application service.
S2303: In a running process of the first application service, in response to a second operation, send the service information of the first application service to the target device, so that the service information of the first application service is displayed on an entrance interface of the notification entrance of the target device.
S2304: Display the service information of the first application service on the entrance interface of the target notification entrance in response to a third operation.

This embodiment relates to information exchange between two electronic devices. For ease of description, the external device that establishes a communication connection to the mobile phone is defined as the target device. The target device may be a wearable device such as a watch, or may be an in-vehicle infotainment. The target device may also provide one or more notification entrances, to display the service information of the application service generated by the first electronic device.

After the mobile phone generates a taxi-hailing service, the mobile phone sends service information of the taxi-hailing service to the watch. The watch may display the service information of the taxi-hailing service at entrances such as the launcher and the notification center in a form such as a card or a capsule.

The mobile phone may send the service information of the first application service to the target device in response to the second operation, so that the service information of the first application service is displayed on the entrance interface of the notification entrance of the target device. The mobile phone may also display the service information of the first application service on the entrance interface of the target notification entrance in response to the third operation. The second operation and the third operation may be same operations or may be different operations.

In the display control method provided in this embodiment, after the first application generates the first application service, the service information of the first application may be displayed at a plurality of notification entrances. The service information may be not only displayed at the target notification entrances of the local mobile phone, but also transferred to a second type of notification entrances of external devices such as a watch for display, to reach the user more fully.

In the foregoing embodiment, a specific implementation process of the display control method is described from the perspective of the first electronic device, namely, the mobile phone. This embodiment may also provide the specific implementation process of the display control method described from the perspective of the target device, namely, the watch. The specific process is as follows:

The target device receives the service information of the first application service from the first electronic device, where the first application service is generated by the first application of the first electronic device.

In response to a fourth operation, the service information of the first application service is displayed on the entrance interface of the notification entrance provided by the target device.

A third notification entrance is one notification entrance that is in the second type of notification entrances associated with the first application service and that is in the target device. The second type of notification entrances include at least one notification entrance in the launcher, the negative screen, the quick application center, the notification center, the control center, the status bar, the lock screen interface, and the always on display AOD interface.

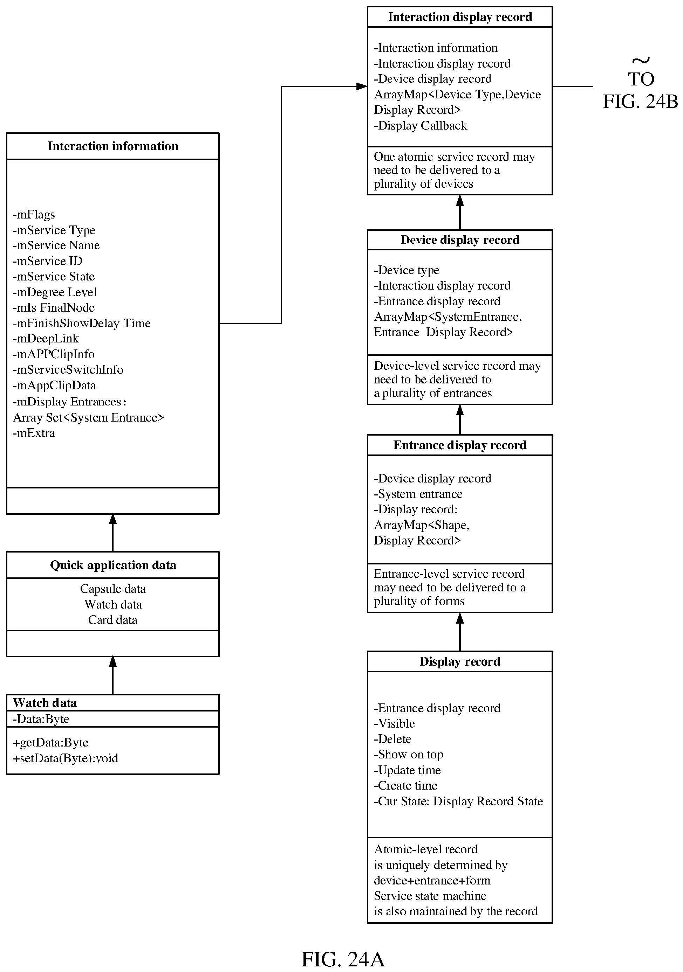

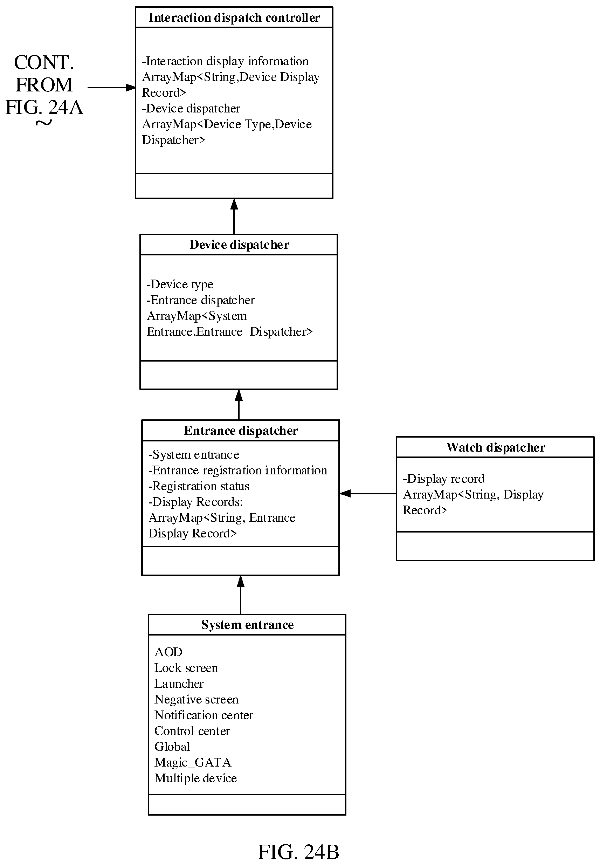

FIG. 24A and FIG. 24B are diagrams in which the mobile phone supports multiple device transmission display. In the solution in which the mobile phone transmits the service information to an entrance interface of another external device across systems for display, notification entrances distributed by the service interaction display framework include not only the notification entrances of the local mobile phone, but also notification entrances of the external device. In this case, distributors used by the service interaction display framework to distribute the service information may include device-level distributors. Each device-level distributor corresponds to one external device of the mobile phone and is configured to distribute the service information obtained by the service interaction display framework to the external device of the mobile phone.

The mobile phone may set a virtual notification entrance for one external device, to reduce an amount of data transmission from the mobile phone to the external device. For example, the external device is a watch, and the mobile phone uses watch dispatcher (Watch Dispatcher) as abstraction of a virtual notification entrance of the watch. Watch Dispatcher is similar to entrance dispatcher (Entrance Dispatcher) of the local mobile phone. It should be noted that the virtual notification entrance abstracted for the watch may not be exactly the same as the notification entrance of the local mobile phone. Because the watch itself pre-registers a display function through the cross-device communication module, the watch does not need to register the display function of the watch with the service interaction display framework like a notification entrance does. When the cross-device communication module between the mobile phone and the watch detects that the two are in a communication connection state, the mobile phone may transmit, through the cross-device communication module, the service information to the watch for display. If the cross-device communication module detects that the communication connection state between the two is disconnected, the mobile phone currently cannot transmit, through the cross-device communication module, the service information to the watch for display.

Still as shown in FIG. 24A and FIG. 24B, watch data (Watch Data) is first transmitted into quick application data (APP Clip Data), and then provided to the service interaction display framework through interaction information (Interaction Message). The quick application data includes card data (Remote Views), capsule data (Capsule Data), and watch data. The interaction information includes various types of data, such as a service type (mService Type), a service name (mService Name), a service number (mService ID), a service state (mService State), and the like.

The scope hierarchy of objects invoked by the electronic device sequentially includes display forms, notification entrances, and devices. Corresponding display records in the electronic device also include display records, entrance display records, device display records, and interaction display records. The display records are atomic-level records, and may be uniquely determined by devices + entrances + forms. The display records include entrance display records that are transmitted upwardly and a plurality of parameter fields, such as visible (Enable), delete (Delete), show on top (Show On Top), update event (Update Time), create time (Create Time), and current state (Cur State), which is a display record state (Display Record State).

The entrance display records (Entrance Display Record) are entrance-level service records, and may need to be delivered to a plurality of forms. The entrance display records include device display records that are transmitted upwardly, notification entrances, display records, and the like. A display record (Display Record) corresponding to a type (Shape) may be searched by using a lookup function (Array Map).

The device display records (Device Display Record) are device-level service records, and may need to be delivered to a plurality of entrances. The device display records include a device type (Device Type), interaction display records (Interaction Display Record) that are transmitted upwardly, and the entrance display records that are transmitted downwardly. In the device display records, an entrance display record corresponding to a notification entrance may be searched by using a lookup function.

The interaction display records are atomic service records, and need to be delivered to a plurality of devices. Interaction display information includes the interaction Information, the interaction display records, and the device display records. In the interaction display records, a device display record corresponding to a device type may be searched by using a lookup function.

The notification entrances of the mobile phone include the AOD, the lock screen (Lock Screen), the launcher (Launcher), the negative screen (Negative Screen), the notification center (Notification Center), the control center (Control Center), the status bar (Global), a magic gate (Magic Gate), a multiple device (Multiple Device), and the like. The multiple device includes the notification entrance of the external watch.

When the mobile phone invokes an entrance (Entrance Dispatcher), the mobile phone verifies entrance registration information (Entrance Registration Info) and a registration status (Registered), and invoke the display records to search for a corresponding entrance display record. An entrance is invoked when the watch is invoked.

When the mobile phone invokes a device (Device Dispatcher), the mobile phone verifies a device type and entrance dispatchers, and searches for entrance dispatchers corresponding to notification entrances included in the device, and hands over the entrance dispatchers to an interaction dispatch controller.

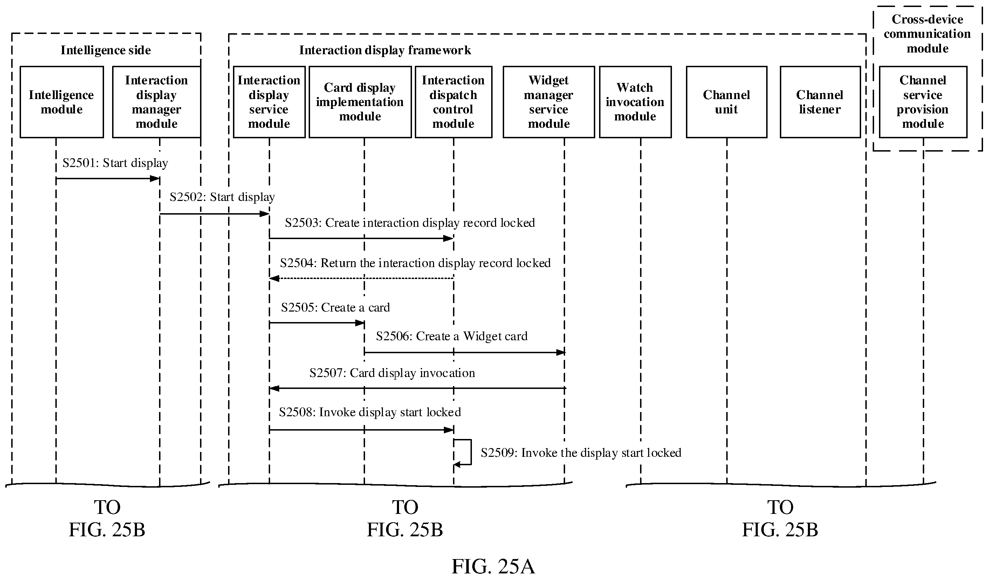

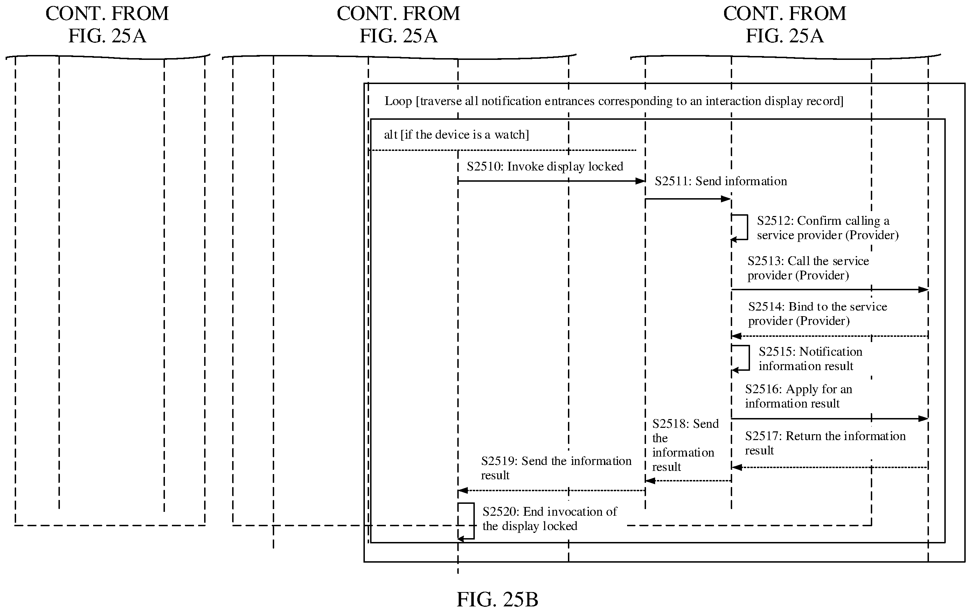

FIG. 25A and FIG. 25B are schematic flowcharts of transferring service information to an external device in a display control method according to an embodiment of this application. The intelligence side includes an intelligence module and an interaction display manager module (Interaction Display Manager), and the service interaction display framework includes an interaction display service module (Interaction Display Service), a card display implementation module (Card Display Internal), an interaction dispatch control module (Interaction Dispatcher Controller), a Widget manager service module (Widget Manage Service), a watch invocation module (Watch Dispatcher), a channel unit module (Channel Client), and a channel listener (Channel Listener). The cross-device communication module includes a channel service provision module (Channel server Provider). In this embodiment, transmission of watch data (Watch Data) required by the watch needs to depend on the solution of transmission of Remote Views and quick application data App Clip Data by using the Widget service.

S2501: The intelligence module notifies the interaction display manager module to start display.

S2502: The interaction display manager module notifies the interaction display service module to start display.

S2503: The interaction display service module notifies the interaction dispatch control module to create interaction display record locked.

S2504: The interaction dispatch control module returns the interaction display record locked to the interaction display service module.

S2505: The interaction display service module notifies the card display implementation module to create a card.

S2506: The card display implementation module notifies the Widget manager service module to create a Widget card.

S2507: The Widget manager service module returns card display invocation to the interaction display service module.

S2508: The interaction display service module notifies the interaction dispatch control module to invoke display start locked.

S2509: The interaction dispatch control module invokes the display start locked.

S2510: The interaction dispatch control module notifies the watch invocation module to invoke display locked.

S2511: The watch invocation module sends information to the channel unit.

S2512: The channel unit confirms calling the service provider (Provider).

S2513: The channel unit calls the service provider (Provider).

S2514: The channel service provision module binds to the service provider (Provider).

S2515: The channel unit obtains a notification information result.

S2516: The channel unit applies for an information result from the channel information provision module.

S2517: The channel information provision module returns the information result to the channel unit.

S2518: The channel unit sends the information result to the watch invocation module.

S2519: The watch invocation module sends the information result to the interaction dispatch control module.

S2520: The interaction dispatch control module ends invocation of the display locked.

The service provider predetermines whether notification entrances to which the service information of the application service generated by the service provider is transferred include an external device, such as a watch. In this case, when the intelligence service notifies to start display, the parameters transmitted in this case need to include watch data (Watch Data). The data is encapsulated and serialized by the service provider according to a communication protocol between the service provider and the watch.

When constructing the App Clip Data, if the service provider (Provider) determines to transfer the service information to the watch for display, the Watch Data is added to the App Clip Data when the Remote Views are transmitted. If the importance-urgency level of the service matches the watch notification entrance, a multiple device transfer procedure is performed when the service is delivered. The overall interaction process specifically includes:

The intelligence service notifies the interaction display manager to start display. Input parameter interaction information (Interaction Message) includes the quick application data App Clip Data, which is transmitted to the service interaction display framework.

In the service interaction display framework, the interaction display service creates interaction display record locked (Create Interaction Display Record Locked) to the interaction dispatch controller. The interaction display service starts creating a card. Different service procedures are entered based on card types. For the Widget, the Widget manager service is used to process the creation procedure of the Widget card.

The service interaction display framework first obtains the Remote Views object through the Widget framework, and then enters a distribution procedure. If a switch of the notification entrance of the external device is switched on, and the service provider (Provider) provides the watch data, the watch transfer procedure is entered.

Considering that the Watch Data required for watch display depends on the Remote Views required for card display, to ensure that the watch data can be displayed normally, at this distribution node, the mobile phone usually first checks whether the card data can be displayed normally. Only after the card display implementation in the mobile phone creates the card, notifying the Widget manager service to generate the operation of creating the Widget is further triggered, to enter the watch transfer procedure.

Certainly, if whether the watch data can be display normally is not considered, the mobile phone may alternatively not refer to the display status of the card data, and enters the watch transfer procedure after obtaining the watch data.

After entering the watch transfer procedure, the interaction dispatch controller invokes display start locked (Dispatch Display Start Locked) to invoke the watch, and sends the service information to the cross-device communication module through the channel unit, to transfer the service information from the mobile phone to the watch. After obtaining the service information, the watch renders and displays the service information based on a view display logic of the watch.

Generally, a manner in which the service interaction display framework of the mobile phone transmits the service information to the watch through the cross-device communication module is single-item push. In other words, even if service information of a plurality of application services on the mobile phone needs to be transferred to the same watch at the same time, the mobile phone performs single-item push for the service information of each application service separately, and performs single-item push in response to service state changes such as creation, update, and deletion of the service information of each application service. Overall, the mobile phone pushes services to the watch in one way, and mostly, the mobile phone notifies the watch, creates display, updates display, and deletes display.

In this case, if the mobile phone is disconnected from and then re-connected to the watch, service states of some application services may have changed in this process. For example, an application service ends, a state is updated, and an application service is added. If the mobile phone notifies the watch of only service information newly generated after reconnection, some service information may be displayed abnormally. For example, service information of an application service that has ended cannot be deleted, service information of a new application service cannot be displayed, or service information of an application service that continuously exists cannot be accurately updated. The following is described by using examples.

For example, before the mobile phone is disconnected from the watch, there is a taxi-hailing service 1 (the driver has accepted the order, and is 2 km away from the passenger) and a food delivery service 2 (waiting for a merchant to accept the order). The mobile phone performs single-item push on service information of the taxi-hailing service 1 and the food delivery service 2 to the watch separately, and the watch separately displays the service information of the taxi-hailing service 1 and the service information of the food delivery service 2.

The mobile phone is disconnected from the watch. For the taxi-hailing service 1, the service state changes from accepting the order by the driver to canceling the order by the driver, and the taxi-hailing service 1 ends. For the food delivery service 2, the service state changes from waiting for the merchant to accept the order to the rider being in delivery.

The mobile phone is reconnected to the watch. At this time, because the taxi-hailing service 1 has ended, according to the single-item push rule, the service interaction display framework does not notify the watch to delete display of the service information of the taxi-hailing service 1. In a possible case, the watch continuously displays the service information of the taxi-hailing service 1, and remains in the service state that the driver has accepted the order or a service abnormal state. Alternatively, the watch may automatically clear service information of the abnormal state according to a preset automatic clear rule. The two processing solutions may both cause the watch to display the service information abnormally, providing incorrect guidance for the user.

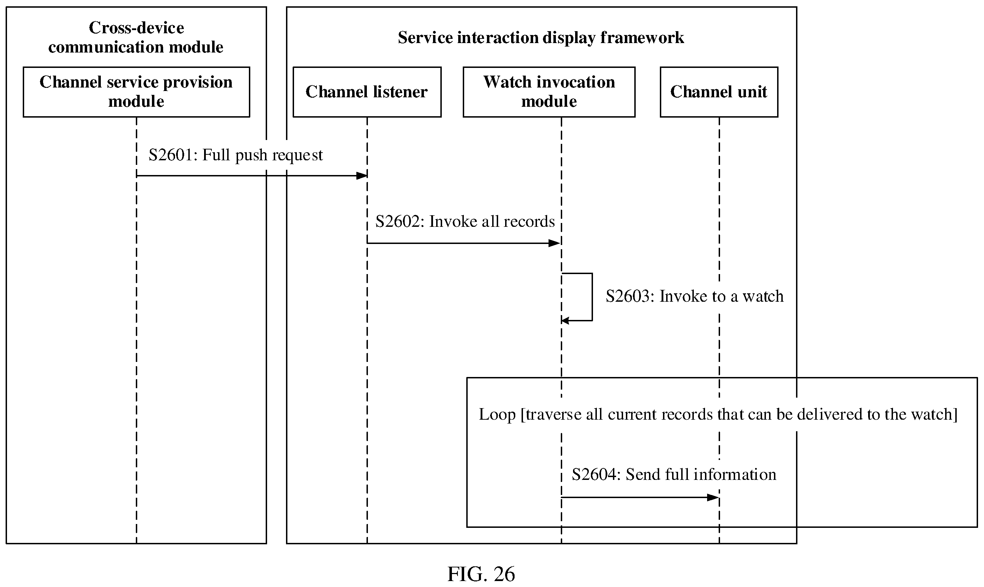

In the solution provided in this embodiment of this application, each time the mobile phone is disconnected from and then connected to the watch, a full push solution rather than a single-item push solution is executed. The full push solution may be understood as performing single-item push on the service information of all current application services simultaneously to the watch. As shown in FIG. 26, the watch sends a full push request to the service interaction display framework of the mobile phone through the cross-device communication module. After receiving the full push request sent by the watch, the channel listener of the service interaction display framework invokes all service records (Dispatch All Records), and fully sends the records to the watch (Dispatch To Watch).

S2601: The channel service provision module sends a full push request to the channel listener.

S2602: The channel listener notifies the watch invocation module to invoke all the records.

S2603: The watch invocation module invokes the records to the watch.

S2604: The watch invocation module sends full information to the channel unit.

When the watch is disconnected from and then reconnected to the mobile phone, the watch may send the watch full push request to the mobile phone, to request the mobile phone to fully push service information of all currently existing services to the watch. In this case, after receiving the service information fully pushed by the mobile phone, the watch checks currently displayed service information. The watch deletes display of service information of an application service that has ended, updates service information of a changed service state, and creates display of service information of a new application service.

In a specific implementation, after the mobile phone is disconnected from and then reconnected to the watch, the watch may send a full push request to the mobile phone. In this way, the watch side actively initiates the full push request based on a display requirement, to ensure that unnecessary data transmissions are reduced to the greatest extent when the data is full. Certainly, in other implementations, the mobile phone may also actively send full service information to the watch, so that the watch checks and updates the displayed service information based on the full service information.

A message sent by the mobile phone to the watch may include two bytes (Byte) []: a file header (Header) and a file body Data.

The format of the file header may be as shown in Table 3 below, and types and descriptions of fields in the file header may be as shown in Table 4.

**Table 3**

| Watch Header Info |
|---|
| -status: int |
| -count: int |
| -countentIndex: int |
| -batchNo: int |

**Table 4**

| Field | Type | Description |
|---|---|---|
| status | int | Full transmission, and single-item push: 1 |
| count | int | Full transmission: actual quantity of services, and single-item push: 1 |
| countentIndex | int | Full transmission: service orders are identified with values 1-count |
| | | Single-item push: 0 represents pin to top, and -1 represents refresh only |
| batchNo | long | Batch number, using a 13-bit timestamp |
| | | Same batch number is used during full transmission |

Most of the data provided by the mobile phone to the watch is service information provided by the service provider (Provider). The service interaction display framework invokes Watch Data.getData() to obtain data from the service provider (Provider). In some cases, the watch data needs to be created by the service interaction display framework before being sent to the watch. For example, the watch has created display for the corresponding application service. When the importance-urgency level of the application service changes, the associated virtual notification entrance of the watch is no longer used as a notification entrance for displaying the service information. In other words, the transfer solution from the mobile phone to the watch is disabled. Alternatively, when the application service ends, the display that has been created by the watch for the corresponding application service needs to be deleted.

Table 5 is a mapping table between importance-urgency levels of application services and interaction specifications of the watch. It should be noted that this is just an example and does not limit the specific transfer solution between the mobile phone and the watch.

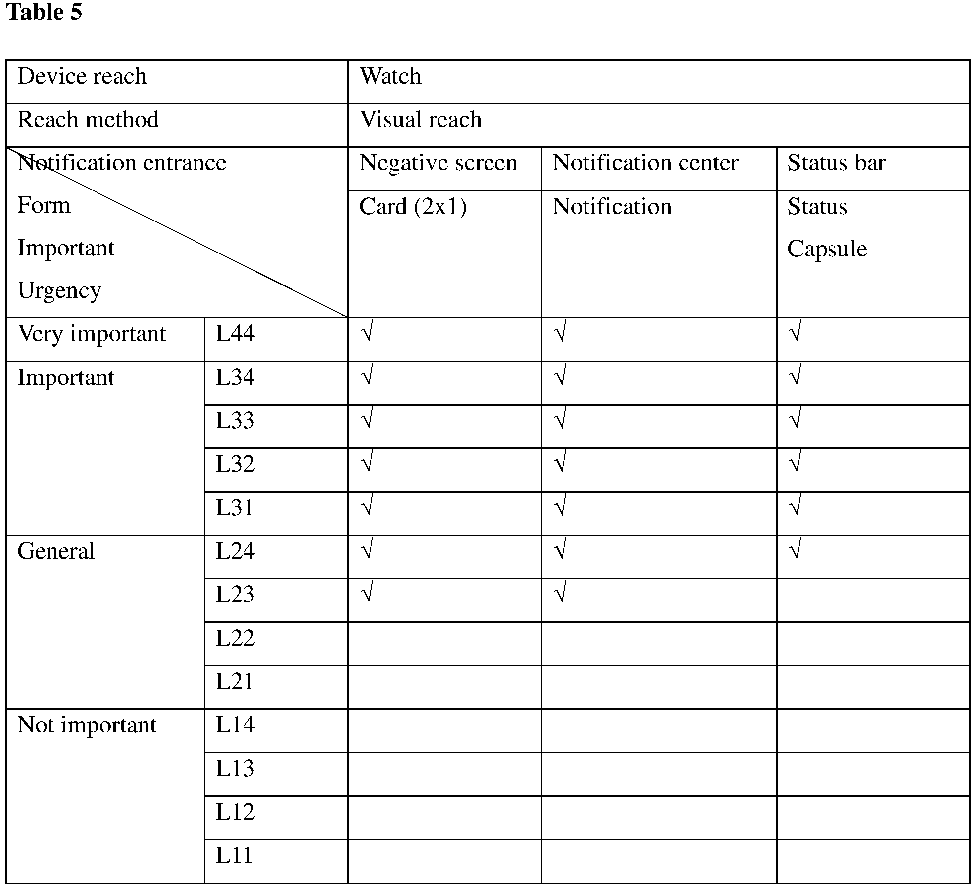

As shown in Table 5, when a taxi-hailing service is waiting for a driver to accept the order, the importance-urgency level is L21, and the taxi-hailing service does not need to be displayed on the watch in this case. When a driver accepts the order, the importance-urgency level changes to L24. In this case, the service interaction display framework needs to send information about the created service to the watch, so that the watch displays the taxi-hailing information. If the driver cancels the order, the importance-urgency level may drop back to L21, and the current importance-urgency level does not require watch display. In this case, based on the information that is previously sent by the service interaction display framework to the watch and that is about the created service, the mobile phone needs to invoke the service interaction display framework to deliver, to the watch, a notification to delete the service information, so as to end the display procedure about the taxi-hailing service on the watch.

Messages sent by the mobile phone to the watch include a file header and a file body. The mobile phone usually stores instructions and data in the file body, to ensure security of the instructions and the data. The notification sent by the mobile phone to the watch to delete display of the service information may be directly stored in the file header. In this way, the watch only needs to parse the file header to obtain the notification to delete display of the service information, thereby reducing file parsing operations.

**In** conclusion, in the display control methods provided in embodiments of this application, the electronic device presents, based on the native notification framework of the system, the service information of application services generated by the applications to the entrance interfaces of the notification entrances in a notification manner, and can match different entrance display solutions based on importance-urgency levels of different application services, to help the user receive messages in various scenarios and perform corresponding processing. The user may see the latest service information on various entrance interfaces such as the launcher, the notification, the AOD, the negative screen, the lock screen, and even a wearable device, without needing to find the corresponding application interface to obtain the service information. This breaks the conventional status of "users finding services" and truly implements "services finding users," greatly enhancing user experience.

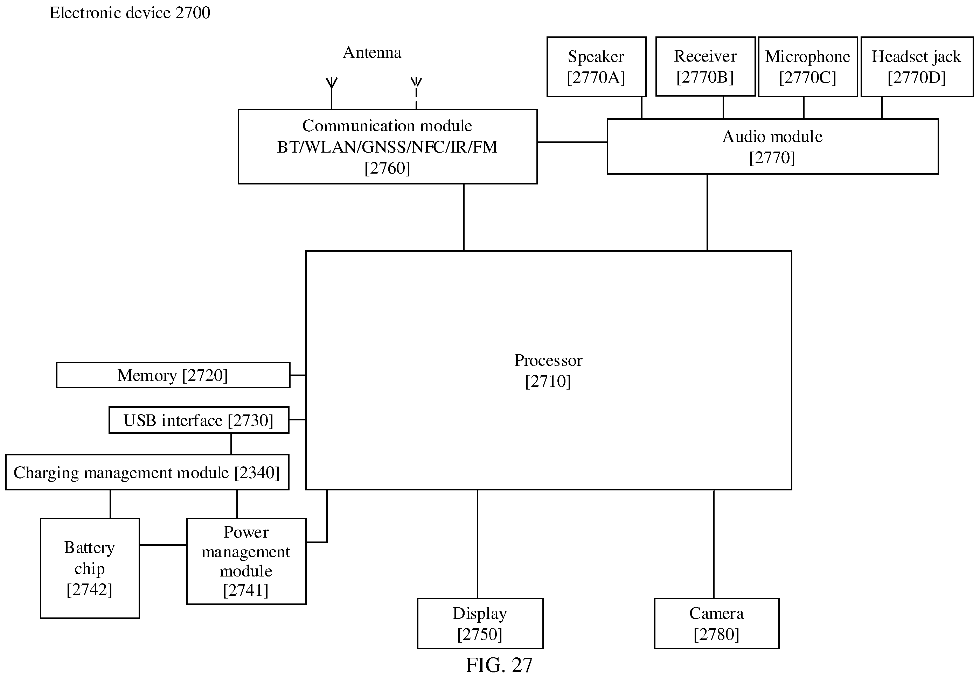

**In** addition, an embodiment of this application further provides an electronic device, where the electronic device may be the foregoing first electronic device, or may be a target device. The electronic device includes a display, a memory, and a processor. The display and the memory are both coupled to the processor. The memory stores computer-executable instructions. The processor executes the computer-executable instructions stored in the memory, so that the electronic device performs the display control methods in the foregoing embodiments. In addition to some main components, the electronic device further includes components configured to implement basic functions. The following is specifically described with reference to FIG. 27.

FIG. 27 is a diagram of a structure of an electronic device 2700 according to an embodiment of this application. The electronic device 2700 may include a processor 2710, a memory 2720, a display 2750, a USB interface 2730, a charging management module 2740, a power management module 2741, a battery chip 2742, an antenna, a communication module 2760, an audio module 2770, a speaker 2770A, a receiver 2770B, a microphone 2770C, a headset jack 2770D, a camera 2780, and the like.

The structure illustrated in this embodiment of the present invention does not constitute a limitation on the electronic device 2700. The electronic device 2700 may include more or fewer components than those shown in the figure, or some components may be combined, or some components may be split, or there may be a different component layout. The components shown in the figure may be implemented by hardware, software, or a combination of software and hardware.

The processor 2710 may include one or more processing units. For example, the processor 2710 may include an application processor (Application Processor, AP), a modem processor, a graphics processing unit (Graphics Processing Unit, GPU), an image signal processor (Image Signal Processor, ISP), a controller, a memory, a video codec, a digital signal processor (Digital signal Processor, DSP), a baseband processor, a neural-network processing unit (Neural-Network Processing Unit, NPU), and/or the like. Different processing units may be independent components, or may be integrated into one or more processors.

The foregoing controller may be a decision-maker instructing components of the electronic device 2700 to work in coordination according to an instruction, and may be a nerve center and a command center of the electronic device 2700. The controller may generate an operation control signal based on an instruction operation code and a timing signal, to complete control of instruction fetching and instruction execution.

A memory may be further disposed in the processor 2710, and is configured to store instructions and data. In some embodiments, the memory in the processor 2710 may be a cache memory, and may store an instruction or data that is recently used or cyclically used by the processor 2710. If the processor 2710 needs to use the instruction or the data again, the processor 2710 may directly invoke the instruction or the data from the memory. This avoids repeated access, and reduces a waiting time of the processor 2710, thereby improving system efficiency.

In some embodiments, the processor 2710 may include an interface. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (universal asynchronous receiver/transmitter, UART) interface, a mobile industry processor interface (Mobile Industry Processor Interface, MIPI), a general-purpose input/output (General-Purpose Input/Output, GPIO) interface, a SIM card interface, a USB interface, and/or the like.

The interface connection relationship between the modules that is illustrated in embodiments of the present invention is merely an example for description, and does not constitute a limitation on the structure of the electronic device 2700. The electronic device 2700 may use an interface connection manner different from that in embodiments of the present invention, or use a combination of a plurality of interface connection manners.

The charging management module 2740 may be a chargeable battery or a disposable battery, and may receive a charging input through a charger when being the chargeable battery. The charger may be a wireless charger or a wired charger. In some embodiments of wired charging, the charging management module 2740 may receive a charging input of a wired charger through the USB interface 2730. In some embodiments of wireless charging, the charging management module 2740 may receive a wireless charging input through a wireless charging coil of the electronic device 2700. When charging the battery chip 2742, the charging management module 2740 may further supply power to the electronic device 2700 through the power management module 2741.

The power management module 2741 is configured to connect to the battery chip 2742, the charging management module 2740, and the processor 2710. The power management module 2741 receives an input from the battery chip 2742 and/or the charging management module 2740, and supplies power to the processor 2710, the memory 2720, the display 2750, the camera 2780, the communication module 2760, and the like. The power management module 2741 may be further configured to monitor parameters such as a capacity, a cycle count, and a health status (electric leakage and impedance) of the charging management module. In some embodiments, the power management module 2741 may alternatively be disposed in the processor 2710. In some embodiments, the power management module 2741 and the battery chip 2742 may alternatively be disposed in a same device.

A wireless communication function of the electronic device 2700 may be implemented through the antenna, the radio frequency module, the communication module 2760, the modem, the baseband processor, and the like.

The antenna is configured to transmit and receive electromagnetic wave signals. Each antenna in the electronic device 2700 may be configured to cover one or more communication bands. Different antennas may be further multiplexed, to improve antenna utilization. For example, a cellular network antenna may be multiplexed as a diversity antenna of a wireless local area network. In some embodiments, the antenna may be used in combination with a tuning switch. The radio frequency module may be a communication processing module that is used in the electronic device 2700 and that provides wireless communication solutions including 2G/3G/4G/5G.

The communication module 2760 may be a communication processing module that is used in the electronic device 2700 and that provides wireless communication solutions including a wireless local area network (Wireless Local Area Networks, WLAN) (for example, a wireless fidelity (Wireless Fidelity, Wi-Fi) network), Bluetooth (Blue Tooth, BT), a global navigation satellite system (Global Navigation Satellite System, GNSS), frequency modulation (Frequency Modulation, FM), a near field communication (Near Field Communication, NFC) technology, an infrared (Infrared, IR) technology, and the like. The communication module 2760 may be one or more components integrating at least one communication processing module. The communication module 2760 receives an electromagnetic wave through an antenna, performs frequency modulation and filtering processing on an electromagnetic wave signal, and sends a processed signal to the processor 2710. The communication module 2760 may further receive a to-be-sent signal from the processor 2710, perform frequency modulation and amplification on the to-be-sent signal, and convert the signal into an electromagnetic wave through an antenna and radiate the electromagnetic wave.

In some embodiments, in the electronic device 2700, the antenna is coupled to the radio frequency module, and the antenna is coupled to the communication module 2760, so that the electronic device 2700 can communicate with a network and another device by using a wireless communication technology. The wireless communication technology may include a global system for mobile communications (Global System for Mobile communications, GSM), a general packet radio service (General Packet Radio Service, GPRS), code division multiple access (Code Division Multiple Access, CDMA), wideband code division multiple access (Wide and Code Division Multiple Access, WCDMA), time-division code division multiple access (Time-Division Code Division Multiple Access, TD-SCDMA), long term evolution (Long Term Evolution, LTE), BT, a GNSS, a WLAN, NFC, FM, an IR technology, and/or the like. The GNSS may include a global positioning system (Satellite Based Augmentation Systems, SBAS), a global navigation satellite system (Global Navigation Satellite System, GLONASS), a Beidou navigation satellite system (Beidou Navigation Satellite System, BDS), a quasi-zenith satellite system (Quasi-Zenith Satellite System, QZSS) and/or satellite based augmentation systems (Satellite Based Augmentation Systems, SBAS).

The electronic device 2700 implements a display function through the GPU, the display 2730, the application processor, and the like. The GPU is a microprocessor for image processing, and is connected to the display 2750 and the application processor. The GPU is configured to: perform mathematical and geometric computation, and render an image. The processor 2710 may include one or more GPUs that execute program instructions to generate or change display information.

The display 2730 is configured to display an image, a video, and the like. The display 2750 includes a display panel. The display panel may be a liquid crystal display (Liquid Crystal Display, LCD), an organic light-emitting diode (Organic Light-Emitting Diode, OLED), an active-matrix organic light emitting diode or an active-matrix organic light emitting diode (Active-Matrix Organic Light Emitting Diode, AMOLED), a flexible light-emitting diode (Flexible Light-Emitting Diode, FLED), a Mini LED, a Micro LED, a Micro-OLED, quantum dot light emitting diodes (Quantum Dot Light Emitting Diodes, QLED), or the like. In some embodiments, the electronic device 2700 may include one or N displays 2750, where N is a positive integer greater than 1.

The electronic device 2700 may implement a shooting function through the ISP, the camera 2780, the video codec, the GPU, the display, the application processor, and the like.

The electronic device 2700 may implement an audio function, for example, music playing and recording, through the audio module 2770, the speaker 2770A, the receiver 2770B, the microphone 2770C, the headset jack 2770D, the application processor, and the like.

The button 2790 includes a power button, a lock button, a volume button, and the like. The button 2790 may be a mechanical button, or a touch button. The electronic device 2700 receives an input of the button 2790, and generates a key signal input related to user settings and function control of the electronic device 2700.

The motor 2791 may generate a vibration prompt. The motor 2791 may be configured to provide an incoming call vibration prompt, or may be configured to provide a touch vibration feedback. For example, touch operations performed on different applications (for example, photo taking and audio playing) may correspond to different vibration feedback effects. Touch operations performed on different areas of the display 2750 may also correspond to different vibration feedback effects. Different application scenarios (for example, a time reminder, information receiving, an alarm clock, and a game) may also correspond to different vibration feedback effects. A touch vibration feedback effect may be further customized.

The display control methods in the foregoing embodiments may all be implemented in the electronic device 2700 having the foregoing hardware structure.

Based on the foregoing embodiments, an embodiment of this application further provides a display control apparatus. The display control apparatus includes a processor, configured to perform the display control methods provided in the foregoing embodiments.

An embodiment of this application further provides a computer-readable storage medium. The computer-readable storage medium stores a computer program. When the computer program is run on a computer, the computer is enabled to perform the display control methods provided in the foregoing embodiments.

An embodiment of this application further provides a computer program product including instructions. When the computer program product is run on a computer, the computer is enabled to perform the display control methods provided in the foregoing embodiments.

For specific implementations of the electronic device, the display control apparatus, the computer-readable storage medium, and the computer program product including instructions that are provided in embodiments of this application, and technical effects brought thereby, refer to the specific implementation process of the display control methods provided in the foregoing embodiments, and the technical effects brought by the display control methods. Details are not described herein again.

In some embodiments, based on the descriptions of the foregoing implementations, a person skilled in the art may clearly understand that, for a purpose of convenient and brief description, division into the foregoing functional modules is used as an example for illustration. In actual application, the foregoing functions may be allocated to different functional modules and completed based on requirements. In other words, an inner structure of an apparatus is divided into different functional modules to complete all or some of the functions described above. For specific working processes of the system, apparatus, and unit that are described above, refer to corresponding processes in the foregoing method embodiments. Details are not described herein again.

Functional units in embodiments of this application may be integrated into one processing unit, each of the units may exist alone physically two or more units may be integrated into one unit. The integrated unit may be implemented in a form of hardware, or may be implemented in a form of a software functional unit.

When an integrated unit is implemented in a form of a software functional unit and sold or used as an independent product, the integrated unit may be stored in a computer-readable storage medium.

The foregoing descriptions are merely specific implementations of the embodiments of this application, but the protection scope of the embodiments of this application is not limited thereto. Any variation or replacement within the technical scope disclosed in the embodiments of this application shall fall within the protection scope of the embodiments of this application. Therefore, the protection scope of embodiments of this application shall be subject to the protection scope of the claims.

## Claims

1. A display control method, applied to an electronic device, wherein the method comprises:
displaying indication information of a first application service of a first application in response to a first operation on a first interface of the first application, wherein the indication information indicates that the first application service has been enabled;
determining a target notification entrance corresponding to the first application service, wherein the target notification entrance comprises a first notification entrance and a second notification entrance;
displaying a second interface corresponding to the first notification entrance in response to a second operation in a running process of the first application service, wherein the second interface comprises service information of the first application service; and/or
displaying a third interface corresponding to the second notification entrance in response to a third operation, wherein the third interface comprises the service information of the first application service, wherein
the first notification entrance is different from the second notification entrance.

2. The display control method according to claim 1, wherein notification entrances of the electronic device comprise: a launcher, a negative screen, a notification center, a control center, a status bar, a lock screen interface, an AOD interface, and a quick application center.

3. The display control method according to claim 1, wherein the step of determining the target notification entrance corresponding to the first application service comprises:
in the running process of the first application service, determining a corresponding first importance-urgency level based on a first service state in which the first application service is currently; and
determining, based on the first importance-urgency level, the target notification entrance currently corresponding to the first application service.

4. The display control method according to any one of claims 1 to 3, wherein before the step of displaying the second interface corresponding to the first notification entrance in response to the second operation in the running process of the first application service, the method further comprises:
determining a target display form corresponding to the first application service, wherein the target display form comprises a first display form and/or a second display form;
the step of displaying the second interface corresponding to the first notification entrance in response to the second operation comprises:
displaying the service information of the first application service in the first display form on the second interface in response to the second operation;
and/or,
the step of displaying the third interface corresponding to the second notification entrance in response to the third operation comprises:
displaying the service information of the first application service in the second display form on the third interface in response to the third operation.

5. The display control method according to claim 4, wherein the first display form and the second display form comprise at least one of a card, a capsule, and a banner.

6. The display control method according to claim 4 or 5, wherein the step of determining the target display form corresponding to the first application service comprises:
obtaining one or more display forms corresponding to the first application, and one or more display forms corresponding to the target notification entrance; and
using a display form that is the same in the one or more display forms corresponding to the first application and in the one or more display forms corresponding to the target notification entrance as the target display form of the first application service.

7. The display control method according to any one of claims 1 to 6, wherein the electronic device comprises a service interaction display framework, and before the step of determining the target notification entrance corresponding to the first application service, the method further comprises:
sending, by the target notification entrance of the electronic device, a registration application to the service interaction display framework in response to startup of the electronic device, wherein after successfully registering with the service interaction display framework, the target notification entrance allows the service interaction display framework to send the service information of the first application service to the target notification entrance.

8. The display control method according to claim 3, wherein the step of determining, based on the first importance-urgency level, the target notification entrance currently corresponding to the first application service comprises:
searching, in a pre-stored entrance mapping table, for a notification entrance corresponding to the first importance-urgency level as the target notification entrance currently corresponding to the first application service, wherein the entrance mapping table stores different notification entrances corresponding to different importance-urgency levels.

9. The display control method according to claim 3, wherein the step of determining, based on the first importance-urgency level, the target notification entrance currently corresponding to the first application service comprises:
searching, in a pre-stored entrance mapping table, for a notification entrance corresponding to the first importance-urgency level;
detecting whether the notification entrance corresponding to the first importance-urgency level has initiated a registration application; and
using a notification entrance that has initiated the registration application and that is in the notification entrance corresponding to the first importance-urgency level as the target notification entrance.

10. The display control method according to any one of claims 1 to 9, wherein the step of displaying the second interface corresponding to the first notification entrance in response to the second operation in the running process of the first application service further comprises:
displaying, on the second interface in response to an update on the service information of the first application service, service information obtained after the first application service is updated;
and/or,
the step of displaying the third interface corresponding to the second notification entrance in response to the third operation further comprises:
displaying, on the third interface in response to the update on the service information of the first application service, the service information obtained after the first application service is updated.

11. The display control method according to claim 9, wherein the step of determining, based on the first importance-urgency level, the target notification entrance currently corresponding to the first application service further comprises:
in response to an update on a service state of the first application service, determining, based on a second service state obtained after the first application service is updated, a second importance-urgency level corresponding to the second service state; and
updating, based on the second importance-urgency level corresponding to the second service state, the target notification entrance corresponding to the first application service.

12. The display control method according to any one of claims 1 to 11, wherein after the step of displaying the second interface corresponding to the first notification entrance in response to the second operation in the running process of the first application service and/or after the step of displaying the third interface corresponding to the second notification entrance in response to the third operation, the method further comprises:
in response to a running end of the first application service, stopping displaying the service information of the first application service on the target notification entrance.

13. An electronic device, wherein the electronic device comprises a display, a memory, and a processor, and the display and the memory are both coupled to the processor; the memory stores computer-executable instructions; and the processor executes the computer-executable instructions stored in the memory, so that the electronic device performs the display control method according to any one of claims 1 to 12.

14. A computer-readable storage medium, wherein the computer-readable storage medium stores a computer program, and when the computer program is run on a computer, the computer is enabled to perform the method according to any one of claims 1 to 12.
